# EUROPÄISCHE PATENTANMELDUNG

(11) **EP 1 712 493 A2**
(43) Veröffentlichungstag der Anmeldung: **18.10.2006**
(21) Anmeldenummer: 06015978.7
(22) Anmeldetag: 05.03.2002
(51) Int. Cl.: B65G 35/06, B65G 43/10

(54) **Fertigungsanlage für die Montage und/oder Bearbeitung von auf Werkstückträgern transportierten Bauteilen**

(30) Priorität: 09.03.2001 AT 3752001
(62) Teilanmeldung aus: 02701087.5
(71) Anmelder: STIWA-Fertigungstechnik Sticht Gesellschaft m.b.H, A-4800 Attnang-Puchheim (AT)
(72) Erfinder: Sticht, Walter, 4800 Attnang-Puchheim (AT); Heiml, Roland, 4870 Vöcklamarkt (AT); Stimpl, Franz, 4800 Attnang-Puchheim (AT)
(74) Vertreter: Secklehner, Günter

(57) **Zusammenfassung**

Die Erfindung betrifft eine Fertigungsanlage (1) für die Montage und/oder Bearbeitung von auf Werkstückträgern (2) transportierten Bauteilen (3) mit mehreren hintereinander angeordneten Förderabschnitten (5, 6a, 6b, 6c), von welchen jedem zumindest eine eigene von den benachbarten Förderabschnitten (5, 6a, 6b, 6c) unabhängige Vorschubvorrichtung (15; 51) und eine zumindest zwei einander gegenüberliegend angeordnete Führungsbahnen (20) aufweisende Führungsvorrichtung zugeordnet ist, entlang welcher der zwischen diesen angeordnete, mit Führungsorganen zur Höhen- und Seitenführung versehene Werkstückträger (2) positioniert verfahrbar ausgebildet ist. Die Führungsorgane der Werkstückträger (2) sind mit einer nutförmigen Vertiefung zum Eingriff in die quer zur Förderrichtung (16) voneinander distanzierten Führungsbahnen (20) versehen und in zumindest einem der Förderabschnitte (6a; 6c) ist zumindest eine Führungsbahn (20) aus einer sich außerhalb eines Lichtraumprofiles des Werkstückträgers (2) befindlichen Ruhestellung in eine oberhalb der Transportebene (19) befindliche Position mittels einer Verstelleinrichtung anhebbar und zum Eingriff mit den Vertiefungen der Führungsorgane quer zu einer Längsrichtung der Führungsbahn (20) in eine Eingriffsstellung verstellbar ausgebildet.

## Beschreibung

Die Erfindung betrifft eine Fertigungsanlage für die Montage und/oder Bearbeitung von auf Werkstückträgern transportierten Bauteilen, ein Verfahren zum Überführen eines Werkstückträgers von einem in einen weiteren Förderabschnitt sowie eine Vorschubvorrichtung für einen Werkstückträger, wie in den Oberbegriffen der Ansprüche 1, 73 und 79 beschrieben.

Es sind bereits viele verschiedene Fertigungsanlagen mit loser Verkettung bekannt geworden, bei denen eine Vielzahl von unterschiedliche Aufgaben durchführende Fahrabschnitte, insbesondere Transportstationen und Umlenkstationen bzw. Knotenstationen, unmittelbar aneinandergereiht sind. Die selbst fahrenden oder mit den Transport- und Knotenstationen zugeordneten Vorschubvorrichtungen antriebsverbundenen Werkstückträger, sind dabei jeweils unabhängig voneinander entlang von zwei einander gegenüberliegend angeordneten Führungsbahnen verfahrbar. Die Führungsbahnen der Führungsvorrichtung sind durch im Bereich der senkrecht zur Unterseite und Oberseite des Werkstückträgers verlaufende Seitenflächen angreifende ebenflächige Führungsleisten oder Führungsrollen gebildet. Derartige Anlage sind nur für den Transport von eine niedrige Masse aufweisenden Bauteilen geeignet, da der Werkstückträger insbesondere bei auskragenden Lasten gefährdet ist, aus der Führungsvorrichtung ausgehoben zu werden, was zu einer Zerstörung des Werkstückträgers, Bauteiles und gegebenenfalls der Führungsvorrichtung der Fertigungsanlage führen kann. Sind hohe Massen von dem Werkstückträger aufzunehmen, so sind, um überhaupt einen Betrieb zu ermöglichen, die Führungsflächen, Führungsleisten und der Werkstückträger selbst größer zu dimensionieren, was sich vor allem negativ auf die erforderlichen Leistungen, beispielsweise der Antriebe etc. auswirkt und somit den Wirkungsgrad einer derartigen Fertigungsanlage wesentlich verringert.

Aus der US 6,070,534 A und US 5,062,368 A sind eine Fördervorrichtung zum Transport von Werkstückträgern bekannt, die mehrere hintereinander angeordnete Förderabschnitte aufweist, von welchen jedem eine eigene, von den benachbarten Förderabschnitten unabhängige Vorschubvorrichtung und zwei einander gegenüberliegende ortsfeste Führungsbahnen zugeordnet ist, entlang welcher der Werkstückträger mit Führungsorganen geführt und über die Vorschubvorrichtung positioniert verfahrbar ausgebildet ist. Die Vorschubvorrichtung weist ein mit Aussparungen versehenes Antriebsorgan auf. Für die Fortbewegung des Werkstückträgers ist an diesem ein formschlüssig in die Aussparungen des Antriebsorgans eingreifendes Antriebsmittel angeordnet.

Die EP 0 340 639 A1 beschreibt eine Fertigungsanlage für die Montage und Bearbeitung von auf Werkstückträgern entlang von hintereinander angeordneten Förderabschnitten und an Montage- und Bearbeitungsanlagen vorbei transportierten Bauteilen. Jeder Förderabschnitt ist mit einer von den benachbarten Förderabschnitten unabhängig ansteuerbaren Vorschubvorrichtung versehen. Die Werkstückträger werden entlang der ersten Förderabschnitte mittels Rundriemen reibschlüssig und entlang der zweiten Förderabschnitte mittels Zahnriemen formschlüssig transportiert. Wird ein Werkstückträger vom ersten Förderabschnitt in den Einlauf eines zweiten Förderabschnittes hineinbewegt, kann zwischen Rundriemen und Werkstückträger eine Relativbewegung auftreten, sodass Verschleißerscheinungen zwangsweise die Folge sind.

Nach der DE 196 08 133 A1 weisen sowohl der erste Förderabschnitt als auch der zweite Förderabschnitt Zahnriemen als Vorschubvorrichtungen auf. Der Werkstückträger ist mit Zahnleisten versehen, die über Federn vertikal verstellbar an der Unterseite des Werkstückträgers gelagert sind und in die Zahnriemen derart eingreifen, dass der Werkstückträger formschlüssig entlang und zwischen den Förderabschnitten transportiert wird. Wird ein Werkstückträger vom ersten Förderabschnitt in den Einlauf eines zweiten Förderabschnittes hineinbewegt, kann die in den Einlauf des zweiten Förderabschnittes hineinbewegte Zahnleiste entgegen der Wirkung der Federn nach oben ausgelenkt und außer Eingriff mit den Zahnriemen gebracht werden, wenn die Zähne der Zahnleiste aufeinander treffen. Dabei entsteht eine Relativbewegung zwischen dem Zahnriemen des zweiten Förderabsclmittes und dem Werkstückträger. Damit verbunden ist ein hoher Verschleiß des Zahnriemens und muss mit einer hohen Geräuschentwicklung gerechnet werden.

Der vorliegenden Erfindung liegt nunmehr die Aufgabe zugrunde, eine Fertigungsanlage zu schaffen, die bei einer möglichst kleinen Baugröße der Führungsbahnen und Werkstückträger hohe Belastungen aufzunehmen vermag. Unabhängig davon soll der Werkstückträger von einem ersten in einen weiteren nachfolgenden Förderabschnitt positioniert überführt werden können.

Die Aufgabe der Erfindung wird durch die im Kennzeichenteil des Anspruches 1 wiedergegebenen kennzeichnenden Merkmale gelöst. Der überraschende Vorteil dabei ist, dass die Führungsbahnen in die nutförmigen Vertiefungen der am Werkstückträger angeordneten Führungsorgane im wesentlichen formschlüssig eingreifen und dadurch auch Bauteile mit außerhalb des zwangsgeführten Werkstückträgers liegendem Schwerpunkt aufgenommen werden können, ohne den Werkstückträger in seiner vorbestimmbaren Relativlage zu den Führungsbahnen zu verändern.

Von Vorteil ist auch eine Weiterbildung nach Anspruch 2, da durch das bereichsweise formschlüssige Ineinandergreifen der Führungsbahnen und Führungsorgane im wesentlichen kein reibungsbedingter Verschleiß hervorgerufen wird und die Verfügbarkeit einer derartigen Fertigungsanlage erhöht werden kann. Weiters kann der selbstzentrierte und zwangsgeführte Werkstückträger hohe Belastungen und Momente aufnehmen.

Gemäß einer Weiterbildung, wie sie im Anspruch 3 beschrieben ist, ist durch das gleichzeitige Verstellen eines Paares von Führungsbahnen eine positionsgenaue Führung des Werkstückträgers entlang der Führungsbahnen möglich.

Eine Ausführungsvariante nach Anspruch 4 hat den Vorteil, dass selbst bei einer Schwingungsbeaufschlagung eines Werkstückträgers oder des Bauteiles und gegebenenfalls der Führungsbahnen diese in deren Eingriffsstellung positioniert und gegen eine Rückstellung gesichert sind.

Vorteilhaft sind auch die Weiterbildungen nach den Ansprüchen 5 und 6, da durch die Anordnung der Führungsorgane an der Unterseite des Werkstückträgers und gegebenenfalls in Vertiefungen die vertikale Schwerachse zu einem vom Werkstückträger aufgenommenen Bauteil gering gehalten werden kann und es nunmehr möglich ist, auch bei auskragenden Lasten die Führungsorgane und Führungsbahnen mit einer niedrigen Flächenpressung zu beaufschlagen, was zu einer weiteren Anhebung der Verfügbarkeit der Fertigungsanlage beiträgt.

Von Vorteil ist auch die Ausbildung nach Anspruch 7, wodurch ein sich außerhalb der Fertigungsanlage befindlicher Werkstückträger an jeder beliebigen Stelle und in jeder beliebigen Position in die Fertigungsanlage eingebracht werden kann, wobei durch die Anordnung der Datenträger am Werkstückträger beim Passieren einer der Lese- und/oder Speicherstationen der Werkstückträger selbst und seine Lage erfaßt und beispielsweise mit einer in einem Speicher hinterlegten vorbestimmbaren Soll-Lage verglichen wird und bei einer Abweichung der Werkstückträger zumindest in eine von mehreren Knotenstationen zum Verändern seiner Ist-Lage in die Soll-Lage hindurchgeführt wird. Durch diese Selbstreferenzierung der Lage des Werkstückträgers, kann die Taktzeit der erfindungsgemäßen Fertigungsanlage, selbst durch das zusätzliche ungeordnete Einbringen von weiteren Werkstückträgern erhöht werden.

Die Ausführungen nach den Ansprüchen 8 bis 13 ermöglichen die Aufteilung des Kraftflusses über den Werkstückträger und die Führungsbahnen.

Von Vorteil ist auch die Ausführungsvariante gemäß den Ansprüchen 14 und 15, da die die Transportebene bildende Oberfläche der Transport- und Knotenstationen nur in einem die Führungsbahnen aufnehmenden Bereich mit niedrigen Fertigungstoleranzen zu fertigen ist, was vor allem zu einer Reduzierung der Fertigungskosten beiträgt. Des weiteren werden vor allem auch unerwünschte und nicht vorhersehbare Stöße etc. im wesentlichen auf die auswechselbaren und kostengünstigen Führungsbahnen übertragen, ohne die Transport- und Knotenstationen etc. zu beschädigen.

Gemäß Anspruch 16 ist es möglich, den Abstand zwischen dem Werkstückträger und der Transportebene zu variieren, so dass bei Verwendung der Knotenstation als Arbeitsstation eine Verstellung in mehrere Raumrichtungen durchführbar ist.

Durch die Weiterbildungen nach den Ansprüchen 17 und 18 wird eine weitere Ausführung der Anordnung der Führungsbahnen und Führungsorgane erreicht.

Wie im Anspruch 19 beschrieben ist, können die gleiche Abmessungen aufweisenden Führungsorgane in hohen Stückzahlen kostengünstig hergestellt werden.

Eine Ausbildung nach Anspruch 20 ermöglicht die Reduzierung der Einzelbauteile.

Gemäß Anspruch 21 wird ein störungsfreier Betrieb der Fertigungsanlage erreicht.

Vorteilhaft ist auch die Ausgestaltung nach Anspruch 22, da dadurch keine zusätzlichen regelungstechnischen, elektrischen Steuereinrichtungen zum synchronen Antrieb der Vorschubvorrichtungen erforderlich sind.

Die Weiterbildungen nach den Ansprüchen 23 und 24 tragen vor allem zu einem möglichst schonenden Betrieb der Fertigungsanlage bei.

Die Fortbildung nach Anspruch 25 ermöglicht ein positioniertes Übergeben des Werkstückträgers in einen von mehreren Förderabschnitten, so dass je nach Auslastung der einzelnen Förderabschnitte ein in Betracht auf die Taktzeit der Fertigungsanlage abhängiger Verfahrweg gewählt werden kann, so dass ein im wesentlichen unterbrechungsfreier Betrieb bzw. eine unterbrechungsfreie Zuführung eines Werkstückträgers in eine Bearbeitungsstation ermöglicht wird.

Die im Anspruch 26 beschriebene Ausführung ermöglicht die synchrone und gleichsinnige Verstellung der quer zur Förderrichtung gegenüberliegenden Führungsbahnen und eine Verbesserung der Taktzeit einer einzelnen Knotenstation und führt im Verbund mit den weiteren Transportstationen zu einer höheren Produktivität der Fertigungsanlage.

Die Ausgestaltung nach Anspruch 27 ermöglicht das einfache Auswechseln von verschlissenen Führungsbahnen oder das Umrüsten auf eine andere Type von Führungsbahn, was vor allem zu einer Reduzierung der kostenintensiven Stillstandszeiten beiträgt.

Die in den Ansprüchen 28 bis 30 beschriebenen Ausführungsvarianten ermöglichen eine Verstellung der zweckmäßig synchron betätigbaren Führungsbahnen im wesentlichen in zur Transportebene schräger Richtung, wobei die in zur Förderrichtung quer gegenüberliegenden Führungsbahnen gleichzeitig und gleichsinnig aufeinander zu bewegt werden.

Gemäß Anspruch 31 wird eine Verringerung der Belastung des Stellantriebes erreicht.

Die Weiterbildungen nach den Ansprüchen 32 bis 37 ermöglichen die Ausgestaltung einer robust aufgebauten mechanischen Konstruktion, die modular aufgebaut ist und ein stabiles Betriebsverhalten ermöglicht.

Durch die Ausbildungen nach den Ansprüchen 38 bis 40 wird ein zuverlässiger Betrieb der Fertigungsanlage ermöglicht.

Von Vorteil ist auch die Ausgestaltung nach Anspruch 41, da es nunmehr möglich ist, gegebenenfalls unterschiedliche Baueinheiten für unterschiedliche Anwendungsbereiche bzw. Belastungen abzustimmen und diese innerhalb kürzester Zeit auszuwechseln.

Die Weiterbildungen nach den Ansprüchen 42 bis 49 haben den Vorteil, dass dadurch ein robust aufgebautes, platzsparendes und einen kleinen Einbauraum erforderndes, die Verstelleinrichtung aufnehmendes Traggestell geschaffen wird, das mit über aus dem Stand der Technik bekannten Bauteilen versehen wird.

Gemäß den Ansprüchen 50 und 51 wird eine selbsttätige Rückstellung des Stellhebels aus einer Eingriffsstellung zwischen den nutförmigen Vertiefungen und den Führungsleisten in eine außerhalb des Lichtraumprofiles des Werkstückträgers liegende Ruhestellung verhindert und somit ein zuverlässiges Übergeben des Werkstückträgers in eine zu der Umlenkstation benachbarte Transportstation erreicht.

Gemäß den Ansprüchen 52 bis 54 wird eine platzsparende konstruktive Ausgestaltung ermöglicht.

Durch die Ausbildung nach Anspruch 55 wird durch eine Verstellung bzw. Justierung der Verstelleinrichtungen der Knotenstationen ein fluchtender Übergang zwischen den Führungsbahnen der Transportstationen und den Führungsbahnen der Knotenstationen erreicht.

Gemäß den Ansprüchen 56 und 57 wird eine Elimination eines in zur Förderrichtung paralleler Richtung gegebenenfalls auftretenden Abstandes zwischen den Führungsorganen des Werkstückträgers und den Führungsbahnen, wie dies vor allem bei einem Umrüsten der Führungsbahnen auftreten kann, ermöglicht.

Die Ausgestaltungen nach den Ansprüchen 58 bis 61 ermöglichen den Einsatz von standardisierten kostengünstigen Komponenten.

Durch die Weiterbildungen nach den Ansprüchen 62 und 63 können fertigungsbedingte Toleranzabweichungen ausgeglichen werden.

Von Vorteil sind aber auch die Weiterbildungen nach den Ansprüchen 64 und 65, da dem Betätigungselement ein Freiheitsgrad zugeordnet ist und dadurch Verspannungen in der Konstruktion vermieden werden können.

Eine Ausbildung nach Anspruch 66 sieht vor, dass das mehrere Funktionen aufweisende Betätigungselement als kulissengesteuertes Element eingesetzt wird.

Durch die Ausbildung einer Schräge, wie im Anspruch 67 beschrieben, ist eine ständige Wirkungsverbundenheit zwischen dem Stellhebel und der Betätigungs- und/oder Arretiervorrichtung gegeben, was vor allem zu einer Verbesserung der Taktzeit beiträgt.

Durch die Ausgestaltung nach Anspruch 68 wird eine selbsttätige Rückstellung der Führungsbahnen aus einer Eingriffsstellung in eine Ruhestellung verhindert.

Die Weiterbildungen nach den Ansprüchen 69 bis 71 sind von Vorteil, da durch die Ausbildung der Führungsschlitten als pneumatische oder hydraulische und/oder elektrische Verteilerleiste der Verschlauchungsaufwand und/oder Verkabelungsaufwand erheblich reduziert werden kann und der Führungsschlitten mit gewissermaßen intelligenten Elementen, wie Speichermodulen etc., ausgestattet werden kann.

Die Ausgestaltung nach Anspruch 72 ermöglicht ein taktzeitoptimiertes Verfahren der Werkstückträger in jedem der Förderabschnitte.

Die Aufgabe der Erfindung wird aber auch durch die im Anspruch 73 beschriebenen Maßnahmen gelöst. Der überraschende Vorteil dabei ist, dass durch die Voreinstellung des Abstandes der aus einer ersten Vorschubvorrichtung ausfahrende Werkstückträger mit dem ersten Mitnahmeorgan oder Eingriffsmittel zum Zeitpunkt des Eintrittes in den Bereich der weiteren Vorschubvorrichtung formschlüssig mit dem Eingriffsmittel oder Mitnahmeorgan des Antriebsorganes der Vorschubvorrichtung ineinandergreift und somit eine schlupffreie Übertragung der Vorschubbewegung zumindest einer Vorschubvorrichtung, ohne den Werkstückträger in sich vorzuspannen oder auf Druck zu beanspruchen und ohne stoßbehafteten Übergang zwischen den Förderabschnitten stattfinden kann.

Von Vorteil sind auch die Maßnahmen nach den Ansprüchen 74 bis 76, wodurch auf einfache Weise der von zumindest einer Vorschubvorrichtung fortbewegte und der höheren Seite nachgeführte Werkstückträger durch Verändern der Drehzahl zumindest einer Vorschubvorrichtung nach Übereinstimmung der Mitnahmeorgane mit den Eingriffsmittel selbsttätig mit der Vorschubvorrichtung in Eingriff steht und dadurch zweckmäßig kontinuierlich fortbewegt wird.

Von Vorteil sind auch die Maßnahmen, wie in den Ansprüchen 77 und 78 beschrieben, wobei der in Förderrichtung sich fortbewegende Werkstückträger mit der ersten Flanke des Eingriffsmittels gegen eine Flanke des Eingriffsmittels oder Mitnahmeorganes des Antriebsorganes gepresst wird und dadurch Schwankungen des Antriebsmomentes durch Anstieg der Momentenkennlinie eine Abweichung der Drehzahl der weiteren Vorschubvorrichtung von der ersten Vorschubvorrichtung erkennbar wird und durch Regelung der Drehzahl das Lastmoment an das vorbestimmbare Sollmoment bzw. Antriebsmoment selbsttätig angepaßt wird und gleichermaßen durch die ständige Kontrolle der Momentenkennlinie eine zyklische Überprüfung erfolgt, sodass immer ein synchroner Antrieb bzw. eine synchrone Drehzahl zwischen den beiden Antriebsorganen der Vorschubvorrichtungen und somit der reibungsbedingte Verschleiß minimiert werden kann. Dadurch werden ein zuverlässiger Betrieb und eine hohe Verfügbarkeit einer erfindungsgemäßen Fertigungsanlage erreicht.

Schließlich wird die Aufgabe der Erfindung aber auch durch die im Anspruch 79 gekennzeichneten Merkmale gelöst. Die überraschenden Vorteile dabei sind, dass durch die Ausbildung der elastisch nachgiebigen reversiblen Kupplungsteile der miteinander in Eingriff bringbaren bzw. einrastbaren Kupplungselemente selbst beim Aufeinandertreffen mehrerer Kupplungsteile diese seitlich weggedrückt oder in sich eingedrückt werden und durch das weitere Verstellen der höhenverstellbaren Vorschubvorrichtung bzw. des Antriebsorganes ein Teil der Kupplungsteile formschlüssig ineinander einrasten und der weitere Teil der Kupplungsteile kraftschlüssig zueinander positioniert sind und durch den Form- und Kraftschluß der Kupplungselemente die Vorschubkräfte des verfahrbaren Werkstückträgers aufgenommen werden können. Des weiteren kann durch diesen Form- und Kraftschluß zwischen dem Antriebsorgan und dem Werkstückträger eine erhöhte Positioniergenauigkeit erreicht werden, da die Kupplungselemente in jeder ihrer Relativlagen miteinander zur Übertragung der Vorschubkräfte einkuppelbar sind. Durch die gewissermaßen stufenlose Einkuppelmöglichkeit der Kupplungselemente kann der steuerungstechnische und/oder mechanische Aufwand, der für die Regelung der Einstellung eines einem Mehrfachen einer Teilung des Antriebsmittels des Werkstückträgers entsprechenden Abstandes erforderlich ist, entfallen.

Die Ausbildung nach Anspruch 80 ermöglicht eine Verringerung der Einzelbauteile, da die Kupplungselemente mit dem Werkstückträger und dem Antriebsorgan jeweils für sich eine einzige Baueinheit bilden.

Die Weiterbildungen nach den Ansprüchen 81 bis 85 ermöglichen das stufenlose Ein- oder Auskuppeln der am Werkstückträger und am Antriebsorgan angeordneten Kupplungselemente, so dass ein Ineinandergreifen bzw. Einkuppeln des Antriebsmittels mit dem Antriebsorgan in vorbestimmten Teilungen unterbunden werden kann.

Durch die Begrenzung des Verstellweges der Vorschubvorrichtung in zur Förderrichtung senkrechter Richtung, gemäß Anspruch 86, wird ausschließlich ein Ineinandergreifen und/oder gegebenenfalls Anpressen der Kupplungsteile an die Seitenflächen erreicht, und zwar derart, dass die ineinandergreifenden Kupplungselemente geringfügig zueinander distanziert sind und auf diese Weise keine durch eine unzulässige Verformung hervorgerufene Zerstörung der Kupplungselemente hervorgerufen wird.

Die Ausgestaltungen nach den Ansprüchen 87 bis 89 ermöglichen die Anpassungen der Vorschubvorrichtungen an unterschiedliche Einsatzbedingungen.

Von Vorteil sind auch die Ausbildungen nach den Ansprüchen 90 bis 93, wodurch zumindest bereichsweise über die sich in Eingriff befindlichen Kupplungselemente formschlüssige und in den weiteren Bereichen form- und kraftschlüssige Antriebsverbindung geschaffen ist.

Gemäß den Ansprüchen 94 bis 97 ist eine Anpassung an unterschiedliche Anforderungen möglich.

Von Vorteil sind die Ansprüche 98 bis 101, wodurch eine Erhöhung der zu übertragenden Vorschubkraft oder des Antriebsmomentes gegeben ist. Weiters ist von Vorteil, dass die gesamte Profiloberfläche zur Kraft- bzw. Momentenübertragung ausgenutzt werden kann.

Schließlich sind auch die Ausbildungen nach den Ansprüchen 102 und 103 von Vorteil, da durch die elastisch nachgiebige reversible Ausbildung der Kupplungsteile selbst bei unterschiedlichen Teilungsabständen und/oder unterschiedlicher Anzahl der Kupplungsteile und durch die vorbestimmbare Anpreßkraft der höhenverstellbaren Vorschubvorrichtung ein zuverlässiger schlupffreier Antrieb möglich ist.

Zum besseren Verständnis der Erfindung wird diese anhand der in den nachfolgenden Figuren gezeigten Ausführungsbeispiele näher erläutert.

Es zeigen:
- Fig. 1: eine erfindungsgemäße Fertigungsanlage mit einer Vielzahl von unmittelbar an-einandergereihten Förderabschnitten in Draufsicht und in stark vereinfachter, schematischer Darstellung;
- Fig. 2: die Fertigungsanlage in Seitenansicht und in stark vereinfachter, schematischer Darstellung;
- Fig. 3: einen Förderabschnitt bzw. eine Knotenstation mit einem sich in diesem Abschnitt befindlichen Werkstückträger und sich in einer angehobenen Eingriffsstellung befindlichen Führungsbahn in Seitenansicht, geschnitten gemäß den Linien III-III in Fig. 1 und in stark vereinfachter, schematischer Darstellung;
- Fig. 4: den Förderabschnitt bzw. die Knotenstation mit dem sich in diesem Abschnitt befindlichen Werkstückträger und sich in einer angehobenen Eingriffsstellung befindlichen Führungsbahn, in Seitenansicht, geschnitten gemäß den Linien IV-IV in Fig. 1 und in stark vereinfachter, schematischer Darstellung;
- Fig. 5: den Förderabschnitt bzw. die Knotenstation mit abgehobener Tischplatte in Draufsicht, geschnitten gemäß den Linien V-V in Fig. 4 und in stark vereinfachter, schematischer Darstellung;
- Fig. 6: eine in einem Grundrahmen des Förderabschnittes bzw. der Knotenstation anzu-ordnende Baueinheit mit dem Traggestell und den Verstelleinrichtungen in Draufsicht und in stark vereinfachter, schematischer Darstellung;
- Fig. 7: die Baueinheit mit dem Traggestell und den Verstelleinrichtungen in Seitenansicht, geschnitten gemäß den Linien VII-VII in Fig. 6 und in stark vereinfachter, schematischer Darstellung;
- Fig. 8: eine Höhenverstellvorrichtung mit einer dieser zugeordneten Betätigungs- und/oder Arretiervorrichtung in Ansicht und in stark vereinfachter, schematischer Darstellung;
- Fig. 9: die Höhenverstellvorrichtung und Betätigungs- und/oder Arretiervorrichtung in Draufsicht und in stark vereinfachter, schematischer Darstellung;
- Fig. 10: die Höhenverstellvorrichtung und die auf dieser aufgebauten Betätigungs- und/oder Arretiervorrichtung und einen Teilbereich der Tischplatte oder des Drehtisches und des Werkstückträgers mit sich in einer Eingriffsstellung befindlichem Führungsorgan des Werkstückträgers und Führungsbahn in Seitenansicht, teilweise geschnitten und in stark vereinfachter, schematischer Darstellung;
- Fig. 11: die Höhenverstellvorrichtung und die auf dieser aufgebaute Betätigungs- und/oder Arretiervorrichtung und einen Teilbereich der Tischplatte oder des Drehtisches mit einer sich in einer Ruhestellung befindlichen Führungsbahn in Seitenansicht, teilweise geschnitten und in stark vereinfachter, schematischer Darstellung;
- Fig. 12: die Höhenverstellvorrichtung und die auf dieser aufgebaute Betätigungs- und/oder Arretiervorrichtung und einen Teilbereich der Tischplatte oder des Drehtisches mit sich in einer vorbestimmbaren Position bzw. Zwischenstellung befindlichen Führungsbahn in Seitenansicht, teilweise geschnitten und in stark vereinfachter, schematischer Darstellung;
- Fig. 13: einen Führungsschlitten in Seitenansicht, teilweise geschnitten und in stark vereinfachter, schematischer Darstellung;
- Fig. 14: den Führungsschlitten in Draufsicht und in stark vereinfachter, schematischer Darstellung;
- Fig. 15: eine Spielausgleichsvorrichtung in Draufsicht und in stark vereinfachter, schematischer Darstellung;
- Fig. 16: die Spielausgleichsvorrichtung in Seitenansicht, geschnitten gemäß den Linien XVI-XVI in Fig. 15 und in stark vereinfachter, schematischer Darstellung;
- Fig. 17: einen weiteren Transportabschnitt bzw. eine Knotenstation zum lagegleichen oder lageveränderten Übergeben des Werkstückträgers aus der Knotenstation in eine der Transportstationen in Seitenansicht, geschnitten und in stark vereinfachter, schematischer Darstellung;
- Fig. 18: einen anderen Förderabschnitt bzw. eine Knotenstation zum lageveränderten Übergeben des Werkstückträgers aus der Knotenstation in eine der Transportstationen in Seitenansicht, geschnitten und in stark vereinfachter, schematischer Darstellung;
- Fig. 19: eine andere Ausführungsvariante einer Verstelleinrichtung in Ansicht und in stark vereinfachter, schematischer Darstellung;
- Fig. 20: die Verstelleinrichtung in Seitenansicht und in stark vereinfachter, schematischer Darstellung;
- Fig. 21: einen Werkstückträger in Ansicht von unten und in stark vereinfachter, schematischer Darstellung;
- Fig. 22: einen Teilbereich des Werkstückträgers nach Fig. 21 mit einer anderen Ausführungsvariante eines Antriebsmittels einer Vorschubvorrichtung in Seitenansicht, teilweise geschnitten und in stark vereinfachter, schematischer Darstellung;
- Fig. 23: einen Teilbereich eines Antriebsorganes mit einem Kupplungselement in Seitenansicht und in stark vereinfachter, vergrößerter, schematischer Darstellung;
- Fig. 24: einen Teilbereich zweier Förderabschnitte mit dem sich in diesen befindlichen Werkstückträger in Seitenansicht und in stark vereinfachter, schematischer Darstellung;
- Fig. 25: einen Teilbereich des Werkstückträgers und der Vorschubvorrichtung im Senkrechtschnitt mit einer anderen Ausführung der sich außer Eingriff befindlichen Kupplungselemente in stark vergrößerter, vereinfachter und schematischer Darstellung;
- Fig. 26: einen Teilbereich des Werkstückträgers und der Vorschubvorrichtung im Senkrechtschnitt mit den sich in Eingriff befindlichen Kupplungselemente in stark vergrößerter, vereinfachter und schematischer Darstellung;
- Fig. 27: einen Teilbereich des Werkstückträgers und der Vorschubvorrichtung im Senkrechtschnitt mit einer weiteren Ausführung der sich außer Eingriff befindlichen Kupplungselemente in stark vergrößerter, vereinfachter und schematischer Darstellung;
- Fig. 28: einen Teilbereich des Werkstückträgers und der Vorschubvorrichtung im Senkrechtschnitt mit den sich in Eingriff befindlichen Kupplungselementen in stark vergrößerter, vereinfachter und schematischer Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

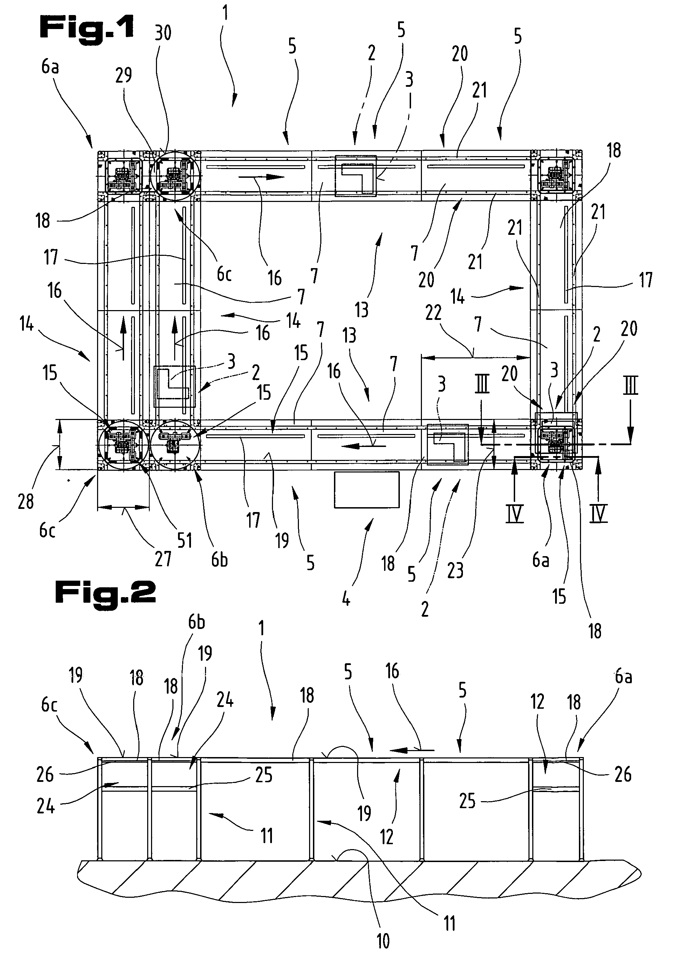

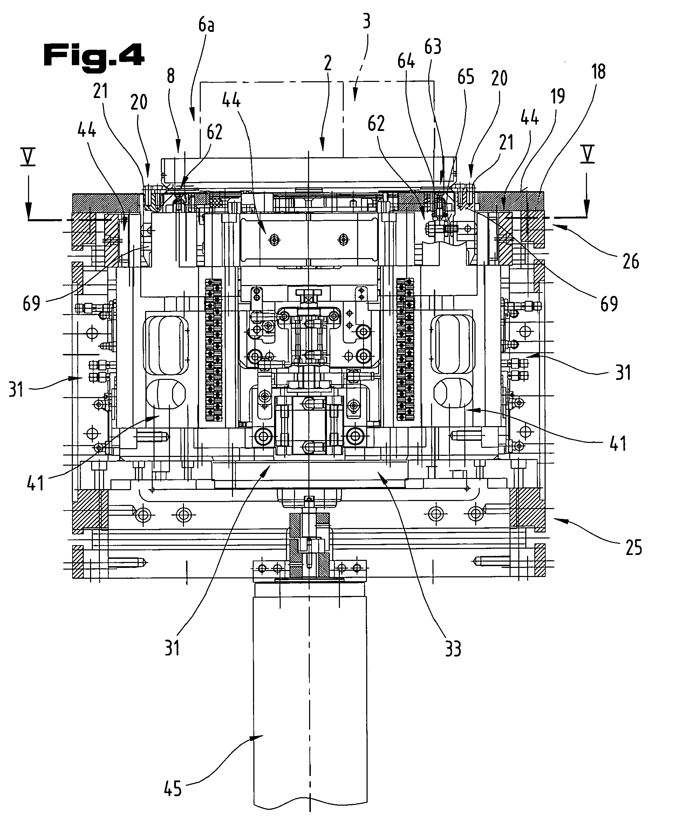

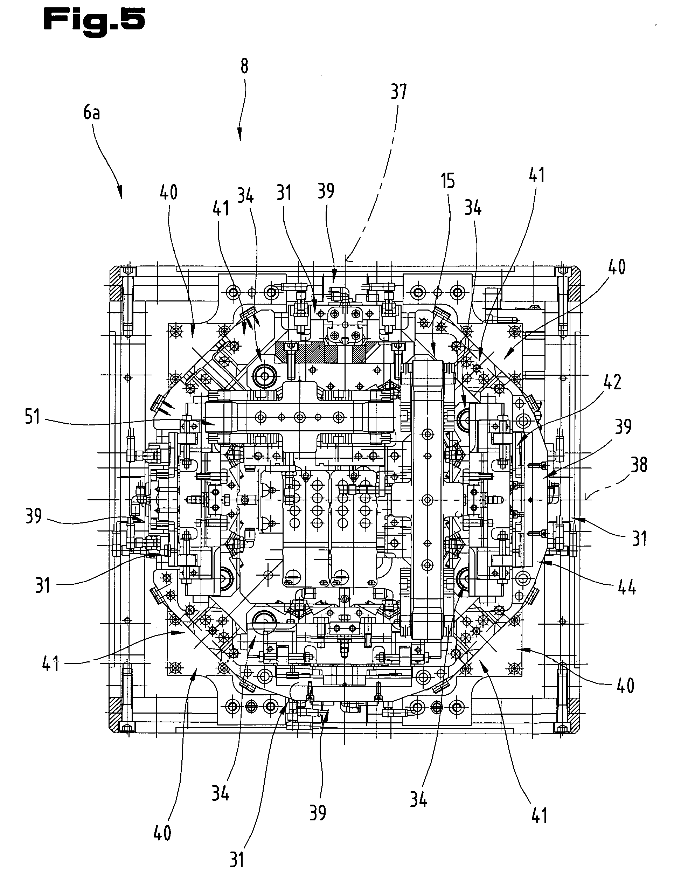

In den gemeinsam beschriebenen Fig. 1 bis 5 ist eine Fertigungsanlage 1 in Draufsicht und Seitenansicht gezeigt, die zum Bearbeiten bzw. Montieren von auf Werkstückträgern 2 angeordneten Bauteilen 3 verwendet wird. Diese Bauteile 3 werden aus einer Vielzahl von Einzelteilen, die in Containern bzw. Paletteneinsätzen, Zuführsystemen etc. zur Montage bereitgestellt werden, zusammengebaut. Eine derartige Fertigungsanlage 1 kann beispielsweise zumindest eine Arbeitsstation 4 umfassen. In der Arbeitsstation 4 werden die Manipulations-, Füge- und/oder Bearbeitungsvorgänge durch einen Manipulator und/oder eine Bedienungsperson etc. vorgenommen. Die Fertigungsanlage 1 umfaßt eine Vielzahl von unmittelbar aufeinanderfolgenden und aneinander gekuppelten Förderabschnitten 5, 6a, 6b, 6c, wovon die Förderabschnitte 5 Transportstationen 7 und die Förderabschnitte 6a, 6b, 6c Knotenstationen 8 ausbilden. Ein Maschinengestell 9 umfaßt auf einer Aufstellfläche 10 sich abstützende höhenverstellbare Abstützelemente 11, mit denen ein Grundrahmen 12 der Förderabschnitte 6a, 6b, 6c, insbesondere der Knotenstationen 8, lösbar befestigt sind. Die Abstützelemente 11 und die Förderabschnitte 5, 6a, 6b, 6c sind durch zweckmäßig langgestreckte Profile gebildet, wobei die Abstützelemente 11 an einem der Aufstellfläche 10 zugewandten freien Endbereich mit einer eine Schrauben-Gewindeanordnung aufweisende Höhenverstelleinrichtung ausgestattet sind. In einem sich kreuzenden Bereich zwischen zumindest zwei Förderabschnitten 5, insbesondere Transportstationen 7, ist der Förderabschnitt 6a; 6b; 6c, insbesondere die Knotenstation 8, angeordnet.

Die erfindungsgemäße Fertigungsanlage 1, wie diese in der Fig. 1 dargestellt ist, kann ein oder mehrere zweckmäßig parallel zueinander verlaufende lineare Hauptförderwege 13 und/oder ein oder mehrere zu diesen sich kreuzende Querförderwege 14 aufweisen, wodurch parallel zueinander angeordnete Hauptförderwege 13 und/oder Querförderwege 14 als Speicherförderwege und/oder Rückförderwege fungieren, was einen mehrfachen Durchlauf der Werkstückträger 2 und einen unterbrechungsfreien Produktionsablauf ermöglicht.

Die einzelnen Förderabschnitte 5, 6a, 6b, 6c sind über aus dem Stand der Technik bekannte, zueinander positionierende und fixierende Elemente, wie beispielsweise Paßstifte, Zentrierstifte, pneumatische oder hydraulisch betätigbare Kupplungselemente etc. und Schraubenverbindungen etc., bedarfsweise lösbar miteinander verbunden. Dadurch ist jederzeit ein Austausch einer oder mehrerer Förderabschnitte 5, 6a, 6b, 6c möglich. Natürlich können als Positionier- und Kupplungs- bzw. Fixierelemente alle aus dem Stand der Technik bekannten Elemente verwendet werden.

Jeder der Förderabschnitte 5, 6a, 6b, 6c weist zumindest eine verstellbare Vorschubvorrichtung 15 zur Fortbewegung des oder der Werkstückträger 2 in Förderrichtung - gemäß Pfeil 16 - auf. Die Vorschubvorrichtung 15 der Förderabschnitte 5 bzw. Transportstationen 7 umfaßt zumindest ein über Umlenkrollen umlaufendes endloses Antriebsorgan 17, das eine Ausnehmung in einer Tischplatte 18 durchsetzt. Die Vorschubvorrichtung 15 ist in dessen Längen- und Breitenabmessung zumindest geringfügig kleiner bemessen als eine Längen- und Breitenabmessung der Förderabschnitte 5, 6a, 6b, 6c. Die auf dem Maschinengestell 9 der Fertigungsanlage 1 lösbar befestigte Tischplatte 18 der Förderabschnitte 5, 6a, 6b, 6c erstreckt sich zwischen den in Längsrichtung und Breitenrichtung voneinander distanzierten Abstützelementen 11 und bildet eine in etwa parallel zu der Aufstellfläche 10 verlaufende Transportebene 19 aus. Planparallel zur Transportebene 19 und in zur Förderrichtung ― gemäß Pfeil 16 - querender Richtung, verlaufen distanziert voneinander und parallel zueinander Führungsbahnen 20 bzw. die diese bildenden Führungsleisten 21, zwischen bzw. entlang denen der Werkstückträger 2 verfahrbar und im wesentlichen in zur Transportebene 19 senkrechter und paralleler Richtung zwangsgeführt ist. Die parallel zueinander und distanziert voneinander angeordneten Führungsbahnen 20, insbesondere die Führungsleisten 21, bilden eine Höhen- und Seitenführungsvorrichtung für die die Bauteile 3 aufnehmenden Werkstückträger 2 aus. Die Führungsbahnen 20 können beispielsweise durch Hartmetalleisten, Keramikleisten etc. gebildet werden. In den Transportstationen 7 sind diese ortsfest und in den Knotenstationen 8 verstellbar angeordnet, so dass die Positioniergenauigkeit in den Transportstationen 7 zweckmäßig geringer ist als in den für die Übergabe des Werkstückträgers 2 und/oder für eine Bearbeitung eine hohe Positioniergenauigkeit erfordernden Knotenstationen 8. Der Werkstückträger 2 ist in den Knotenstationen 8 im wesentlichen spielfrei geführt.

Der rechteckige Grundrahmen 12 und die diesen aufnehmende Tischplatte 18 des Förderabschnittes 5 bzw. der Transportstation 7 weist eine größere Länge 22 als Breite 23 auf. Ein Grundrahmen 24 des Förderabschnittes 6a, 6b, 6c bzw. der Knotenstation 8 bzw. ein diesen bildender unterer Rahmenteil 25 und oberer Rahmenteil 26 weisen eine zweckmäßig gleiche Länge 27 und Breite 28 auf. Am oberen Rahmenteil 26 ist die die Transportebene 19 bildende, bevorzugt quadratische Tischplatte 18 aufgesetzt.

Wie aus der Fig. 1 weiters zu ersehen ist, ist einer der Förderabschnitte 6 bzw. Knotenstationen 8 mit einer einen kreisrunden Drehtisch 29 aufnehmenden Ausnehmung 30 versehen, der um eine in zur Transportebene 19 senkrecht ausgerichteter Richtung verlaufenden Mittelachse lagepositioniert und/oder getaktet verdrehbar ist. Die Transportebenen 19 der Tischplatten 18 der Förderabschnitte 5 bzw. Transportstationen 7 und der Förderabschnitte 6a, 6b, 6c bzw. der Knotenstationen 8 verlaufen in der gleichen Ebene und bilden somit eine ebene Fahrbahn bzw. Transportebene 19 für den Werkstückträger 2 aus.

Wie aus der Fig. 1 weiters zu ersehen ist, weist die Fertigungsanlage 1 mehrere unterschiedliche Funktionen aufweisende Förderabschnitte 6a, 6b, 6c, insbesondere Knotenstationen 8 auf, wovon beispielsweise einer der Förderabschnitte 6a den im Bereich des Querförderweges 14 befindlichen Werkstückträger 2 lagegleich bzw. positionsgleich in den zum Querförderweg 14 zweckmäßig um 90° versetzt verlaufenden Hauptförderweg 13 überführt. Dabei bleibt die Relativlage des das oder die Bauteile 3 aufnehmenden Werkstückträgers 2 beispielsweise gegenüber der Arbeitsstation 4 lagegleich, wie dies in strichpunktierten Linien dargestellt ist.

Eine andere Ausführung besteht darin, dass der im Bereich des Hauptförderweges 13 befindliche Werkstückträger 2 über den Förderabschnitt 6b, insbesondere der Knotenstation 8, in bezug auf den Hauptförderweg 13 in einer veränderten Lage in den Querförderweg 14 übergeleitet wird. Der zu dem Hauptförderweg 13 oder Querförderweg 14 lageveränderte, die Bauteile 3 aufnehmende Werkstückträger 2 wird lageversetzt, beispielsweise um 90°, 180°, 270° verdreht, dem Querförderweg 14 zugeführt, wie dies in strichpunktierten Linien dargestellt ist.

Eine weitere Ausführung besteht in der Kombination des lagegleichen und/oder lageveränderten Übergebens des Werkstückträgers 2 zwischen dem Hauptförderweg 13 und dem Querförderweg 14. Der Aufbau eines derartigen Förderabschnittes 6c, insbesondere der Knotenstation 8, wird im weiteren noch näher beschrieben. Die Führungsbahnen 20 in den Förderabschnitten 6a, 6b sind zweckmäßig in wenigstens eine, bevorzugt mehrere Raumrichtungen synchron und gleichsinnig verstellbar ausgebildet.

Wie nicht weiters dargestellt, besteht natürlich auch die Möglichkeit, mehrere unmittelbar aufeinanderfolgende Transportstationen 7 zu einer Baueinheit mit einer Vorschubvorrichtung 15, die sich im wesentlichen über eine gesamte Länge derselben erstreckt, auszubilden.

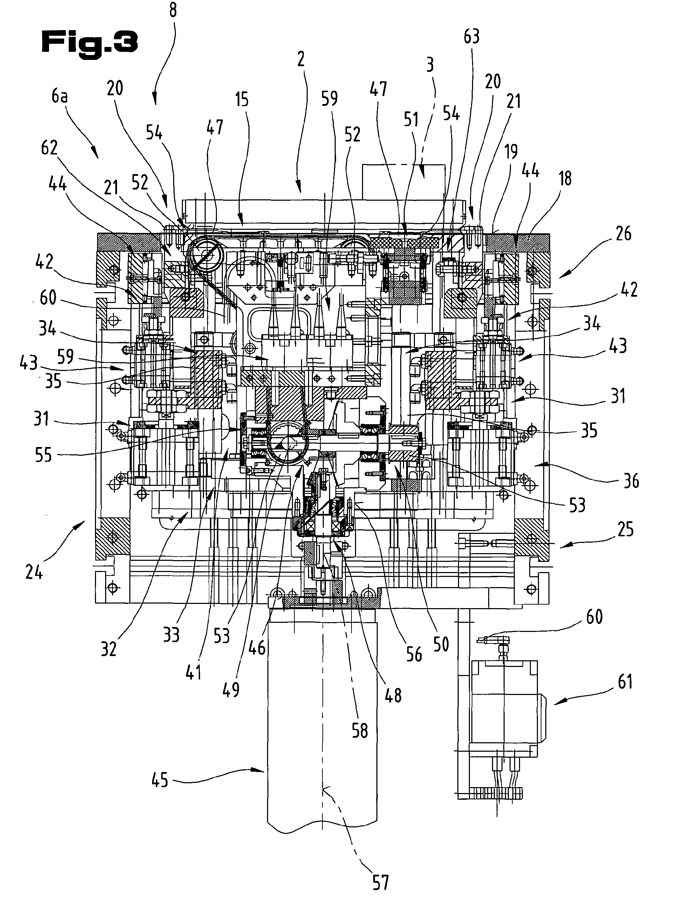

In den gemeinsam beschriebenen Fig. 3 bis 5 ist eine Ausführung des Förderabschnittes 6a, insbesondere der Knotenstation 8, der ein lagegleiches Übergeben des Werkstückträgers 2 von einem Querförderweg 14 in den Hauptförderweg 13 oder dem Hauptförderweg 13 in den Querförderweg 14 ermöglicht, in unterschiedlichen Ansichten und in Schnitten dargestellt. Die Knotenstation 8 umfasst den durch den unteren und oberen Rahmenteil 25, 26 gebildeten Grundrahmen 24, zwischen welchen sich Seitenwände erstrecken und zumindest bereichsweise ein zumindest eine, insbesondere mehrere Verstelleinrichtungen 31 aufnehmendes Traggestell 32 umgrenzen. Der das eine eigene Baueinheit bildende Traggestell 32 aufnehmende, etwa quadratisch ausgebildete Grundrahmen 24 der Knotenstation 8 weist im Bereich der Seitenwände zur einfacheren Montage oder Wartung etc. etwa rechteckförmige Zugangsöffnungen auf. Das modular aufgebaute Traggestell 32 weist eine parallel zu der Transportebene 19 verlaufende und mit dem unteren Rahmenteil 25 des Grundrahmens 24 lösbar befestigte mehreckige, insbesondere achteckige, Trägerplatte 33 und senkrecht auf diese ausgerichtete Führungselemente 34, insbesondere Führungsstangen 35, auf.

Das Traggestell 32 mit den Verstelleinrichtungen 31 bildet eine auswechselbar mit dem Grundrahmen 24 verbundene Baueinheit 36, die als solche zu Wartungsarbeiten aus dem Grundrahmen 24 herausnehmbar ist und durch eine bevorratete weitere Baueinheit 36 in kürzester Zeit wieder in den Grundrahmen 24 eingewechselt werden kann. Dadurch sind kostenintensive Stillstandszeiten, bedingt durch Wartungsarbeiten, Instandhaltungsarbeiten etc. auf ein Minimum reduziert.

Eine erste Mittelachse 37, zu welcher eine weitere auf diese und parallel zu den und zwischen den gegenüberliegenden Förderbahnen 20 bzw. Förderleisten 21 des Hauptförderweges 13 verlaufende Mittelachse 38 senkrecht ausgerichtet ist, verläuft parallel zu den und zwischen den gegenüberliegenden Führungsbahnen 20 bzw. Führungsleisten 21 des Querförderweges 14. Die von einem gemeinsamen Schnittpunkt der beiden Mittelachsen 37 und 38 distanzierten und parallel zu diesen verlaufenden Seitenbereiche 39 sind durch diagonal zu den Mittelachsen 37, 38 versetzt angeordnete und parallel zueinander verlaufende Seitenzwischenbereiche 40 begrenzt.

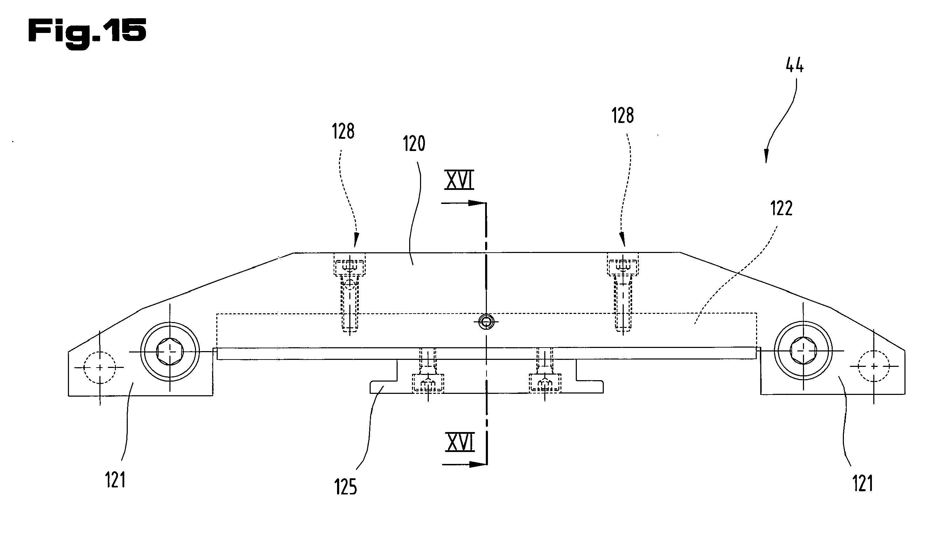

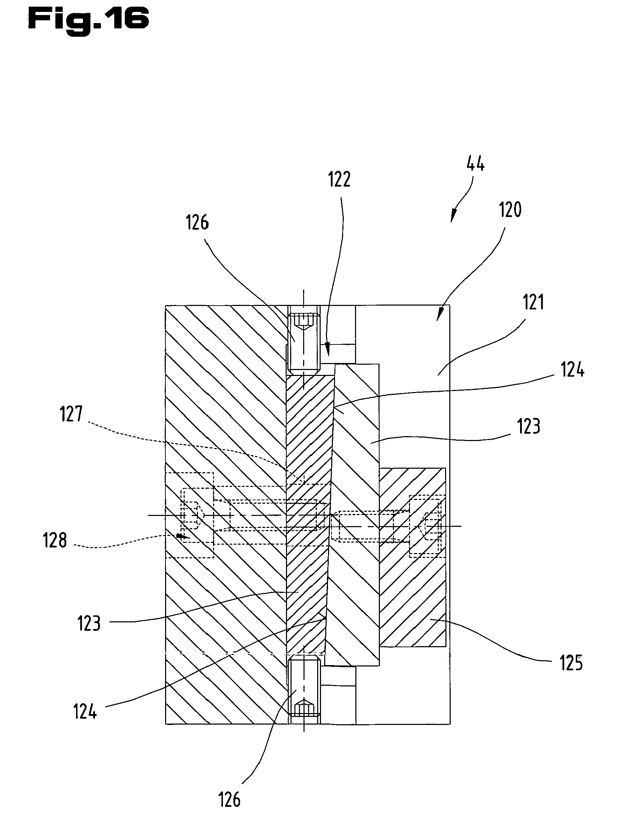

Im äußeren Randbereich der Seitenzwischenbereiche 40 der Trägerplatte 33 sind ausgehend von der Trägerplatte 33 sich in Richtung der Tischplatte 18 erstreckende, in etwa streifenförmige Stützelemente 41 angeordnet, die über lösbare Befestigungsmittel mit der Trägerplatte 33 verbunden sind. In einem von der Trägerplatte 33 abgewandten Endbereich der Stützelemente 41 erstreckt sich in zu den Mittelachsen 37, 38 paralleler Richtung zwischen zwei zueinander benachbarten Stützelementen 41 eine einer Betätigungs- und/oder Arretiervorrichtung 42 der Verstelleinrichtung 31 zugeordnete Spielausgleichsvorrichtung 44. Jeder Verstelleinrichtung 31, insbesondere einer Höhenverstellvorrichtung 43, ist zumindest eine Spielausgleichsvorrichtung 44 zugeordnet, um einen Spielausgleich zwischen dem Werkstückträger 2 und den Führungsbahnen 20 bzw. Führungsleisten 21 und den Ausgleich von Fertigungstoleranzen vorzunehmen. Auf den genaueren Aufbau und die Wirkungsweise der Spielausgleichsvorrichtung 44 wird in den Fig. 15 und 16 noch näher eingegangen.

Für die Vorschubbewegung des Werkstückträgers 2 sind in dem Förderabschnitt 6a, insbesondere in der Knotenstation 8, zumindest zwei über eine Antriebsanordnung 45 und unter Zwischenschaltung einer Getriebeanordnung 46 endlos umlaufende Antriebsorgane 47 vorgesehen. Die Antriebsanordnung 45 ist mit dem Grundrahmen 24, zweckmäßig mit dem unteren Rahmenteil 25, unmittelbar über lösbare Befestigungsmittel verbunden. Die einen Antriebteil 48 und mehrere Abtriebteile 49, 50 aufweisende Getriebeanordnung 46 treibt die umlaufenden bandartigen, die Vorschubvorrichtungen 15; 51 bildenden Antriebsorgane 47 nach Festlegung entsprechender technischer Merkmale für die Vorschubgeschwindigkeit zweckmäßig mit gleicher Umfangsgeschwindigkeit an. Eine der synchron angetriebenen und über ein Stellelement, insbesondere einem Pneumatikzylinder, Hydraulikzylinder etc., verstellbaren, insbesondere höhenverstellbaren Vorschubvorrichtung 15; 51 befindet sich während des Einfahrens des Werkstückträgers 2 in den Förderabschnitt 6a in einer abgesenkten Stellung, so dass immer nur ein Antriebsorgan 47, insbesondere ein Zahnriemen, mit einer mit der Verzahnung des Zahnriemens korrespondierenden Verzahnung des Werkstückträgers 2 in Eingriff steht.

Die zustellbaren, insbesondere anhebbaren Vorschubvorrichtungen 15, 51 des Förderabschnittes 6a verlaufen jeweils parallel zur Förderrichtung - gemäß Pfeil 16 - des Hauptförderweges 13 und Querförderweges 14. Wie in diesem Ausführungsbeispiel gezeigt, sind der Hauptförderweg 13 und der Querförderweg 14 und somit auch die Vorschubvorrichtungen 15 und 51 senkrecht aufeinander ausgerichtet. Die Vorschubvorrichtungen 15, 51 umfassen mehrere Umlenkrollen 52 bzw. zumindest eine Antriebsrolle 53, um die die endlosen Antriebsorgane 47 umgelenkt werden. Der Zahnriemen ist sowohl auf der den Umlenkrollen 52 bzw. Antriebsrollen 53 zugewandten Seite als auch auf der von dieser abgewandten Seite mit einer Verzahnung ausgestattet. Die Tischplatte 18 weist in zur Förderrichtung ― gemäß Pfeil 16 - des Hauptförderweges 13 und Querförderweges 14 paralleler Richtung schlitzförmige Ausnehmungen 54 auf, in welche die Vorschubvorrichtungen 15, 51, insbesondere die Antriebsorgane 47, vorragen oder diese durchsetzen.

Zur Antriebsverbindung des Werkstückträgers 2 mit der Vorschubvorrichtung 15; 51 wird einer der beiden Vorschubvorrichtungen 15; 51 entweder in einer die Transportebene 19 überragende Stellung angehoben oder in eine unterhalb der Transportebene 19 liegende Stellung abgesenkt. So ist es beispielsweise möglich, dass in einer Grundstellung die Vorschubvorrichtungen 15, 51 die Transportebene 19 überragen und nach Auslösen eines Steuersignales durch den Werkstückträger 2, einer der beiden Vorschubvorrichtungen 15; 51 abgesenkt wird. Alternativ dazu ist es möglich, dass in einer Grundstellung beide Vorschubvorrichtungen 15, 51 unterhalb der Transportebene 19 liegen und nach Auslösen eines Steuersignales durch den Werkstückträger 2 eine der beiden Vorschubvorrichtungen 15; 51 angehoben und nach Eingriff von noch näher zu beschreibenden Antriebsmitteln der Werkstückträger 2 mit dem Antriebsorgan 47 der Werkstückträger 2 linear fortbewegt wird. Es sei an dieser Stelle darauf hingewiesen, dass die Vorschubvorrichtungen 15 im Bereich der Transportstationen 7 zweckmäßig immer die Transportebene 19 überragen. Dadurch sind keine zusätzlichen Verstellelemente für das Anheben der Vorschubvorrichtungen 15 nötig.

Die Antriebsanordnung 45, die Getriebeanordnung 46 sowie die Vorschubvorrichtungen 15, 51 sind bereits allgemeiner Stand der Technik. Die Antriebsanordnung 45 kann natürlich aus allen aus dem Stand der Technik bekannten elektrischen, pneumatischen, hydraulischen Antrieben, insbesondere Elektromotoren, Schwenkantriebe etc., gebildet werden. Als elektrische Antriebe sind vor allem standardisierte Motoren, wie beispielsweise Asynchronmotoren, Schrittschaltmotoren, Servomotoren etc., mit Vorteil einsetzbar.

Ein Getriebegehäuse 55 der Getriebeanordnung 46 ist in einer an der Trägerplatte 33 vorgesehenen, vom Antriebsteil 48 durchsetzten Aussparung 56 angeordnet und mit dieser über Befestigungsmittel lösbar befestigt. Die Getriebeanordnung 46 ist zwischen den um die Mittelachsen 37, 38 symmetrisch ausgebildeten, jeweils gegenüberliegenden Verstelleinrichtungen 31 angeordnet, was zu einer Verkleinerung der gesamten Baugröße des Förderabschnittes 6a bzw. der Knotenstation 8 beiträgt. Eine Mittelachse 57 der Antriebsanordnung 45 verläuft fluchtend zu einer Mittelachse 58 der Antriebswelle der Getriebeanordnung 46. An einer dem Antriebteil 48 gegenüberliegenden Seitenfläche des Getriebegehäuses 55 der Getriebeanordnung 46 ist ein elektrisches und/oder pneumatisches oder hydraulisches Steuermodul 59 aufgesetzt, welches über eine oder mehrere Verbindungsleitungen 60 mit einer zentralen elektrischen und/oder pneumatischen und/oder hydraulischen Versorgungseinheit 61 steuerungsverbunden ist.

Zur bedarfsweisen Veränderung der in zur Transportebene 19 senkrechter Richtung verlaufenden Verstellbewegung bzw. des Verstellweges der einander gegenüberliegenden, gleichzeitig verstellbaren Führungsbahnen 20 bzw. Führungsleisten 21 ist Tragkörpern 62 der Verstelleinrichtungen 31 bzw. Höhenverstellvorrichtungen 43 zumindest eine Höhenbegrenzungvorrichtung 63 zugeordnet. Die Höhenbegrenzungvorrichtung 63 ist in der Tischplatte 18 integriert und/oder aufgebaut und umfaßt an einer von der Transportebene 19 abgewandten Unterseite zumindest ein in einer Vertiefung angeordnetes Anschlagelement 64, das über eine von der Transportebene 19 in Richtung der Unterseite vorragende Bohrung in Richtung seiner Längserstreckung längenveränderbar oder verschiebbar etc. ist und die Zustellung der gegenüberliegenden Führungsleisten 21 durch von dem Tragkörper 62 ausgebildete Anschlagflächen 65 begrenzt. Das Anschlagelement 64 ist in seiner eingestellten Relativlage lagepositioniert gehalten. Die Höhenbegrenzungvorrichtung 63 kann über fembedienbare Stellelemente verstellt werden, so dass eine frei einstellbare Höhenverstellung, in zur Transportebene 19 senkrechter Richtung möglich ist, so dass die Knotenstation 8 als Hubstation z.B. für Fügearbeiten, ausgebildet ist. Während der Höhenverstellung wird die Vorschubvorrichtung 15; 51 höhenverstellt, wonach der Werkstückträger 2 immer mit der den Werkstückträger 2 lagepositionierenden Vorschubvorrichtung 15; 51 antriebsverbunden ist.

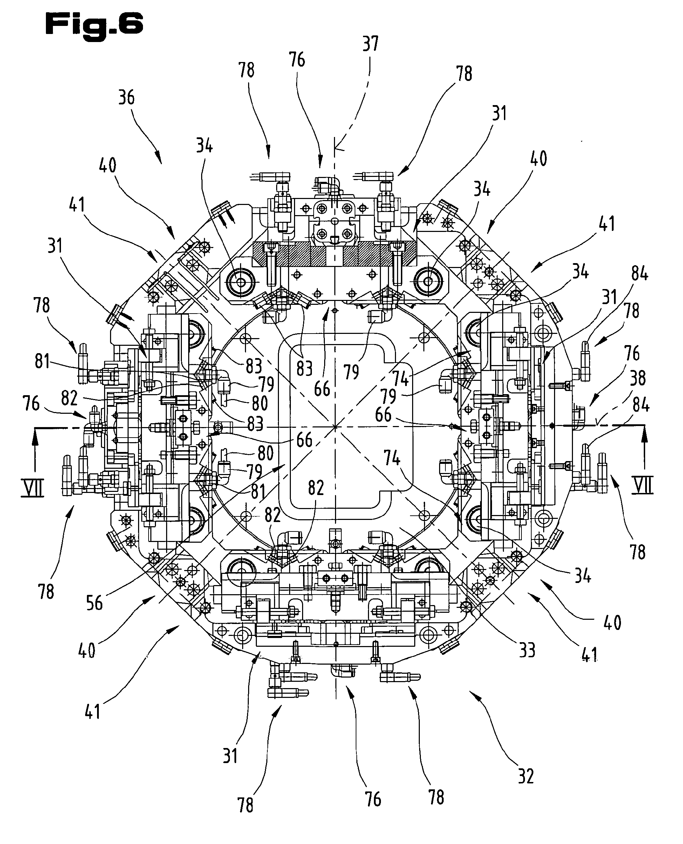

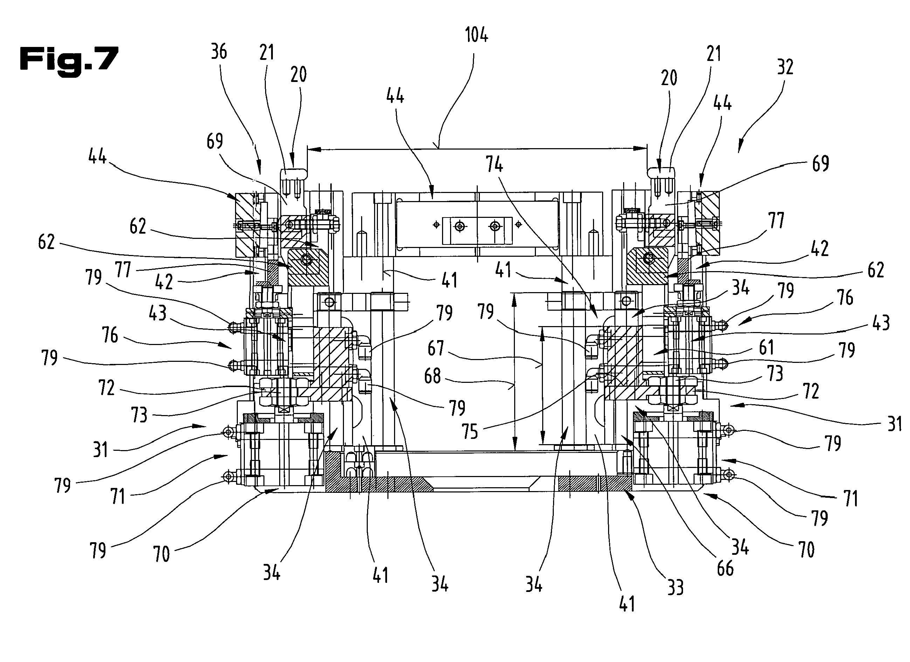

In den gemeinsam beschriebenen Fig. 6 und 7 ist die das Traggestell 32 und die Verstelleinrichtungen 31 umfassende Baueinheit 36 in unterschiedlichen Ansichten und teilweise geschnitten gezeigt. Die mit den die Verstelleinrichtungen 31 aufnehmenden Führungselemente 34 ausgestattete Trägerplatte 33 ist, wie bereits oben erwähnt, achteckig ausgebildet. Im Randbereich der Seitenzwischenbereiche 40 sind die senkrecht auf die Trägerplatte 33 ausgerichteten Stützelemente 41 angeordnet, zwischen denen sich in zu der Mittelachse 37 und 38 paralleler Richtung die Spielausgleichsvorrichtungen 44 erstrecken. Ein etwa prismatischer Führungsschlitten 66 der Verstelleinrichtung 31 erstreckt sich zwischen den diesen längenverschiebbar lagernden Führungselementen 34, dessen Höhe 67 zumindest geringfügig kleiner bemessen ist als eine zuzüglich des Verstellweges der Führungsleisten 21 bemessene Länge 68 der Führungselemente 34. Der auf dem im Längsschnitt etwa U-förmig ausgebildeten Führungsschlitten 66 aufgebaute, etwa kreuzförmige Tragkörper 62 ist über lösbare Befestigungsmittel, insbesondere Schrauben, Bolzen etc., mit diesem verbunden, wovon dem einen Stellhebel 69 umfassenden Tragkörper 62 zumindest eine Betätigungs- und/oder Arretiervorrichtung 42 zugeordnet ist. Die Höhenverstellvorrichtung 43 der Verstelleinrichtung 31 umfaßt den Führungsschlitten 66 und den auf diesem aufgebauten Tragkörper 62, wobei diesem die Betätigungs- und/oder Arretiervorrichtung 42 zugeordnet ist.

Die Trägerplatte 33 weist in den Seitenbereichen 39 jeweils aufeinander zugerichtete und über einen Teil der Seitenbereiche 39 sich erstreckende Aussparungen 70 auf, die zur Aufnahme von eine Höhenverstellung der Führungsbahnen 20 bzw. Führungsleisten 21 in zur Transportebene 19 senkrechter Richtung ausführende Stellantriebe 71 ausgebildet sind. Die zweckmäßig druckmittelbeaufschlagten Stellantriebe 71 bzw. die diese bildenden Linearantriebe, wie beispielsweise Pneumatikzylinder, Hydraulikzylinder oder elektrische Stellantriebe 71, wie beispielsweise elektrische Linearantriebe etc., werden über lösbare Befestigungsmittel mit der Trägerplatte 33 bewegungsfest verbunden. Die Stellantriebe 71 sind zweckmäßig zu den den Führungsschlitten 66 lagernden Führungselementen 34 in Richtung des Randbereiches der Trägerplatte 33 versetzt angeordnet. Eine sich zwischen dem Führungsschlitten 66 und dem Stellantrieb 71 in zur Transportebene 19 (nicht weiters dargestellt) paralleler Richtung erstreckende, etwa plattenförmige Stützplatte 72 ist zur Übertragung einer Verstellbewegung des Stellantriebes 71 auf die Führungsbahn 20 bzw. Führungsleiste 21 angeordnet, deren erster Endbereich mit einem freien Ende einer Kolbenstange 73 des Stellantriebes 71 verbunden ist und an deren weiterem, dem Führungsschlitten 66 zugewandten Endbereich der Führungsschlitten 66 aufgesetzt bzw. abgestützt ist. Der im Längsschnitt etwa U-förmig ausgebildete Führungsschlitten 66 weist hierzu zwischen Führungsteilbereichen 74 eine parallel zur Transportebene 19 verlaufende Stützfläche 75 auf, welche sich zumindest bereichsweise mit der Stützplatte 72 überdeckt.

Wie aus der Fig. 7 besser zu ersehen ist, ist die Betätigungs- und/oder Arretiervorrichtung 42 auf dem Tragkörper 62 aufgebaut, so dass bei einer Verstellbewegung des Stellantriebes 71 in zur Transportebene 19 senkrechter Richtung die den Führungsschlitten 66 und den mit diesem verbundenen Tragkörper 62 umfassende Höhenverstelleinrichtung 43 und die Betätigungs-und/oder Arretiervorrichtung 42 verstellt bzw. angehoben oder abgesenkt werden. Die Verstelleinrichtung 31 weist den Führungsschlitten 66, den Tragkörper 62 und die Betätigungs-und/oder Arretiervorrichtung 42 auf, wobei jede Komponente für sich ein Modul ausbildet, das mit zumindest einem weiteren Modul lösbar und positioniert zueinander verbunden ist. Ein weiterer Stellantrieb 76 der Betätigungs- und/oder Arretiervorrichtung 42 ist unmittelbar und versetzt zum Stellantrieb 71 auf dem Tragkörper 62 angeordnet und wird wie der Stellantrieb 71 beispielsweise durch einen Pneumatikzylinder, Hydraulikzylinder oder elektrischen Linearantrieb etc. gebildet. Die ein Betätigungselement 77 umfassende Betätigungs- und/oder Arretiervorrichtung 42 ist zwischen der Spielausgleichsvorrichtung 44 und dem Stellhebel 69 des Tragkörpers 62 angeordnet und ist bedarfsweise in zur Transportebene 19 (wie nicht weiters dargestellt) paralleler Richtung zumindest geringfügig verschiebbar ausgebildet. Das etwa U-förmige Betätigungselement 77 weist einen L-förmigen Querschnitt auf.

Die Stellantriebe 71, 76 sind mit aus dem Stand der Technik bereits bekannten Abfrageorganen 78 und Anschlußelementen 79 zur Steuerung derselben und zur wechselweisen Druckbeaufschlagung der Stellantriebe 71 und 76 versehen. Die Stellantriebe 76 werden ebenfalls wie die Stellantriebe 71 gleichzeitig druckmittelbeaufschlagt, sodass die gegenüberliegenden Paare von Führungsleisten 21 gleichzeitig in zur Transportebene 19 paralleler Richtung aufeinander zubewegt werden.

Jeweils zwei gegenüberliegende, die Führungsleisten 21 aufnehmende Verstelleinrichtungen 31 werden zumindest kurz vor Einfahren des Werkstückträgers 2 in den Fahrabschnitt 6a bzw. der Knotenstation 8 über die den Höhenverstellvorrichtungen 43 der Verstelleinrichtungen 31 zugeordneten Stellantriebe 71 gleichzeitig betätigt, insbesondere druckmittelbeaufschlagt. Jeder der Führungsschlitten 66 weist mehrere, insbesondere zwei voneinander getrennte Anschlußelemente 79 zum Be- und Entlüften der Stellantriebe 71 auf, wobei eine Verbindungsleitung 80 mit der zentralen, pneumatischen Versorgungseinheit 61 leitungsverbunden ist und über in dem Führungsschlitten 66 angeordnete Strömungskanäle 81 das Druckmedium in Verteilkanäle 82 verteilt wird. Für diese Anwendung werden zweckmäßig zwei Verteilkanäle 82 und ein Strömungskanal 81 ausgebildet. Zur Strömungsverbindung der jeweils gegenüberliegenden Stellantriebe 71 der gegenüberliegenden Verstelleinrichtungen 31 werden die Verteilungskanäle 82 unter Zwischenschaltung eines weiteren Anschlußelementes 83 und einer Verbindungsleitung 84 mit je einem der Anschlußelemente 79 zum Entlüften und Belüften der Stellantriebe 71 strömungsverbunden.

Durch die gewissermaßen Parallelschaltung zweier druckmittelbeaufschlagter Stellantriebe 71 ist es nunmehr im wesentlichen möglich, die quer zur Förderrichtung - gemäß Pfeil 16 - voneinander distanzierten und parallel zueinander verlaufenden Führungsleisten 21 durch Druckbeaufschlagung der Stellantriebe 71 gleichzeitig anzuheben oder abzusenken. Das weitere am Führungsschlitten 66 angeordnete Anschlußelement 79 ist ebenfalls über einen Strömungskanal 81 mit den Verteilkanälen 82 strömungsverbunden und versorgt ebenfalls wiederum die gegenüberliegenden Stellantriebe 71 der Verstelleinrichtungen 31.

Die Anschlußelemente 79 zum Be- und Entlüften der einzelnen Verstelleinrichtungen 31 sind untereinander strömungsverbunden und über jeweils eine zentrale Verbindungsleitung 80 (wie nicht weiters dargestellt) unter Zwischenschaltung von nicht weiters dargestellten Schalt-und/oder Steuerventilen, insbesondere Wegeventile, wie beispielsweise 4/2-Wegeventile, 5/3-Wegeventile etc., mit der zentralen elektrischen und/oder pneumatischen oder hydraulischen Versorgungseinheit 61 (wie nicht weiters dargestellt) leitungsverbunden.

Zur Druckmittelbeaufschlagung der Stellantriebe 76 sind diese ebenfalls über Verbindungsleitungen 80 und unter Zwischenschaltung von nicht weiters dargestellten Schaltventilen mit der Versorgungseinheit 61 leitungsverbunden. Ein derartiger Steuerungsverbund bzw. der Aufbau der einzelnen Steuerungskomponenten, wie beispielsweise Schaltventile, Stellantriebe 71, 76 etc., sind bereits allgemeiner Stand der Technik.

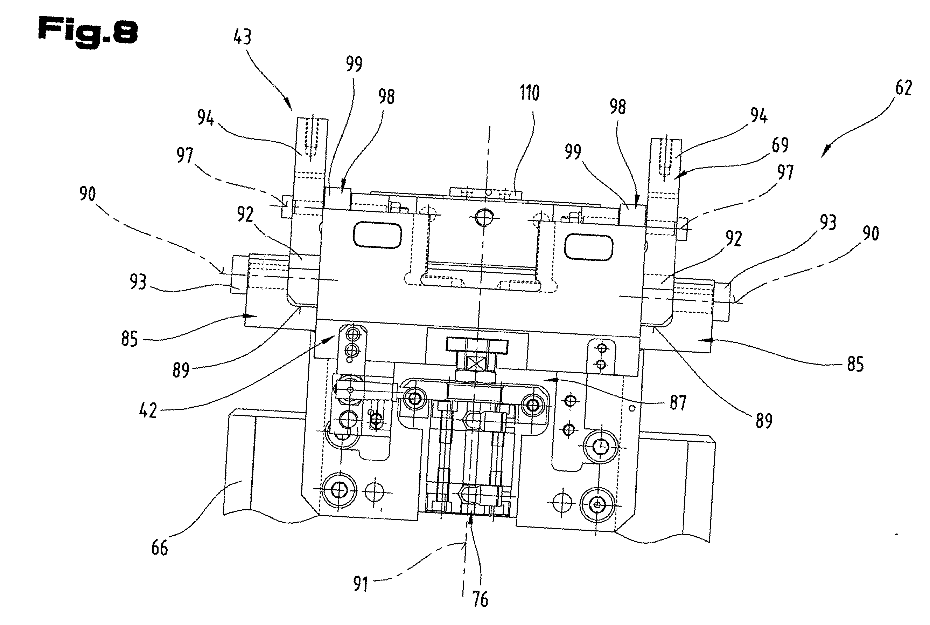

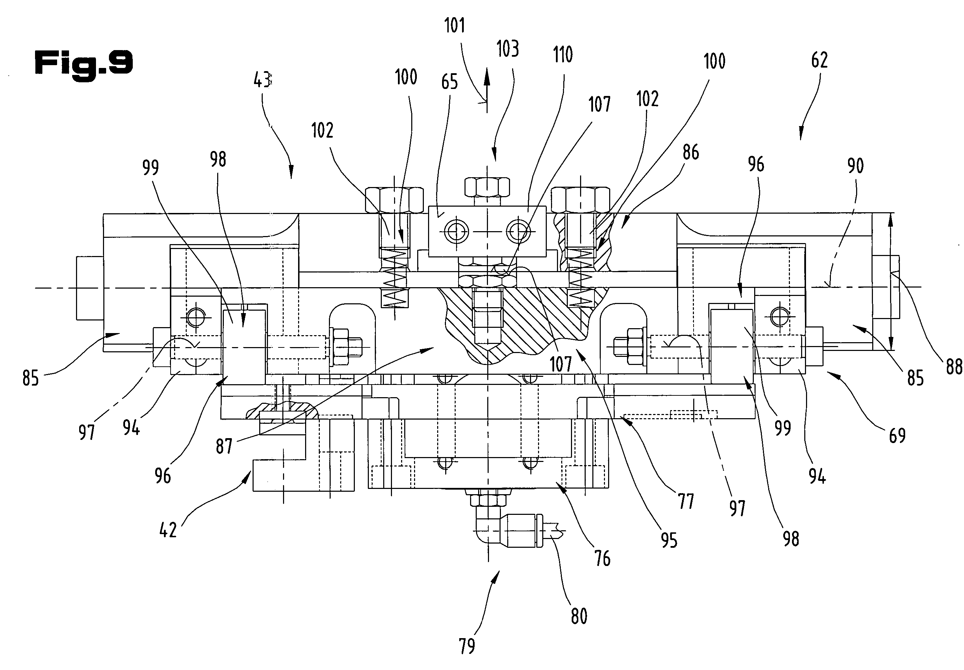

Zur besseren Übersicht sind die Höhenverstellvorrichtung 43 und die Betätigungs- und/oder Arretiervorrichtung 42 der Verstelleinrichtung 31 in den Fig. 8 bis 12 in unterschiedlichen Ansichten näher dargestellt, wobei für gleiche Teile gleiche Bezugszeichen bzw. gleiche Bauteilbezeichnungen verwendet werden und die in der gesamten Beschreibung enthaltenen Of fenbarungen sinngemäß auf gleiche Teile und gleiche Bezugszeichen bzw. gleiche Bauteilbezeichnungen übertragen werden können.

Der auf dem Führungsschlitten 66 aufgebaute bzw. mit diesem lösbar verbundene etwa kreuzförmige Tragkörper 62 weist in zu seiner Längserstreckung seitlich vorragende Fortsätze 85 und einen in Längsrichtung des Tragkörpers 62 verlaufenden Vorsprung 86 auf. Zwischen einem Mittensteg 87 und den gegenüberliegenden Fortsätzen 85 ist zumindest eine über einen Teil einer Stärke 88 des Tragkörpers 62 etwa U-förmige, eine Schwenkaufnahme 89 bildende Vertiefung ausgebildet, in die zumindest ein Teil eines gabelförmigen Stellhebels 69 der Höhenverstellvorrichtung 43 vorragt. Zweckmäßig werden zwei zueinander beabstandete Schwenkaufnahmen 89 ausgebildet. Der U-förmige und im Querschnitt etwa L-förmig ausgebildete Stellhebel 69 ist um eine parallel zur Transportebene 19 verlaufende Schwenkachse 90 und in einer quer zur Längserstreckung desselben verlaufenden Achse verstell- bzw. verschwenkbar ausgebildet. Eine Längsmittelachse 91 der Höhenverstellvorrichtung 43 verläuft parallel zu den in dieser Fig. nicht ersichtlichen Führungselementen 34 und senkrecht zur Transportebene 19. Kürzere Schenkel 92 des etwa L-förmig ausgebildeten Stellhebels 69 sind den Schwenkaufnahmen 89 zugeordnet und über zumindest ein eine Bohrung in dem Schenkel 92 durchsetzendes Lagerungselement 93 verschwenkbeweglich gelagert. Die Lagerungselemente 93 können beispielsweise durch Gewindebolzen etc. gebildet werden.

Zweckmäßig sind im Bereich der gegenüberliegenden Schwenkaufnahmen 89 etwa senkrecht auf die Schenkel 92 ausgerichtete und in Richtung einer in dieser Fig. nicht weiters dargestellten Tischplatte 18 vorragende Schenkel 94 angeordnet, mit denen die auswechselbaren Führungsleisten 21 positioniert verbunden werden. Die lösbare Befestigung der Führungsleisten 21 kann über alle aus dem Stand der Technik bekannten lösbaren Befestigungsmittel, wie beispielsweise Schrauben etc., erfolgen. Zwischen einem Mittensteg 95 und den gegenüberliegenden Schenkeln 94 für die Befestigung der Führungsleiste 21 des Stellhebels 69 sind etwa U-förmige Vertiefungen 96 für die Aufnahme von um eine Drehachse 97 gelagerte Lagerelemente 98 ausgebildet. Bevorzugt sind die Lagerelemente 98 durch Wälzlager 99, insbesondere Rillenkugellager, gebildet.

Zwischen dem Tragkörper 62, insbesondere dem Vorsprung 86, und dem Stellhebel 69 ist zumindest ein, insbesondere sind mehrere elastische Rückstellelemente 100, die entgegen einer Zustellbewegung - gemäß Pfeil 101 - zu dem Werkstückträger 2 wirksam sind, angeordnet. Die Rückstellelemente 100 können durch alle aus dem Stand der Technik bekannte elastisch nachgiebige Federelemente, wie beispielsweise Druckfedern, Tellerfedern etc., gebildet werden. Die Rückstellelemente 100 werden von mit einer Schraubengewindeanordnung versehenen Bolzenelementen 102 positioniert aufgenommen. Dadurch ist es möglich, die wirksame Federlänge der Rückstellelemente 100 gegebenenfalls zu variieren. Der Tragkörper 62, insbesondere der Vorsprung 86, umfaßt zumindest eine Anschlag- bzw. Spielausgleichsvorrichtung 103, die einen Verstellweg des Stellhebels 69 und somit eine parallel zu der Transportebene 19 bemessene lichte Weite 104 - wie diese in Fig. 7 eingetragen ist - zwischen zwei gegenüberliegenden ausgefahrenen Führungsbahnen 23 bzw. Führungsleisten 21 begrenzt.

Zweckmäßig ist jede Verstelleinrichtung 31 mit einer derartigen Anschlag- bzw. Spielausgleichsvorrichtung 103 versehen. Dadurch ist es nunmehr möglich, einerseits die lichte Weite 104 zwischen den Führungsleisten 21 und gegebenenfalls auftretende Fertigungstoleranzen von einer Führungsvorrichtung 105 bzw. die diese bildenden Führungsrollen 106 und/oder Führungsbahnen 20 auszugleichen und andererseits ein Ausrichten bzw. Justieren der Führungsleisten 21 gegenüber den auf den Förderabschnitten 5 bzw. Transportstationen 7 angeordneten Führungsleisten 21 durchzuführen, so dass diese in Längsrichtung zueinander fluchtend angeordnet sind. Die Anschlag- bzw. Spielausgleichsvorrichtung 103 kann im einfachsten Fall durch zumindest eine im Bereich des Vorsprunges 86 und des Mittensteges 95 des Stellhebels 69 angeordnete Schrauben-Gewindeanordnung gebildet werden. Durch Variierung der Einschraubtiefe der Schrauben-Gewindeanordnung kann der durch Anschlagflächen 107 begrenzte Verstellweg in zur Transportebene 19 paralleler Richtung eingestellt werden. Die Anschlagflächen 107 werden, wie in dieser Ausführung gezeigt, durch hochfeste Schraubenmuttern gebildet.

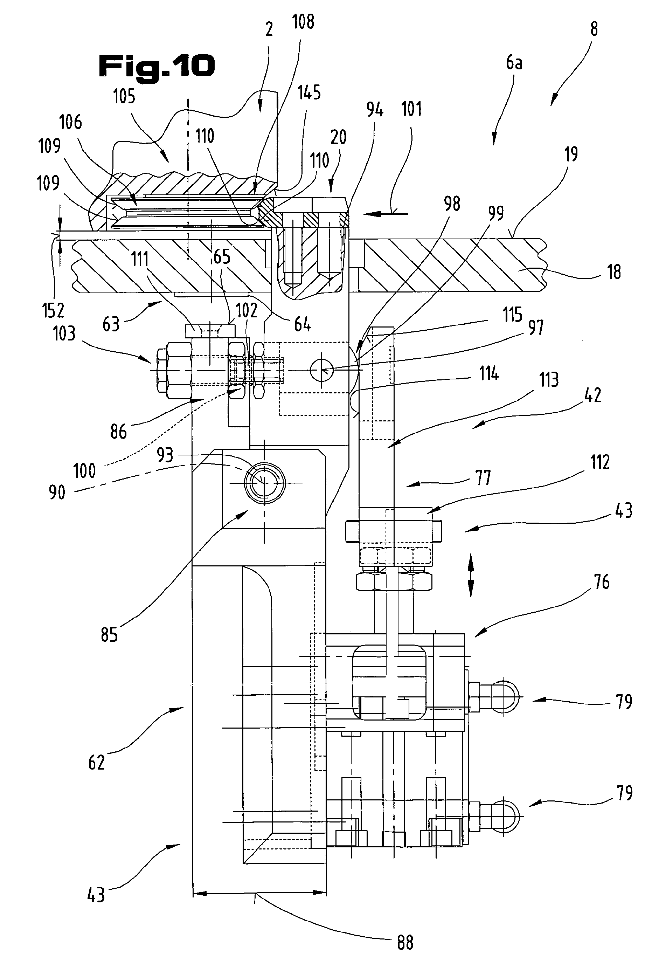

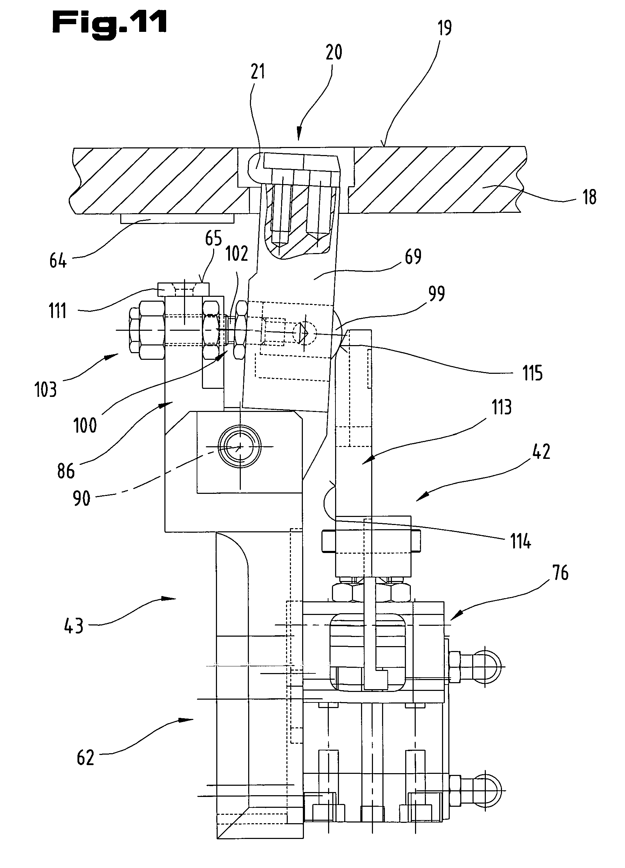

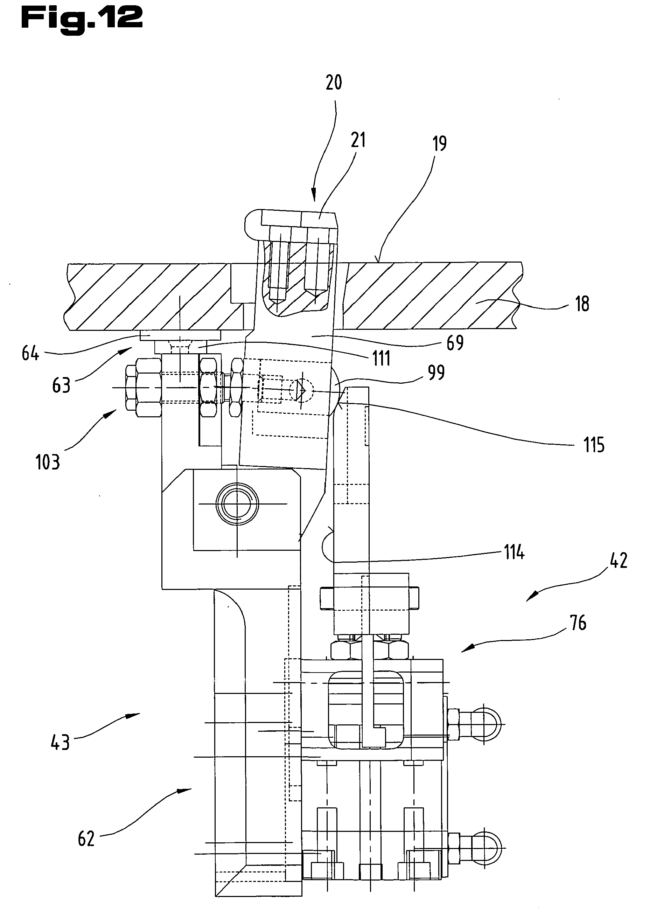

Der Verstellweg der jeweils gegenüberliegenden Verstelleinrichtung 31 ist derart gewählt, dass die Führungsleisten 21 mit den Führungsorganen 106 des Werkstückträgers 2 im wesentlichen formschlüssig ineinandergreifen. Der erforderliche Reibschluß zwischen der Führungsbahn 20 und dem Führungsorgan 106 zum Bewegen, insbesondere Abwälzen, des Führungsorganes 106 gegenüber der Führungsbahn 20 ist im wesentlichen vernachlässigbar klein. Die Führungsorgane 106 des Werkstückträgers 2 sind mit einer nutförmigen Vertiefung 108 zum Eingriff in die quer zur Förderrichtung ― gemäß Pfeil 16 - voneinander distanzierten Führungsbahnen 20 versehen, wobei in zumindest einem der Förderabschnitte 6a; 6c bzw. in der Knotenstation 8 zumindest eine Führungsbahn 20 aus einer sich außerhalb eines Lichtraumprofiles des Werkstückträgers 2 befindlichen Ruhestellung - wie in der Fig. 11 dargestellt - in eine sich oberhalb der Transportebene 19 befindliche Position - wie in der Fig. 12 dargestellt - mittels einer Höhenverstellvorrichtung 43 der Verstelleinrichtung 31 anhebbar und zum Eingriff mit den Vertiefungen 108 der Führungsorgane 106 quer zu einer Längsrichtung der Führungsbahn 20 über die Betätigungs- und/oder Arretiervorrichtung 42 in eine Eingriffsstellung - wie in der Fig. 10 dargestellt - verstellbar ausgebildet ist. Durch den Eingriff der Führungsbahn 20 mit zumindest einem Führungsorgan 106 wird die Zwangsführung des Werkstückträgers 2 entlang den Führungsbahnen 20 bewirkt.

Winkelig zueinander verlaufende und sich in Richtung einer Achse der Führungsorgane 106 verjüngende Führungsflächen 109 begrenzen die Vertiefung 108 der Führungsorgane 106. Die in die nutförmigen Vertiefungen 108 der Führungsorgane 106 in Eingriff bringbaren Führungsbahnen 20 weisen zumindest bereichsweise zu den Vertiefungen 108 gegengleiche Führungsflächen 110 auf. Die Führungsbahnen 20 in den Förderabschnitten 6a, 6c werden gleichzeitig und gleichsinnig zum Eingriff zwischen den geneigten Führungsflächen 109 der Vertiefungen 108 der Führungsorgane 106 verstellt. Natürlich können die Führungsflächen 110 auch durch sich zumindest über einen Teil einer Stärke der Führungsbahnen 20 erstreckende Kreisbogen, insbesondere Radien, gebildet werden. Eine im Wendepunkt des Kreisbogens angelegte Tangente verläuft parallel zu den Führungsflächen 109 der Führungsorgane 106. Die nutförmige Vertiefung 108 kann einen V-förmigen, trapezförmigen etc. Querschnitt aufweisen, wobei die Führungsleisten 21 in der Eingriffsstellung zumindest geringfügig zu einem Nutboden der Vertiefung 108 beabstandet sind. Ein zwischen den Führungsflächen 109 der Vertiefung 108 bemessener Winkel beträgt zwischen 30° und 120°, bevorzugt zwischen 40° und 90°, beispielsweise 60°. Die Führungsorgane 106 können ein- oder mehrteilig aufgebaut sein, wovon Teilbereiche derselben mit unterschiedlichen Eigensehaften aufweisenden Schichten versehen werden können. So ist der Einsatz von schwingungsdämpfenden und/oder hochfesten etc. Materialien möglich, um gegebenenfalls das Einsatzgebiet zu erweitern. Die Führungsorgane 106 weisen in deren Querschnittsform zweckmäßig kongruent mit der gleichen Neigung verlaufende Führungsflächen 109 auf, wodurch im Zusammenwirken mit den Führungsbahnen 20 der Werkstückträger 2 zwischen und entlang derselben selbstzentrierend geführt ist.

Alternativ dazu besteht auch die Möglichkeit, wie nicht weiters dargestellt, die Führungsbahnen 20 mit einer nutförmigen Vertiefung zu versehen, in die in einer Eingriffsstellung die Führungsorgane 106 vorragen. Die Führungsorgane 106 am Werkstückträger 2 weisen eine zu der Vertiefung gegengleiche oder eine zu der Vertiefung zugewandt konkave Querschnittsform auf.

Wie bereits in den vorhergehenden Fig. beschrieben, weist die Knotenstation 8 zumindest eine das Anschlagelement 64 aufweisende Höhenbegrenzungvorrichtung 63 auf, wobei eine Höhenverstellung in zu der Transportebene 19 senkrechter Richtung durch ein die Anschlagfläche 65 aufweisendes plattenförmiges Begrenzungselement 111 begrenzt wird. Das Begrenzungselement 111 wird an einer parallel zur Transportebene 19 verlaufenden Stirnfläche des Vorsprunges 86 des Tragkörpers 62 lösbar befestigt. Damit können die Führungsbahnen 20 der Knotenstation 8 zu den Führungsbahnen 20 der Transportstationen 7 in zur Transportebene 19 senkrechter Richtung zueinander fluchtend ausgerichtet werden.

Die am Tragkörper 62 aufgebaute Betätigungs- und/oder Arretiervorrichtung 42 umfaßt, wie bereits zuvor ausführlich beschrieben, den Stellantrieb 76 und das etwa U-förmige und im Querschnitt L-förmige Betätigungselement 77. Für einen gegebenenfalls erforderlichen Spannungsausgleich der Betätigungselemente 77 ist ein Schenkel 112 mit einem in zur Transportebene 19 paralleler Richtung verlaufenden Längsschlitz versehen. Ein weiterer senkrecht zur Transportebene 19 ausgerichteter Schenkel 113 des Betätigungselementes 77 ist zwischen dem Stellhebel 69 und der Spielausgleichsvorrichtung 44 angeordnet. Eine dem Stellhebel 69 eine Kulissenbahn bildende Seitenfläche 114 erstreckt sich zumindest über einen Teil einer Höhe des Schenkels 113 und ist durch eine geneigt zur Seitenfläche 114 verlaufende Schräge 115 im freien Endbereich des Schenkels 113 begrenzt.

Wie den Fig. 11 und 12 zu entnehmen, ist das den Stellhebel 69 seitlich überragende Lagerelement 98 bzw. Kugellager 99 in einer Ruhestellung und in einer Zwischenstellung bzw. angehobenen Position durch die Wirkung der elastischen Rückstellelemente 100 auf der Schräge 115 des Betätigungselementes 79 abgestützt. Wie der Fig. 10 zu entnehmen, ist die Führungsleiste 21 in einer verstellten Eingriffsstellung dargestellt. Dabei wird durch das Einfahren des Werkstückträgers 2 in die Knotenstation 8 ein Signal ausgelöst und an die zentrale Steuereinrichtung etc. übermittelt, welche veranlaßt, dass jeweils zwei gegenüberliegende Verstelleinrichtungen 31 betätigt werden. Dabei werden vorerst die Höhenverstellvorrichtungen 43 der Verstelleinrichtungen 31 in zur Transportebene 19 senkrechter Richtung angehoben, wobei die federkraftbeaufschlagten Stellhebel 69 bzw. die Führungsleisten 21 schräg zur Transportebene 19 hochgefahren und nach Erreichen einer vorbestimmbaren, durch die Höhenbegrenzungvorrichtung 63 begrenzten Position bzw. Zwischenstellung der weitere Stellantrieb 76 der Betätigungs- und/oder Arretiervorrichtung 42 betätigt wird und das Betätigungselement 77 in zur Transportebene 19 senkrechter Richtung verstellt wird und die Führungsbahnen 20 synchron aufeinander zubewegt werden. Durch das Abwälzen des Lagerelementes 98 bzw. Kugellagers 99 entlang der Schräge 115 in Richtung der Seitenfläche 114 wird der Stellhebel 69 in zur Förderrichtung - gemäß Pfeil 16 - querender Richtung so lange verschwenkt, bis Anschlagflächen 107 der Anschlag- bzw. Spielausgleichsvorrichtung 103 zur Anlage kommen. Der Vorteil dieser Lösung liegt vor allem darin, dass die Führungsleisten 21 über das Betätigungselement 77 in einer ersten angehobenen und verstellten Eingriffsstellung gegen eine Rückstellung in eine abgesenkte Ruhestellung bedarfsweise lösbar gesichert sind.

Erst nach Betätigung bzw. Druckbeaufschlagung der Stellantriebe 76 wird das Betätigungselement 77 abgesenkt und das Lagerelement 98 im Bereich der Schräge 115 verbracht. Danach werden durch Betätigung der Stellantriebe 71 die parallel zueinander verschalteten Höhenverstellvorrichtungen 43 gleichzeitig abgesenkt.

Die Spielausgleichsvorrichtung 44, die einer der Seitenfläche 114 gegenüberliegenden Seitenfläche zugeordnet ist, kann eventuell eintretende Toleranzabweichungen bzw. reibungsbedingte Verschleiße des Lagerelementes 99 und des Betätigungselementes 77 ausgleichen.

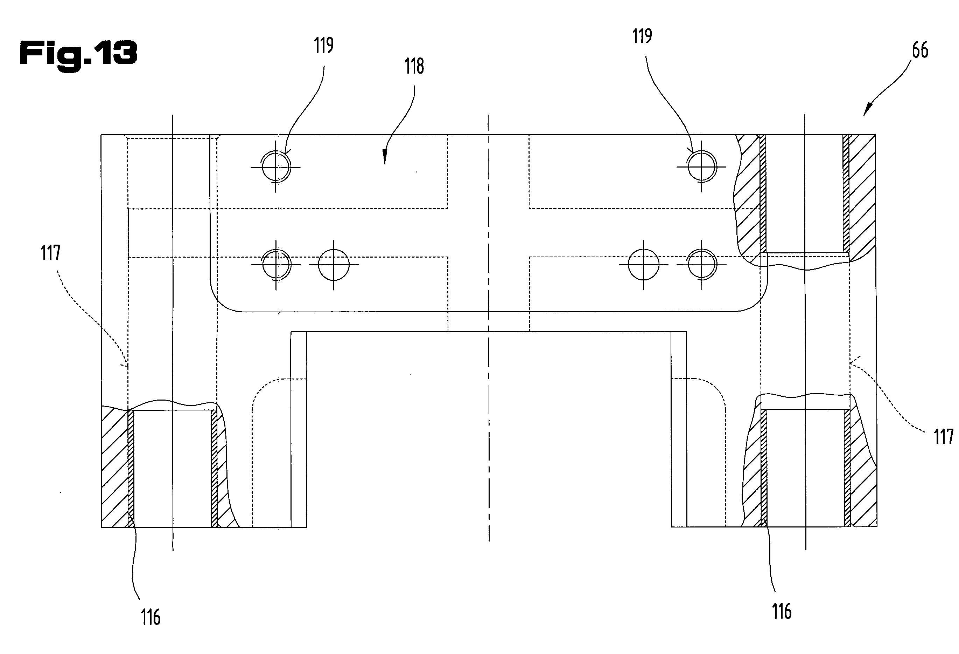

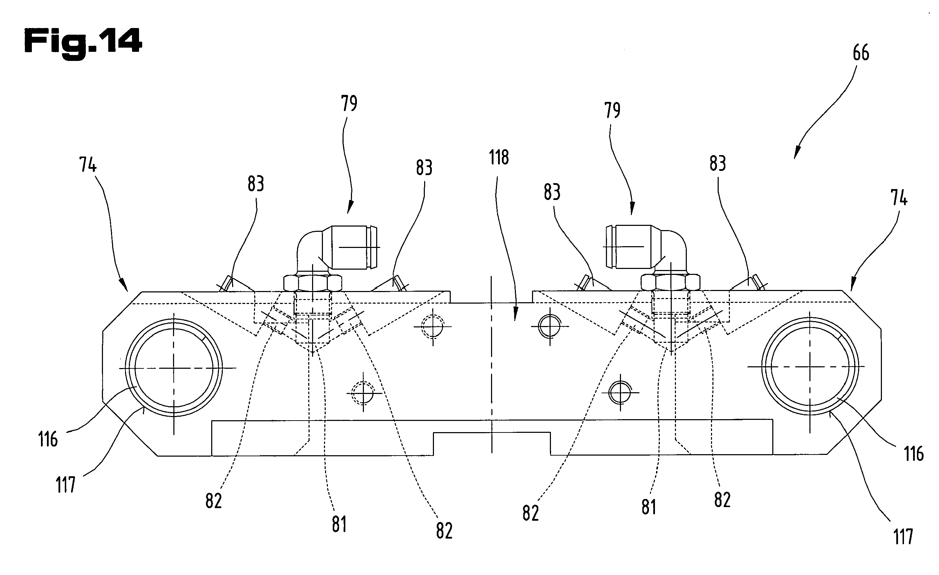

In den gemeinsam beschriebenen Fig. 13 und 14 ist der prismatische Führungsschlitten 66 in unterschiedlichen Ansichten dargestellt. Der Führungsschlitten 66 weist mit Führungsbuchsen 116 ausgestattete Bohrungen 117 auf. Die Verstelleinrichtungen 31 sind im wesentlichen entlang der in diesen Fig. nicht weiters dargestellten Führungselemente 34 spielfrei geführt. Natürlich können als Führungsbuchsen 116 alle aus dem Stand der Technik bekannten Gleitlagerbuchsen, Kugelumlaufbuchsen etc. eingesetzt werden. Weiters ist auch von Vorteil, dass der Führungsschlitten 66 als druckmittelübertragende Verteilerleiste 118 ausgebildet ist, wonach in dieser Ausführung zweckmäßig über zumindest einen Strömungskanal 81 mehrere Verteilungskanäle 82 gleichzeitig druckmittelbeaufschlagbar sind. Der durch eine Sacklochbohrung gebildete Strömungskanal 81 ist bevorzugt senkrecht zu den ebenfalls als Sackloch ausgebildeten Verteilungskanälen 82 ausgerichtet. Natürlich besteht auch die Möglichkeit, dass der als pneumatische oder hydraulische Verteilerleiste 118 ausgebildete Führungsschlitten 66 Schaltmodule, wie beispielsweise Wegeventile, Rückschlagventile, Drosselventile etc., integriert oder dass diese unmittelbar auf dem Führungsschlitten 66 aufgebaut sind. Selbstverständlich können auch eine Logikinformation oder eine Businformation verarbeitende Teile einer Steuereinrichtung in den Führungsschlitten 66 integriert und/oder auf diesem unmittelbar aufgebaut werden.

Hinsichtlich der Ausbildung der elektrischen und/oder pneumatischen und/oder hydraulischen Verteilerleiste 118 wird die diesbezügliche, detaillierte Offenbarung aus der WO 99/09462 A zum Gegenstand dieser Offenbarung gemacht.

Weiters ist der Führungsschlitten 66 mit Gewindebohrungen 119 für die lösbare Befestigung des Tragkörpers 62 ausgestattet.

In den gemeinsam beschriebenen Fig. 15 und 16 ist die Spielausgleichsvorrichtung 44 in unterschiedlichen Ansichten dargestellt. Diese umfaßt einen in etwa prismatischen Grundkörper 120, in dem zwischen zwei gegenüberliegenden Vorsprüngen 121 eine vertieft angeordnete Aussparung 122 angeordnet ist. Zwei der Aussparung 122 zugeordnete, relativ zueinander verstellbare Stellelemente 123 weisen einander zugewandte, geneigt verlaufende Keilflächen bzw. Stellflächen 124 auf, so dass durch das Anbringen einer Druckkraft in zumindest schräg zur Keil- bzw. Stellfläche 124 verlaufender Richtung eine Verstellung eines Befestigungsflansches 125 in zu den Stellelementen 123 axialer Richtung möglich ist. Der Befestigungsflansch 125 weist einen etwa T-förmigen Querschnitt auf und hintergreift zumindest bereichsweise eine in dem Betätigungselement 77 der Betätigungs- und/oder Arretiervorrichtung 42 (wie nicht weiters dargestellt) angeordnete Aussparung. Hiermit ist eine formschlüssige Verbindung zwischen dem Betätigungselement 77 und dem Befestigungsflansch 125 der Spielausgleichsvorrichtung 44 hergestellt.

Wie in diesem Ausführungsbeispiel gezeigt, wird die Druckkraft bzw. Verstellkraft über in den Grundkörper 120 angeordnete, mit einer Schraubengewindeanordnung versehene Gewindestifte 126 aufgebracht und über diese eine Relativverstellung zwischen den Stellelementen 123 ermöglicht. Das mit zumindest einer Verstellkraft beaufschlagbare Stellelement 123 ist zweckmäßig im Bereich seiner halben Höhe mit einem Längsschlitz 127 versehen, in den ein freies Ende eines Befestigungs- und/oder Zentrierelementes 128, insbesondere eine Schraubenanordnung, vorragt. Zweckmäßig ist die Verstellkraft senkrecht auf die Verstellbewegung des Befestigungsflansches 125 ausgerichtet, so dass infolge der Anordnung des Längsschlitzes 127 in dem mit der Verstellkraft beaufschlagten Stellelement 123 und durch die Anordnung der geneigten keilförmigen Stellflächen 124 eine Relativverstellung der beiden Stellelemente 123 zueinander und somit eine Variierung des Verstellweges des Befestigungsflansches 125 ermöglicht wird. Durch die mögliche Variierung des Verstellweges des Befestigungsflansches 125 kann ein durch fertigungsbedingte Toleranzen oder ein durch reibungsbedingte Verschleiße vorhandenes Spiel ausgeglichen werden.

Eine andere Ausführung einer Spielausgleichsvorrichtung 44 besteht darin, dass zwischen dem Grundkörper 120 und zumindest einem Stellelement 123 elastische Rückstellelemente angeordnet sind, die mit einer vorbestimmbaren Anpreßkraft den Befestigungsflansch 125 auf das Betätigungselement 77 der Betätigungs- und/oder Arretiervorrichtung 42 und auf das Lagerelement 98 des Stellhebels 69 wirken, so dass selbsttätig ein Spielausgleich durchgeführt wird. Natürlich kann die Druck- bzw. Verstellkraft durch alle aus dem Stand der Technik bekannte pneumatische oder hydraulische oder elektrische etc. Stellantriebe zur Einstellung eines Verstellweges des Betätigungsflansches 125 aufgebracht werden.

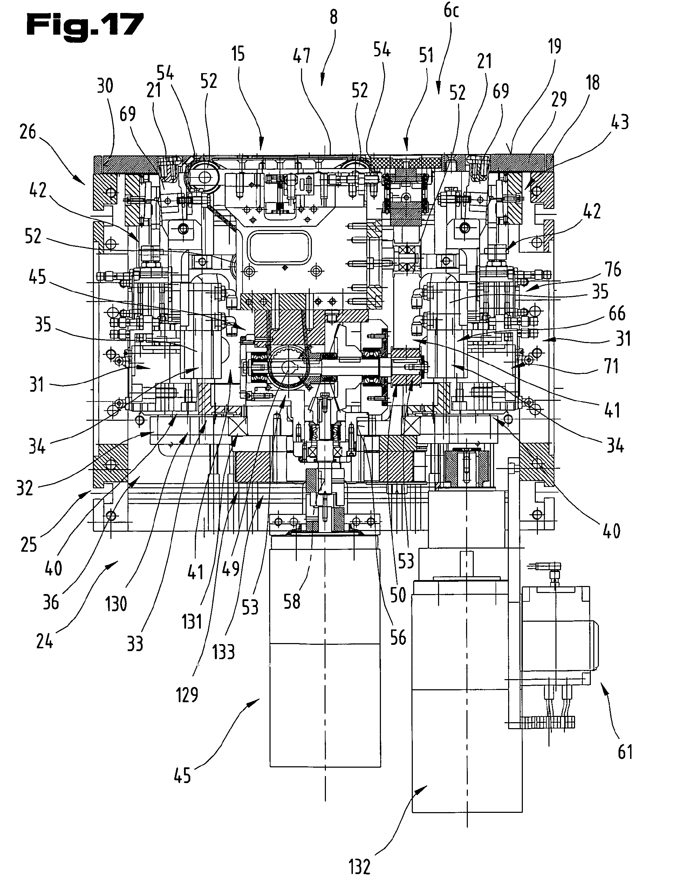

In der Fig. 17 ist ein weiterer Förderabschnitt 6c, insbesondere die Knotenstation 8, gezeigt, bei welchem der Werkstückträger 2 lagegleich bzw. positionsgleich oder lageverändert dem weiteren Förderabschnitt 5, insbesondere der Transportstation 7, weitergeleitet wird. Die erfindungsgemäße Knotenstation 8 umfaßt den durch den unteren und oberen Rahmenteil 25, 26 gebildeten Grundrahmen 24, zwischen welchen sich die Seitenwände erstrecken und zumindest bereichsweise das zumindest eine, insbesondere mehrere Verstelleinrichtungen 31 aufnehmende Traggestell 32 umgrenzen. Der etwa quadratisch ausgebildete Grundrahmen 24 der Knotenstation 8 weist im Bereich der Seitenwände zur einfacheren Montage oder Wartung etc. etwa rechteckförmige Zugangsöffnungen auf. Das modular aufgebaute Traggestell 32 weist die parallel zur der Transportebene 19 des Drehtisches 29 verlaufende und mit dem unteren Rahmenteil 25 des Grundrahmens 24 lösbar befestigte mehreckige, insbesondere achteckige Trägerplatte 33 und senkrecht auf diese ausgerichtete Führungselemente 34 bzw. die diese bildende Führungsstangen 35 auf. Der Drehtisch 29 ist in der in der Tischplatte 18 angeordneten Ausnehmung 30 verdrehbeweglich angeordnet. Das Traggestell 32 und die Verstelleinrichtungen 31 bilden eine auswechselbar mit dem Grundrahmen 24 verbundene Baueinheit 36. Im äußeren Randbereich der Seitenzwischenbereiche 40 der Trägerplatte 33 sind die ausgehend von der Trägerplatte 33 sich in Richtung des Drehtisches 29 erstreckende, in etwa streifenförmige Stützelemente 41 angeordnet, die über lösbare Befestigungsmittel mit der Trägerplatte 33 verbunden sind. Der über Befestigungsmittel mit den Stützelementen 41 lösbar verbundene Drehtisch 29 weist in zur Förderrichtung ― gemäß Pfeil 16 ― paralleler Richtung die von den Vorschubvorrichtungen 15, 51 durchsetzten Ausnehmungen 54 auf. Die Vorschubvorrichtungen 15, 51 umfassen die Umlenkrollen 52 bzw. die Antriebsrollen 53, um die das endlose Antriebsorgan 47 umgelenkt wird. Das Antriebsorgan 47 kann beispielsweise durch einen doppelverzahnten Zahnriemen gebildet werden. Die beiden Vorschubvorrichtungen 15, 51 werden über die Antriebsanordnung 45 und unter Zwischenschaltung der Getriebeanordnung 46 jeweils mit gleicher Umfangsgeschwindigkeit angetrieben. Zweckmäßig ist die Getriebeanordnung 46, um eine möglichst kleine Bauweise zu erreichen, durch ein Planetenradgetriebe gebildet, das den Antriebteil 48 und die Abtriebteile 49, 50 aufweist, wovon die Abtriebteile 49, 50 als Antriebsrollen 53 für die Vorschubvorrichtungen 15, 51 ausgebildet sind. Derartige, im wesentlichen wartungsfreie Getriebeanordnungen 46 sind bereits allgemeiner Stand der Technik.

Zur Ausübung einer Verdrehbewegung des mit dem Traggestell 32 verbundenen Drehtisches 29 ist das Traggestell 32 mit dem auf diesen angeordneten Verstelleinrichtungen 31 verdrehbeweglich gelagert. Eine zwischen einem konzentrisch um die Mittelachse 58 umlaufenden Fortsatz 129 des Traggestelles 32 und einer mit dem unteren Grundrahmen 25 verbundenen Grundplatte 130 angeordnete Lagervorrichtung 131 stützt die gesamte Baueinheit 36 ab. Derartige hohe Kräfte aufnehmende Lager sind bereits allgemeiner Stand der Technik und können beispielsweise durch ein doppelreihiges Radialrillenkugellager etc. gebildet werden. Ein Großteil auftretender Kräfte bzw. Momente, welche insbesondere parallel oder schräg zur Transportebene 19 einwirken, beispielsweise während eines Zerspannungsvorganges etc., wird über die Führungsleisten 21 und Stellhebel 69 unmittelbar auf die gegenüberliegenden Grundkörper 120 und auf die Stützelemente 41 übertragen.

Eine zu der Antriebsanordnung 45 für die Vorschubbewegung des Werkstückträgers 2 versetzt angeordnete und ebenfalls mit dem Grundrahmen 24 verbundene Antriebsanordnung 132 für die Verdrehbewegung des sich auf dem Drehtisch 29 befindlichen Werkstückträgers 2 (wie in dieser Fig. nicht dargestellt) ist mit einem mit dem Traggestell 32 verbundenen Antriebsmittel 133 antriebsverbunden. Zur schlupffreien Übertragung eines Antriebsmomentes der Antriebsanordnung 132 auf das Antriebsmittel 133 wird zweckmäßig eine Stirnrad-Zahnriemenanordnung eingesetzt. Die Antriebsanordnung 132 kann natürlich aus allen aus dem Stand der Technik bekannten Elektromotoren, wie beispielsweise Asynchronmotoren, Schrittschaltmotoren, Servomotoren etc., gebildet werden. Die Antriebsanordnung 132 ist ebenfalls auswechselbar mit dem Grundrahmen 24 verbunden.

Bei Verwendung eines Asynchronmotors werden die Verschwenkwege durch mechanische Anschlagelemente begrenzt. Es sind dabei jedoch nur vorbestimmbare Verschwenkwege möglich. Alternativ dazu wäre durch die Verwendung eines Schrittschaltmotors oder Servomotors jede beliebige, durch Programmierung frei programmierbare Stellung bzw. jeder Verschwenkweg des Drehtisches 29 bzw. des Werkstückträgers 2 möglich.

Die konstruktive Ausbildung sowie die Konstruktion der die Verstelleinrichtungen 31 bildenden Höhenverstellvorrichtungen 43 und Betätigungs- und/oder Arretiervorrichtungen 42 sind lt. den zuvor beschriebenen Figuren zu übernehmen.

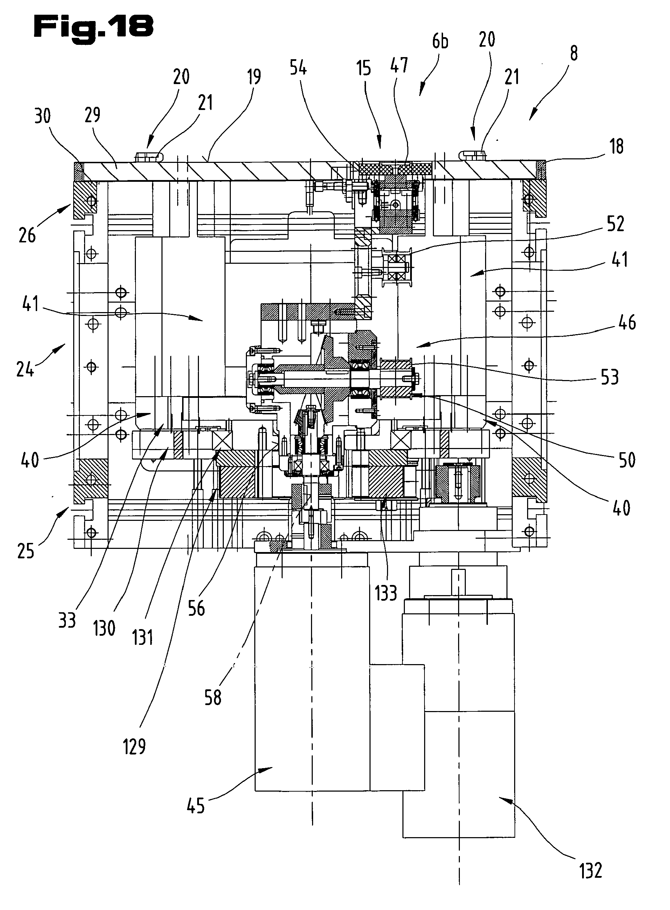

In der Fig. 18 ist eine andere Ausführungsvariante des Förderabschnittes 6b bzw. der Knotenstation 8 gezeigt. Diese Ausführung ermöglicht die Übergabe des Werkstückträgers 2 in einer veränderten Lage in einem der Förderabschnitte 5 bzw. Transportstationen 7. Diese Knotenstation 8 weist in zur Förderrichtung - gemäß Pfeil 16 - paralleler Richtung und in einer dazu querenden Richtung zwei voneinander distanzierte und ortsfest mit einem Drehtisch 29 verbundene Führungsbahnen 20 bzw. die diese bildenden Führungsleisten 21 auf. Diese sind über Befestigungsmittel auswechselbar mit dem Drehtisch 29 verbunden. Die mehreckig, insbesondere achteckig ausgebildete, im äußeren Randbereich der Seitenzwischenbereiche 40 die Stützelemente 41 aufnehmende Trägerplatte 33 ist über die zwischen der Trägerplatte 33 und der mit dem unteren Rahmenteil 25 des Grundrahmens 24 bewegungsfest verbundenen Grundplatte 130 angeordnete Lagervorrichtung 131 verdrehbeweglich gelagert. Die Tischplatte 29 ist über die Stützelemente 41 mit der Trägerplatte 33 verbunden, so dass bei einer Betätigung der Antriebsanordnung 132 ein Drehmoment auf das Antriebsmittel 133 übertragen und der Drehtisch 29 um einen vorbestimmbaren Verstellweg verschwenkt wird. Die mit dem um die Mittelachse 58 konzentrisch umlaufenden Fortsatz 129 versehene Trägerplatte 33 ist mit dem Antriebsmittel 133 bewegungsverbunden und überträgt somit das Drehmoment der Antriebsanordnung 132 auf den Drehtisch 29.

Die die Ausnehmung 54 in dem Drehtisch 29 durchsetzende Vorschubvorrichtung 15 ist mit der Antriebsanordnung 45 und unter Zwischenschaltung der in der Aussparung 56 in der Trägerplatte 33 angeordneten Getriebeanordnung 46 antriebsverbunden. Die Vorschubvorrichtung 15 umfaßt die Umlenkrollen 52 und die Antriebsrolle 53, um die das endlose Antriebsorgan 47 umgelenkt wird. Die Antriebsrolle 53 wird dabei durch den Abtriebteil 50 der Getriebeanordnung 46 gebildet. Die auf dem oberen Rahmenteil 26 aufgesetzte Tischplatte 18 ist mit der den kreisrunden Drehtisch 29 aufnehmenden Ausnehmung 30 ausgestattet, wobei der Drehtisch 29 zumindest geringfügig zu der Auflagefläche für die Tischplatte 18 beabstandet ist. Dieser Abstand ist durch die Einbaumaße der Lagervorrichtung 131 vorbestimmbar ausgebildet.

Der Vorschubvorrichtung 15 in der Knotenstation 8 ist ein Stellelement, insbesondere ein Pneumatikzylinder, Hydraulikzylinder etc., zugeordnet, das das Antriebsorgan 47 in zur Transportebene 19 senkrechter Richtung zustellt und das mit dem Antriebsmittel des Werkstückträgers 2 korrespondierende Antriebsorgan 47 in Eingriff bringt.

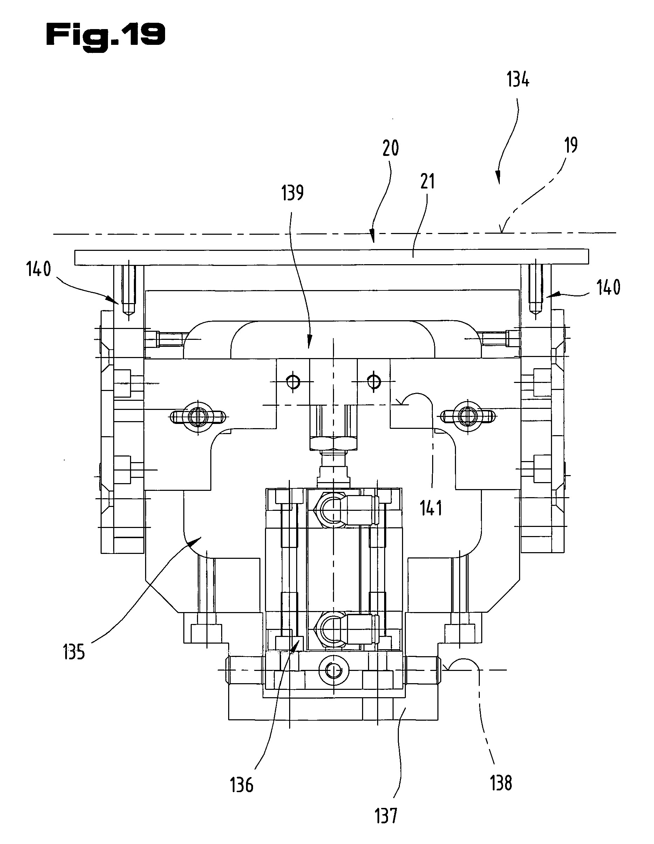

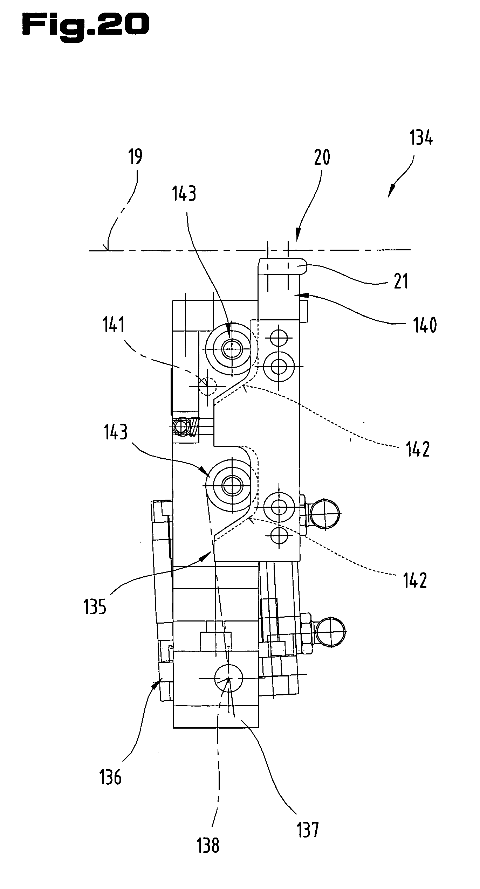

In den gemeinsam beschriebenen Fig. 19 und 20 ist eine weitere Ausführungsvariante einer Verstelleinrichtung 134 in Seitenansicht und geschnitten gezeigt. Die Verstelleinrichtung 134 umfaßt einen in etwa prismatischen Tragkörper 135, dem auf einer der Transportebene 19 gegenüberliegenden Seite ein einen Stellantrieb 136 verschwenkbeweglich aufnehmendes auswechselbares Befestigungselement 137 zugeordnet ist. Der durch einen Linearantrieb gebildete Stellantrieb 136 ist an einem dem Befestigungselement 137 zugewandten Endbereich mit einer von einem Schwenkzapfen durchsetzten Arretierplatte versehen, so dass der Stellantrieb 136 um eine parallel zu der Transportebene 19 verlaufende Achse 138 verschwenkbeweglich gelagert ist. Ein freies Ende einer Kolbenstange des Stellantriebes 136 ist mit vorspringenden Teilen 139 von Stellhebeln 140 um eine Schwenkachse 141 verschwenkbeweglich gelagert verbunden. Die mit über einen Stellantrieb 136 betätigbaren Stellhebel 140 der Verstelleinrichtung 134 sind jeweils mit zumindest einer, zweckmäßig mehreren, beispielsweise mit zwei in zur Transportebene 19 senkrechter Richtung übereinander angeordneten spiegelsymmetrischen Kulissenbahnen 142 versehen. Wenigstens ein Lagerelement 143, insbesondere ein Wälzlager, ist auf der Kulissenbahn 142 abgestützt. Ein erster parallel zueinander verlaufender Teilbereich der Kulissenbahnen 142 ist zumindest geringfügig geneigt verlaufend zu der Transportebene 19 ausgebildet. Ein weiterer, an den geneigten Teilbereich in senkrechter Verstellrichtung anschließender weiterer Teilbereich der Kulissenbahnen 142 verläuft senkrecht zur Transportebene 19. Die die Führungsbahnen 20 aufnehmenden Stellhebel 140 sind zum Eingriff mit den Vertiefungen 108 der Führungsorgane 106 (wie in dieser Fig. nicht dargestellt) entgegen der Wirkung von elastischen Rückstellelementen aus der Ruhestellung in die Eingriffsstellung in einer zur Neigung des Teilbereiches der Kulissenbahn 142 paralleler Richtung verschwenk- bzw. verschiebbar ausgebildet. Das entgegen der Verstellung wirkende Rückstellelement wird bevorzugt durch zumindest eine Federanordnung, insbesondere eine Zugfeder, die zwischen dem Tragkörper 135 und den Stellhebeln 140 angeordnet ist, gebildet. Die den Kulissenbahnen 142 zugeordneten Lagerelemente 143 sind seitlich am Tragkörper 135 und distanziert übereinander befestigt. Zur Seiten- und Längsführung der Stellhebel 140 sind diese zwischen zumindest zwei am Tragkörper 135 befestigte Führungsteile angeordnet. In der Ruhestellung verläuft eine Längsmittelachse des Stellantriebes 136 zumindest geringfügig geneigt zu einer senkrecht zu der Transportebene 19 verlaufenden Achse, wohingegen in der Eingriffsstellung die Längsmittelachse senkrecht zu der Transportebene 19 ausgerichtet ist.

Wird der Stellantrieb 136 druckmittelbeaufschlagt, fährt die Kolbenstange aus und die sich in der Ruhestellung im in zur Transportebene 19 senkrechten Teilbereich befindlichen Lagerelemente 143 wälzen sich entlang des senkrechten Teilbereiches ab. Dabei werden die Stellhebel 140 senkrecht verstellt. Im geneigten Teilbereich werden die Stellhebel 140 durch das Abwälzen der Lagerelemente 143 entlang dessen in zur Transportebene 19 paralleler und senkrechter Richtung verstellt. Der für die Verstellung maßgebliche Teilbereich ist durch den geneigten Teilbereich gebildet, wohingegen der senkrechte Teilbereich im wesentlichen nur für die Ruhestellung bestimmt ist und daher nur einen geringen Verstellweg in senkrechter Richtung ermöglicht.

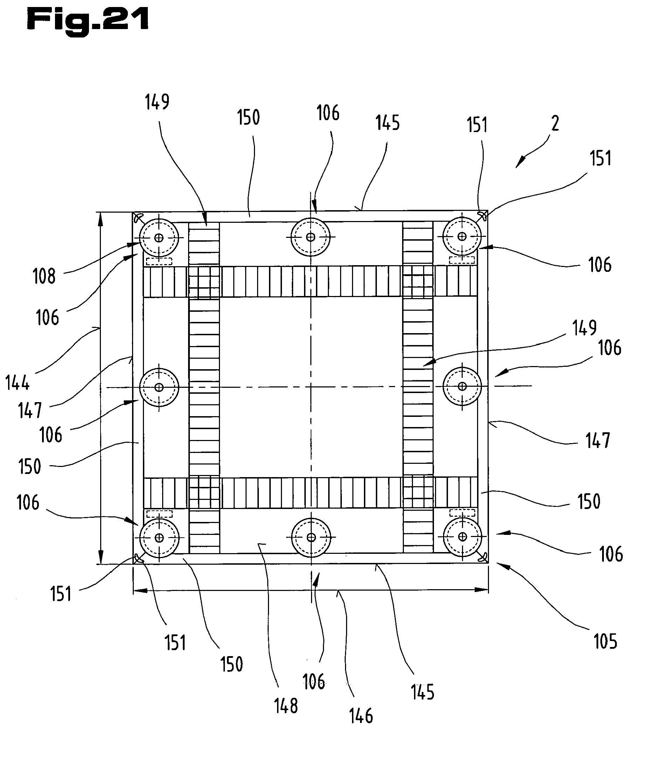

In den gemeinsam beschriebenen Fig. 21 bis 23 ist der Werkstückträger 2 in unterschiedlichen Ansichten dargestellt. Eine Breite 144 distanziert zwei parallel zueinander verlaufende Längsseitenflächen 145, welche rechtwinkelig zu durch eine Länge 146 distanzierten Querseitenflächen 147 verlaufen. Zweckmäßig weist der Werkstückträger 2 die gleiche Länge 146 und Breite 144 auf. Eine rechtwinkelig zu den Längsseitenflächen 145 und Querseitenflächen 147 verlaufende Unterseite 148 ist mit der Führungsvorrichtung 105 bzw. den diese bildenden Führungsorganen 106 und Antriebsmittel 149 versehen. Die den Vorschubvorrichtungen 15, 51 zugeordneten, sich kreuzenden Antriebsmittel 149 sind mit gegengleichen Querschnittsabmessungen wie die der Antriebsorgane 47 bzw. Zahnriemen versehen. An der Unterseite 148 des Werkstückträgers 2 angeordnete Verzahnungselemente bilden die Antriebsmittel 149. Die sich zwischen einer Oberseite und der Unterseite 148 senkrecht zu diesen erstreckenden Längsseitenflächen 145 und Querseitenflächen 147 sind in einem der Unterseite 148 nähergelegenen Randbereich durch geneigt zu der Unterseite 148 verlaufende Seitenflächen 150 begrenzt. Die Seitenflächen 150 verlaufen parallel zu den dem Werkstückträger 2 zugewandten Führungsflächen 110 der Führungsleisten 20. Die Unterseite 148 und die Oberseite des Werkstückträgers 2 verlaufen parallel zu der Transportebene 19.

Zwischen den zu den Längsseitenflächen 145 und Querseitenflächen 147 distanzierten und zueinander parallel verlaufenden Antriebsmittel 149 sind die die Führungsvorrichtung 105 bildenden Führungsorgane 106 angeordnet. Zweckmäßig sind im Bereich jeder Längsseitenfläche 145 und Querseitenfläche 147 zumindest zwei, insbesondere mehrere Führungsorgane 106 voneinander distanziert angeordnet. Die um eine senkrecht zu der Unterseite 148 verlaufenden Achse rotierenden Führungsorgane 106 sind in an der Unterseite 148 vorgesehene kreiszylindrische Vertiefungen angeordnet, so dass eine Stärke des Werkstückträgers 2 nicht überragt wird. Auf diese Weise kann ein kleinbauender, hohe Belastungen aufnehmender Werkstückträger 2 geschaffen werden. Die Anordnung der Führungsorgane 106 bildet ein Quadrat.

Der Werkstückträger 2 ist an jedem seiner Eckbereiche zweekmäßig an den geneigten Seitenflächen 150 mit Abstreif- und/oder Schmierelementen 151 ausgestattet, die die Führungsflächen 110 der Führungsleisten 21 überstreifen. Die Abstreif- und/oder Schmierelemente 151 sind durch einen ölgetränkten Kunststoff gebildet.

Natürlich besteht auch die Möglichkeit, dass die Antriebsmittel 149 eine eigene Baueinheit bilden und in einer für diese vorgesehene, sich über die gesamte Breite 144 und/oder Länge 146 erstreckende Ausnehmung eingesetzt sind. Diese können durch alle aus dem Stand der Technik bekannte Materialien, wie beispielsweise metallische, nichtmetallische Werkstoffe oder Kunststoffe, Faserkunststoffe etc., gebildet werden. Diese eine eigene Baueinheit bildenden Antriebsmittel 149 sind zweckmäßig über form- und/oder kraftschlüssige Verbindungselemente lösbar mit dem Werkstückträger 2 verbunden.

Des weiteren ist der Werkstückträger 2 an der Unterseite 148 zweckmäßig in den Eckbereichen zur unverwechselbaren Identifizierung desselben und zur unverwechselbaren Identifizierung seiner Position bzw. Lage in einem der Förderabschnitte 5, 6a, 6b, 6c mit Datenträgern, wie in der Fig. 21 in strichlierte Linien dargestellt, versehen. Zweckmäßig weist jeder Werkstückträger 2 vier in den Eckbereichen angeordnete Datenträger auf, die jeweils für sich einen eigenen Identifikationscode aufweisen, der von in den Förderabschnitten 5, 6a, 6b, 6c angeordneten Lese- und/oder Speicherstationen identifiziert und in einer zentralen Steuereinheit überprüft wird. Besonders vorteilhaft dabei ist, dass es durch die Anordnung der Datenträger möglich ist, den Werkstückträger 2 in einer beliebigen Lage in die Fertigungsanlage 1 einzubringen, wobei dieser nach Überfahren einer Lese- und/oder Speicherstation vorerst registriert bzw. identifiziert wird. Durch die unverwechselbare Codierung der Datenträger des Werkstückträgers 2 kann die Position bzw. Lage eindeutig bestimmt werden, worauf die Information an die Steuereinheit übermittelt und mit einem Vorgabewert, z.B. der Soll-Lage des Werkstückträgers 2, verglichen wird. Bei einer Abweichung z.B. der Ist-Lage des Werkstückträgers von der Soll-Lage wird zumindest ein Befehl zur Ansteuerung der Transport- und Knotenstationen 7, 8 ausgelöst. Der Werkstückträger 2 wird daraufhin unmittelbar in seiner Lage durch das ein- oder mehrmalige Verfahren desselben durch einen oder mehrere Knotenstationen 8 in eine für die Bearbeitung erforderliche Position bzw. Lage verbracht, wodurch unnötige und kostenintensive Stillstandszeiten vermieden werden können.

Wie in diesem Ausführungsbeispiel gezeigt, sind die Führungsorgane 106 durch Führungsrollen gebildet, die mit einer durch winkelig zueinander ausgebildete komplementäre Führungsflächen 109 begrenzte nutförmige Vertiefung 108 versehen sind, in welche die über die Verstelleinrichtung 31 betätigten Führungsleisten 21 - wie dies in Fig. 3 dargestellt ist - im wesentlichen formschlüssig eingreifen. Der zwischen zwei gegenüberliegenden Führungsleisten 21 und entlang dieser in Richtung der Höhe und Seite geführte Werkstückträger 2 stützt sich ausschließlich mit den Führungsflächen 109 der Führungsorgane 106 auf den Führungsflächen 110 der Führungsleisten 21 ab. Zweckmäßig ist zwischen der Unterseite 148 und der Transportebene 19 ein geringfügiger senkrechter Abstand 152 (siehe Fig. 10) ausgebildet. Die Vorschubvorrichtungen 15, 51 müssen zumindest um diesen Abstand zuzüglich einer Höhe der Verzahnungen des Antriebsorganes 47 verstellt werden.

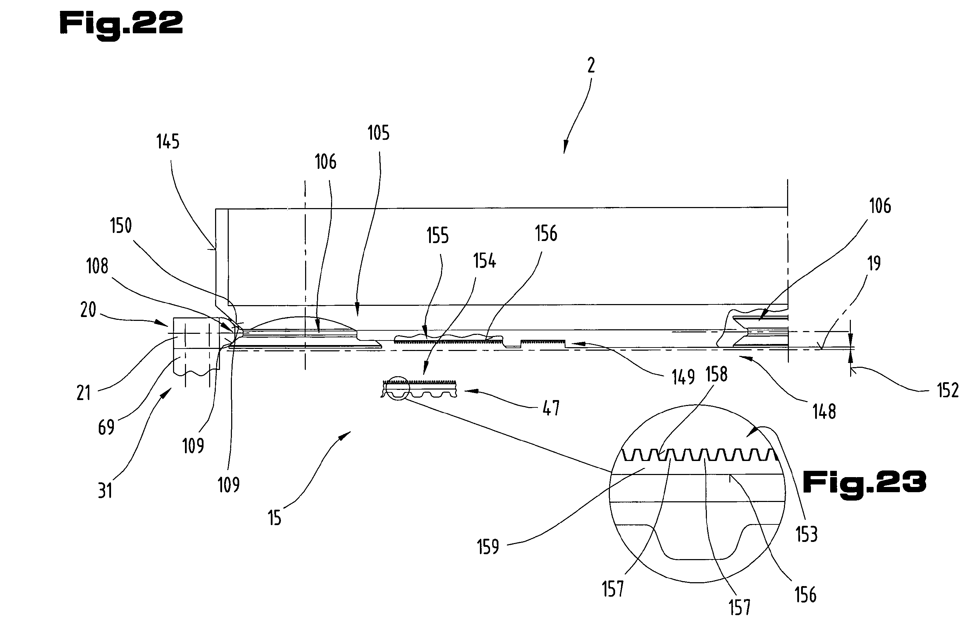

In den Fig. 22 und 23 ist eine andere Ausführung für die Vorschubvorrichtung 15 zur Übertragung einer Vorschubbewegung zwischen dem Antriebsorgan 47 und dem Antriebsmittel 149 des Werkstückträgers 2 gezeigt. Das Antriebsorgan 47 bzw. der Zahnriemen weist an einer der Unterseite 148 des Werkstückträgers 2 zugewandten Oberseite 153 und der Werkstückträger 2 an der Unterseite 148 streifenförmige Kupplungselemente 154, 155 auf, die jeweils an einer Aufnahmefläche 156 derselben form- und/oder kraftschlüssig aufgebracht sind. Die Kupplungselemente 154 weisen eine Vielzahl von Kupplungsteilen 157 mit zumindest geringfügig elastisch nachgiebigen Vorsprüngen 158 auf, wobei die Kupplungsteile 157 in vorteilhafter Weise auf einem flächig ausgebildeten Tragkörper 159 angeordnet sind. Das Antriebsorgan 47 ist zweckmäßig mehrschichtig aufgebaut, wovon eine der Schichten den Tragkörper 159 des Kupplungselementes 155 ausbildet, über dessen Oberfläche eine Vielzahl von zumindest schräg zu einer sie aufnehmenden Aufnahmefläche 156 ausgerichteten Kupplungsteilen 157 angeordnet ist. Die Kupplungsteile 157 weisen über deren Oberfläche verteilt angeordnete und diese überragende, geringfügig elastisch nachgiebige Vorsprünge 158 auf. Die in zur Transportebene 19 senkrecht verstellbaren Vorschubvorrichtungen 15, 51 bringen die einander zugewandten Kupplungselemente 154, 155 im wesentlichen formschlüssig in Eingriff, wobei die Kupplungselemente 154, 155 in jeder ihrer Relativlagen miteinander einkuppelbar sind.

Durch die Vielzahl der elastisch nachgiebigen Vorsprünge 158 oder der elastisch nachgiebigen Oberflächen der miteinander in Eingriff bringbaren Kupplungsteile 157 sind in der eingekuppelten fixierenden Eingriffsstellung die Vorschubvorrichtung 15; 51 und das Antriebsmittel 149 des Werkstückträgers 2 miteinander eingriffsverbunden und versetzen durch die Drehbewegung der Vorschubvorrichtung 15; 51 den Werkstückträger 2 in eine lineare Bewegung. Die in Längs- und/oder Breitenrichtung der Kupplungselemente 154, 155 voneinander distanzierten Kupplungsteile 157 weisen eine kegelstumpfförmige Querschnittsform auf, welche über den Umfang der Oberfläche zumindest einen, insbesondere mehrere in Längsrichtung voneinander distanzierte und radial umlaufende Vorsprünge 158 aufweisen. Die Vorsprünge 158 weisen einen mehreckigen, insbesondere dreieckförmigen, trapezförmigen etc. Querschnitt auf. Beispielsweise geneigt zueinander angeordnete Seitenflächen der elastisch nachgiebigen reversiblen Vorsprünge 158 verjüngen sich in radialer Richtung mit zunehmendem Abstand. Selbstverständlich kann die Oberfläche der Kupplungsteile 157 auch mit einer unterschiedliche Oberflächenrauhheiten bzw. eine Oberflächenstruktur - wie in diesen Fig. schematisch dargestellt ist - aufweisenden Schichte überdeckt werden. Wie aus dieser Fig. hervorgeht, sind die Kupplungselemente 154, 155 jeweils einteilig und materialeinheitlich ausgebildet. Natürlich können diese auch mehrteilig und aus unterschiedlichen Eigenschaften, z.B. Festigkeit, Elastizität, etc., aufweisende Materialien gebildet werden. Zweckmäßig werden beide Kupplungselemente 154, 155 mit dem gleichen Material, insbesondere Thermoplaste-Polymere, ausgebildet. Natürlich besteht auch die Möglichkeit, dass eines der beiden Kupplungselemente 154, 155 aus einem eine andere Festigkeit und/oder Zähigkeit aufweisenden Kunststoff, insbesondere Thermoplaste-Polymere, gebildet ist.

Die Kupplungselemente 154, 155 können natürlich mit allen aus dem Stand der Technik bekannten Verbindungsverfahren bzw. Verbindungsmittel, wie beispielsweise Schweißen, Kleben oder gegebenenfalls Nieten, Schrauben, etc. mit den jeweiligen Bauteilen verbunden werden.

Es sei noch darauf hingewiesen, dass die Kupplungselemente 154, 155 vereinfacht und in stark vergrößerter Darstellung und aus Gründen der besseren Übersicht in den Figuren nur wenige Kupplungsteile 157 dargestellt sind. Vielmehr sind die Kupplungselemente 154, 155 mit einer Vielzahl von Kupplungsteilen 157 ausgestattet.

Natürlich können die Kupplungselemente 154, 155 alle aus dem Stand der Technik bekannte Geometrien, Ausführungen und Abmessungen aufweisen.

Wie bereits erwähnt, erfolgt die Positionierung des Werkstückträgers 2 in dem Förderabschnitt 6a, 6b, 6c durch eine Steuereinheit. Natürlich besteht auch die Möglichkeit, dass in den Förderabschnitten 6a, 6c eine weitere, zu den bereits angestellten Führungsbahnen 20 quer verlaufende Führungsbahn 20 angehoben wird und als mechanisches Anschlagelement fungiert. Eine weitere Ausführung besteht darin, dass in zumindest einem der Förderabschnitte 6a; 6c bzw. in der Knotenstation 8 eine Führungsbahn 20 beim Einfahren des Werkstückträgers 2 in die Knotenstation 8 bereits für eine Eingriffsstellung verstellt ist und nur eine zu dieser parallel verlaufende Führungsbahn 20 zu verstellen ist oder für die Positionierung des Werkstückträgers 2 als Anschlagelement dient.

Wie bereits oben angeführt, sind mehrere hintereinander angeordnete Transportstationen 7 als Speicher- bzw. Pufferstrecke ausgebildet, in welcher sich gleichzeitig ein oder mehrere Werkstückträger 2 befinden können, wovon zumindest einer in eine der Transportstation 7 in Förderrichtung - gemäß Pfeil 16 - nachgeordnete Knotenstation 8 nach Freigabe, daher wenn der dem vorgeordneten Werkstückträger 2 nachgeordnete Werkstückträger 2 die Knotenstation 8 verläßt, verfährt, während der in Förderrichtung ― gemäß Pfeil 16 ― nachgeordnete Werkstückträger 2 in der Transportstation 7 um einen bestimmten Verfahrweg weitergefördert wird.

Natürlich besteht auch die Möglichkeit, dass die Speicher- bzw. Pufferstrecke eine gemeinsame Baueinheit bildet, welche über die Länge derselben zwei distanziert voneinander und parallel zueinander verlaufende Führungsbahnen 20 und eine zwischen diesen angeordnete Führungsvorrichtung 15 mit dem endlos umlaufenden Antriebsorgan 17 aufweist. Es sei an dieser Stelle darauf hingewiesen, dass die Vorschubvorrichtungen 15; 51 gegebenenfalls zwei Umlaufrichtungen ermöglichen, wodurch die Förderrichtung - gemäß Pfeil 16 - auch in entgegengesetzter Richtung möglich ist. Die mehrere hintereinander und voneinander zumindest geringfügig distanzierte Werkstückträger 2 aufnehmende Speicher- bzw. Pufferstrecke kann der dieser nachgeordneten Knotenstation 8 die Werkstückträger 2 getaktet und positioniert zuführen. Durch das kraft- und/oder formschlüssige Ineinandergreifen der Werkstückträger 2 mit der Vorschubvorrichtung 15 sind die hintereinander und voneinander geringfügig distanziert angeordneten Werkstückträger 2 starr miteinander gekoppelt, so dass, um die Produktivität der Fertigungsanlage 1 zu erhöhen, die Steuereinheit dafür sorgt, dass die Werkstückträger 2 in die Speicher- bzw. Pufferstrecke kontinuierlich zugeführt oder abgeführt werden.

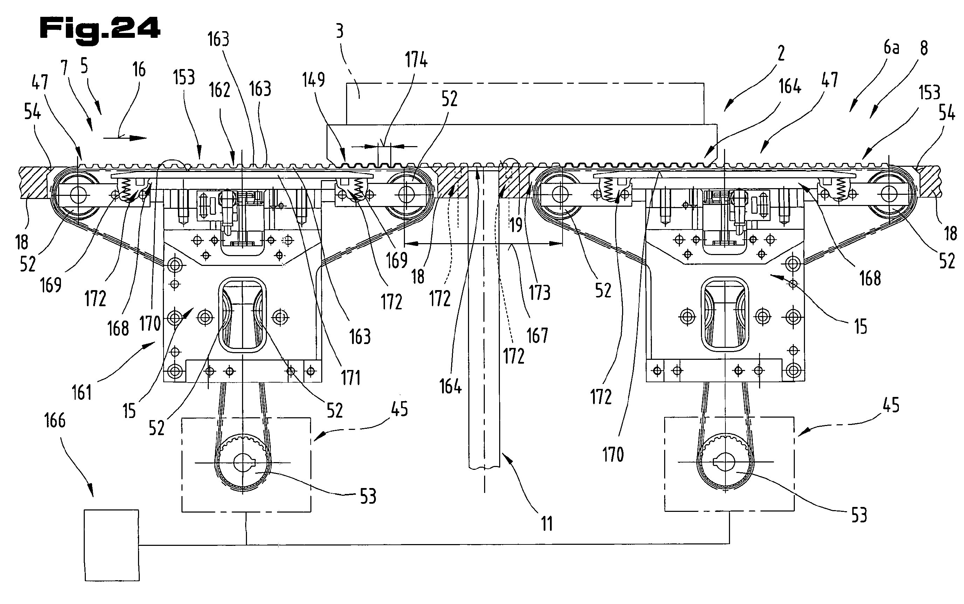

In der Fig. 24 sind Teilbereiche zweier unmittelbar aufeinanderfolgender Förderabschnitte 5; 6a; 6b; 6c bzw. die diese bildende Transportstationen 7 und Knotenstationen 8 mit den diesen zugeordneten Vorschubvorrichtungen 15; 51 gezeigt. Der die Bauteile 3 aufnehmende Werkstückträger 2 ist mit zumindest einer Vorschubvorrichtung 15 oder im Übergangsbereich mit zwei in Längsrichtung voneinander distanzierten Vorschubvorrichtungen 15 antriebsverbunden und wird in eine Förderrichtung ― gemäß Pfeil 16 ― positioniert und gegebenenfalls getaktet an einen weiteren Förderabschnitt 5; 6a; 6b; 6c transportiert. Die Vorschubvorrichtung 15; 51 weist mehrere an einem Rahmenteil 161 verdrehbeweglich aufgenommene Umlenkrollen 52 und die mit der Antriebsanordnung 45 antriebsverbundene Antriebsrolle 53 auf. Das um die Antriebsrolle 53 und den Umlenkrollen 52 endlos umlaufende Antriebsorgan 47 ist durch den doppelt verzahnten Zahnriemen gebildet. Die dem Werkstückträger 2 zugewandte Oberseite 153 des Zahnriemens wird durch mehrere in Längsrichtung durch Mitnahmeorgane 162 voneinander getrennte Angriffsmittel 163 gebildet. Das mit dem Zahnriemen korrespondierende Antriebsmittel 49 ist an der Unterseite 148 des Werkstückträgers 2 gleichermaßen mit durch Mitnahmeorgane 164 voneinander getrennten Eingriffsmittel 165 versehen. Die miteinander korrespondierenden Mitnahmeorgane 162, 164 und Eingriffsmittel 163, 165 weisen eine gleiche Geometrie in Hinblick auf Teilung, Zahnbreite, Zahnhöhe, Lückenweite, Flankenwinkel, Kopfhöhe etc. auf. In einer eingekuppelten Eingriffsstellung des Eingriffsmittels 163 des Zahnriemens in das Mitnahmeorgan 164 des Antriebsmittels 149 berühren sich lediglich die geneigt zueinander verlaufenden Zahnflanken.

Zum positionierten und ruckfreien Überführen des Werkstückträgers 2 von der ersten Vorschubvorrichtung 15 des ersten Förderabschnittes 5 zur weiteren Vorschubvorrichtung 15 des weiteren Förderabschnittes 5; 6a; 6b; 6c ist ein synchroner Antrieb der beiden unabhängig voneinander angetriebenen Vorschubvorrichtungen 15 erforderlich. Die beiden Antriebsanordnungen 45 sind zweckmäßig über eine Verbindungsleitung, insbesondere eine Busleitung, mit einer dezentralen Steuereinheit 166 miteinander verbunden und übertragen über diese die zur Ansteuerung bzw. Regelung der Vorschubvorrichtungen 15 erforderlichen Befehle und/oder Datensätze. Derartige aus dem Stand der Technik bekannte, eine hohe Positioniergenauigkeit aufweisende Antriebsanordnungen 45, insbesondere Servomotoren, Schrittschaltmotoren etc., sind mit einem Inkrementalgeber, Encoder zur Festlegung einer Lage des Antriebsorganes 47 bzw. zumindest eines Mitnahmeorganes 162 oder Eingriffsmittels 163 ausgestattet. Durch den in der Steuereinheit 166 hinterlegten Regel- bzw. Rechenalgorithmus, wie beispielsweise neurale Netze, Fuzzy Logic etc., ist es möglich, die Relativlage des Antriebsorganes 47 jederzeit zu bestimmen und für die Regelung der weiteren nachgeordneten Antriebsanordnung 45 heranzuziehen.

Das mit einer vorbestimmbaren Umfangsgeschwindigkeit umlaufende Antriebsorgan 47 ergreift den aus einem vorgelagerten Förderabschnitt 5 herankommenden Werkstückträger 2 und ist gegebenenfalls zumindest kurzweilig formschlüssig mit einer Vorschubvorrichtung 15 antriebsverbunden. Durch den schlupffreien Antrieb des Antriebsorganes 47 und das schlupffreie Ineinandergreifen des Antriebsorganes 47 und Antriebsmittels 149 ist eine hohe Positioniergenauigkeit von kleiner 0,1 mm möglich. Zweckmäßig wird der zwischen den Mitnahmeorganen 164 gemessene Abstand 167 zwischen zwei Antriebsorganen 47 durch ein Mehrfaches der Teilung 175 der Antriebsmittel 149 gebildet.

Die in einem Speicher der Steuereinheit 166 abrufbar abgespeicherten Soll-Parameter, z.B. Sollwerte für die Lage, Drehzahl, Vorschubgeschwindigkeit etc., werden mit einem Ist-Parameter, z.B. Istwert der Lage des Antriebsorganes 47 der ersten Vorschubvorrichtung 15 verglichen und gegebenenfalls bei einer Abweichung angeglichen. Darauffolgend wird der Ist-Parameter, z.B. Istwert der Lage des Antriebsorganes 47, der weiteren Vorschubvorrichtung 15 in Abhängigkeit von dem eingestellten Soll-Parameter, z.B. Sollwert für die Lage der ersten vorgeordneten Vorschubvorrichtung 15, durch Veränderung der Drehzahl bzw. Vorschubgeschwindigkeit des Antriebsorganes 47 der weiteren Vorschubvorrichtung 15 an diesen angeglichen. Nach Referenzierung der Lagen der beiden Vorschubvorrichtungen 15 zueinander können die Antriebsanordnungen 45 und somit die Antriebsorgane 47 synchron, daher mit gleicher Drehzahl, angetrieben werden. Zumindest eine zwischen den in Förderrichtung ― gemäß Pfeil 16 - hintereinander angeordneten Umlenkrollen 52 angeordnete Rückstelleinrichtung 168 wird über elastische Rückstellelemente 169 entgegen der Wirkung der Gewichtskraft des Werkstückträgers 2 und Bauteiles 3 voreingestellt. Die Rückstelleinrichtung weist zudem eine eine Gleitfläche 170 aufweisende Gleitplatte 171 auf, auf welcher sich der Zahnriemen mit der Unterseite bereichsweise abstützt.

Beim Aufeinandertreffen zumindest eines Eingriffsmittels 163 des Zahnriemens und Eingriffsmittels 165 des Werkstückträgers 2 wird die schwimmend gelagerte Gleitplatte 171 in zur Förderrichtung - gemäß Pfeil 16 ― senkrechter Richtung und entgegen der Wirkung der elastischen Rückstellelemente 169 verstellt. Die Verstellung wird mittels zumindest eines Sensors 172 erfaßt und an die Steuereinheit 166 übermittelt. Der Sensor 172 kann natürlich durch alle aus dem Stand der Technik bekannten Sensoren, wie beispielsweise kapazitive Sensoren, Abstandssensoren etc., gebildet sein.

Der aus der ersten Vorschubvorrichtung 15 des Förderabschnittes 5 ausfahrende Werkstückträger 2 gelangt in den Eintrittsbereich 173 der weiteren Vorschubvorrichtung 15 des weiteren Förderabschnittes 5. Treffen Eingriffsmittel 163 und 165 aufeinander, so wird die Rückstelleinrichtung 168, insbesondere die Gleitplatte 171, um eine Zahnhöhe ausgelenkt. Dadurch wird das Signal oder der Befehl über den Sensor 172 an die Steuereinheit 166 weitergeleitet und dies bewirkt eine Veränderung der Drehzahl der Antriebsanordnung 45 der weiteren Vorschubvorrichtung 15, so dass aufgrund einer Differenz der ersten Vorschubvorrichtung 15 und der weiteren Vorschubvorrichtung 15 das Eingriffsmittel bzw. die Eingriffsmittel 163 in das bzw. die Mitnahmeorgane 164 des Zahnriemens formschlüssig ineinandergreifen und der Werkstückträger 2 gleichmäßig fortbewegt wird. Nach dem Ineinandergreifen der Eingriffsmittel 163 und der Mitnahmeorgane 164 wird die Rückstelleinrichtung 168 wieder in ihre Ausgangslage verbracht. Natürlich kann die Drehzahl der weiteren Vorschubvorrichtung 15 kurzzeitig gegenüber der Drehzahl der ersten Vorschubvorrichtung 15 erhöht oder gesenkt werden. Befinden sich beide Rückstelleinrichtungen 168 in deren ursprünglichen Ausgangslage, daher die Gleitplatte 171 in einer zur Transportebene 19 parallelen Richtung, werden die beiden Antriebsanordnungen 45 der Vorschubantriebe 15 synchron angetrieben, so dass der Werkstückträger 2 durch das formschlüssige Ineinandergreifen der Eingriffsmittel 163, 165 in die Mitnahmeorgane 162, 164, ohne im Werkstückträger 2 selbst Verspannungen hervorzurufen, fortbewegt wird.

Die Sensoren 172 sind über aus dem Stand der Technik bekannte Verbindungsleitungen, wie beispielsweise Busleitsysteme oder Dreileitersysteme, mit der Steuereinrichtung 166 verbunden. Natürlich besteht auch die Möglichkeit, dass alleinig durch die Vorschubbewegung das Eingriffsmittel 163 in das Mitnahmeorgan 164 selbsttätig einrastet.

Eine weitere Ausführungsvariante besteht auch darin, dass die Position des sich der ersten Vorschubvorrichtung 15 annähernden oder des von der ersten Vorschubvorrichtung 15 herausfahrenden Werkstückträgers 2 festgelegt wird, indem an einer vorbestimmbaren Stelle der Tischplatte 18 oder des Drehtisches 29 etc. zumindest ein den Verfahrweg erfassender Sensor 172, insbesondere ein Glasmaßstab, angeordnet ist, und nach Erfassung der Ist-Position des Werkstückträgers 2 die Ist-Lage des Antriebsorganes 47, insbesondere das dieses bildende Eingriffsmittel 163 und/oder Mitnahmeorgan 162, ermittelt und entsprechend den vorgegebenen Soll-Lagen ein Parameter des Antriebsmittels 149, insbesondere das dieses bildende Eingriffsmittel 165 und/oder Mitnahmeorgan 164, verändert wird. Durch die steuerungstechnische Wirkungsverbundenheit der durch den Glasmaßstab gebildeten Wegmeßvorrichtung und der Vorschubvorrichtung 15; 51 kann bei einer Veränderung eines einem Mehrfachen einer Teilung 174 der Antriebsmittel 149 am Werkstückträger 2 entsprechenden Abstandes 167 zum selbsttätigen Eingriff die Vorschubgeschwindigkeit verändert werden.

Natürlich ist es beispielsweise auch möglich, über die Flanken zumindest eines Mitnahmeorganes 162 die Relativlage des Antriebsmittels 149 zu dem Antriebsorgan 17; 47 der weiteren Vorschubvorrichtung 15 zu erfassen und an die Steuereinheit 166 zu übermitteln, wonach diese die Antriebsanordnung 45 der weiteren Vorschubvorrichtung 15 auffordert, die Relativlage des Antriebsorganes 17; 47 zu dem Antriebsmittel 149 derart zu verändern, dass der sich dem Eintrittsbereich 173 nähernde Werkstückträger 2 schlupffrei mit dem Antriebsorgan 17; 47 in Eingriff verbracht wird. Hierzu weist das Antriebsorgan 47 eine Teilung 175 auf, die gleich ausgebildet ist, wie eine Teilung 174 des Antriebsmittels 149 des Werkstückträgers 2. Bei einer Abweichung der Ist-Relativlage von einer Soll-Relativlage wird durch Änderung der Drehzahl bzw. Vorschubgeschwindigkeit des Antriebsorganes 17; 47 die Relativlage eingestellt.

Durch die Veränderung der Drehzahl bzw. Vorschubgeschwindigkeit zumindest einer der Vorschubvorrichtungen 15 kann der Abstand 167 auf ein Vielfaches der Teilung 174 des Antriebsmittels 149 eingestellt werden. Die Mitnahmeorgane 162, 165 des Antriebsmittels 149 und des Zahnriemens werden durch eine nutförmige Vertiefung gebildet, die einen im Querschnitt etwa V-förmigen oder trapezförmigen Querschnitt aufweisen.

Eine weitere Ausführung zum Überführen eines Werkstückträgers 2 von einem in einen der weiteren, unmittelbar nachfolgenden Förderabschnitte 5; 6a; 6b; 6c besteht darin, dass die Antriebsanordnung 45 für das erste Antriebsorgan 47 drehzahlgeregelt und die Antriebsanordnung 45 für das weitere Antriebsorgan 47 momentengeregelt wird. Treffen beim Übergang des Werkstückträgers 2 von der ersten Vorschubvorrichtung 15; 51 zur weiteren Vorschubvorrichtung 15; 51 die Eingriffsmittel 165 nicht exakt mit den Mitnahmeorganen 162 aufeinander, resultiert daraus eine erhöhte Antriebskraft bzw. ein Antriebsmoment zwischen der Flanke des Eingriffsmittels 165 und der Flanke des dem Mitnahmeorgan 162 nachfolgenden Eingriffsmittels 163, worauf unmittelbar zumindest eine der Antriebsanordnungen 45 kurzzeitig eine Drehzahlveränderung erfährt, bis die Antriebsanordnung 45 wieder ihren vorgegebenen Sollwert des Antriebsmomentes erreicht. Darauffolgend werden die gegebenenfalls unterschiedlichen Drehzahlen der beiden Vorschubvorrichtungen 15; 51 im Speicher der Steuereinheit 166 abrufbar abgelegt.

Es sei an dieser Stelle darauf hingewiesen, dass die erfindungsgemäße Fertigungsanlage 1 eine Vielzahl von Vorschubvorrichtungen 15; 51 aufweist, die vorzugsweise untereinander über Steuerleitungen mit der zentralen Steuereinheit 166 leitungsverbunden sind. Daher können alle Vorschubvorrichtungen 15; 51 untereinander kommunizieren.

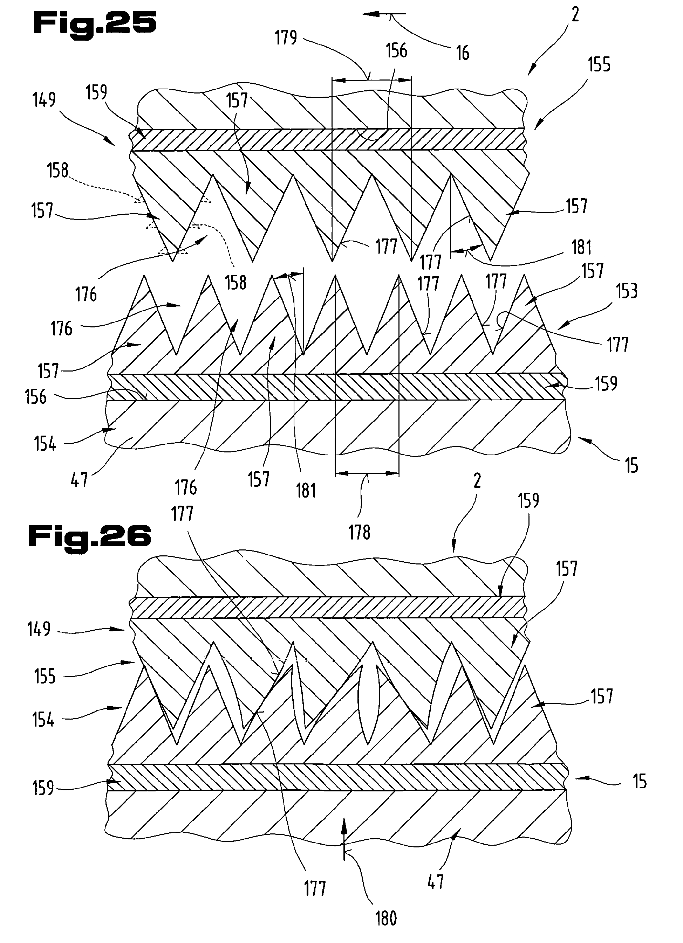

In den gemeinsam beschriebenen Fig. 25 bis 28 sind weitere Ausführungsformen der bereits in den Fig. 22 und 23 angeführten Kupplungselemente 154, 155 dargestellt, die jeweils an der Aufnahmefläche 156 des Werkstückträgers 2 und dem Antriebsorgan 47 bzw. Zahnriemen form- und/oder kraftschlüssig aufgebracht sind. Die Fig. 25 zeigt die sich außer Eingriff befindlichen und Fig. 26 die sich in Eingriff befindlichen Kupplungselemente 154, 155. Die miteinander in Eingriff bringbaren Kupplungselemente 154, 155 sind ein- oder mehrteilig bzw. ein- oder mehrschichtig aufgebaut, deren Kupplungsteile 157 zumindest geringfügig elastisch nachgiebig reversibel ausgebildet sind und zwischen diesen Aufnahmebereiche 176 für zumindest einen vom weiteren Kupplungselement 155 ausgebildeten Kupplungsteil 157 aufweisen. Wie in dieser bevorzugten Ausführungsvariante dargestellt, weisen die Kupplungsteile 157 einen pyramidenförmigen oder kegeligen etc. Querschnitt auf. Die eine Elastizität aufweisenden und über eine Aufnahmefläche 156 bevorzugt gleichmäßig verteilt angeordneten Kupplungsteile 157 sind in drei Raumrichtungen elastisch verformbar und reversibel ausgebildet und werden beim Anstellen der Vorschubvorrichtung 15; 51 in einer zur Förderrichtung ― gemäß Pfeil 16 - senkrechten Richtung mit zumindest einem Aufnahmebereich 176 des weiteren Kupplungselementes 155 formschlüssig in Eingriff verbracht oder verdrängt und/oder in sich eingedrückt bzw. elastisch deformiert. Die Kupplungselemente 154, 155 sind bevorzugt über eine Kleberschichte jeweils mit dem Werkstückträger 2 und dem Antriebsorgan 147 im Bereich der Aufnahmefläche 156 verbunden. Wie in dieser beispielhaften Ausführung gezeigt, ist das Kupplungselement 154, 155 mit einem sich zwischen den Kupplungsteilen 157 und der Oberfläche bzw. die diese bildende Aufnahmefläche 156 befindlichen flächigen Tragkörper 159 ausgestattet, auf welchem an einer der Aufnahmefläche 156 abgewandten Tragkörperoberfläche die Kupplungsteile 157 bevorzugt gleichmäßig verteilt angeordnet sind. Der mit den Kupplungsteilen 157 das einstückige Kupplungselement 154, 155 bildende Tragkörper 159 kann die gleichen oder zu den Kupplungsteilen 157 unterschiedlichen Eigenschaften in bezug auf Zähigkeit, Festigkeit, Elastizität etc. aufweisen. Die über die Tragkörperoberfläche des Tragkörpers 159 bevorzugt gleichmäßig verteilten Kupplungsteile 157 sind durch sich ausgehend von der Tragkörperoberfläche in abgewandter Richtung aufeinander erstreckende Stützflächen 177 bildende Seitenflanken begrenzt. Die Kupplungsteile 157 können natürlich mit den die Stützflächen 177 überragenden, wulstförmigen Vorsprüngen 158 versehen ― wie in strichlierten Linien in der Fig. 25 dargestellt ist ― werden, die in Richtung einer Höhe der Kupplungsteile 157 zumindest geringfügig voneinander beabstandet angeordnet sind. Selbstverständlich besteht auch die Möglichkeit, dass im Bereich einer Profiloberfläche bzw. der diese bildenden Stützflächen 177 der Kupplungsteile 157 eine diese vollflächig überdeckende Schichte bzw. der diese bildende Vorsprung 158 - wie dies bereits in der Fig. 22 und 23 dargestellt ist - angeordnet ist, der elastisch nachgiebig reversibel ausgebildet ist. Diese Schichte kann durch einen zu den Kupplungsteilen 157 unterschiedliche Eigenschaften aufweisenden Kunststoff gebildet werden. Zweckmäßig ist die Schichte durch ein eine höhere Elastizität aufweisendes Material, insbesondere Kunststoff, gebildet. Die Schichte an sich weist eine zweckmäßig wellig ausgebildete Eingriffs- bzw. Profiloberfläche auf. Die einander gegenüberliegenden Kupplungselemente 154, 155 können, wie aus der Fig. 25 zu ersehen ist, unterschiedliche Teilungsabstände 178, 179 zwischen zwei unmittelbar hintereinander bzw. nebeneinander angeordneten Kupplungsteilen 157 eines Kupplungselementes 154; 155 aufweisen, so dass die einander gegenüberliegenden und miteinander in Eingriff bringbaren Kupplungselemente 154, 155 infolge des Anhebens der Vorschubvorrichtung 15; 51 ― gemäß Pfeil 180 - Teilbereiche der Kupplungselemente 154; 155, insbesondere die Kupplungsteile 157, elastisch verformt werden, wie dies aus der Fig. 26 zu ersehen ist. Der mit den die Antriebsmittel 149 bildenden Kupplungselementen 155 versehene, entlang der Führungsbahnen 20 - wie in dieser Fig. nicht weiters dargestellt ― der Höhe und Seite nach geführte Werkstückträger 2 wird durch das Anheben - gemäß Pfeil 180 - der Vorschubvorrichtung 15; 51 bzw. mit dem das erste Kupplungselement 154 aufweisenden Antriebsorgan 47 miteinander form- und/oder kraftschlüssig in Eingriff verbracht. Befindet sich der Werkstückträger 2 unmittelbar in der Knotenstation 8, entspricht die Länge der sich miteinander in Eingriff befindlichen Kupplungsteile 157 der Kupplungselemente 154, 155 einer Länge des Kupplungselementes 155 am Werkstückträger 2. Dadurch kann der Werkstückträger 2 in der Knotenstation 8 als auch in den Transportstationen 7 exakt positioniert werden.

Dadurch besteht auch die Möglichkeit, dass die miteinander in Eingriff bringbaren Kupplungselemente 154, 155 die gleiche Teilung 178, 179 und eine unterschiedliche Anzahl von Kupplungsteilen 157 innerhalb derselben Länge aufweisen. Durch die Verschiebung bzw. Verlagerung zumindest eines Aufnahmebereiches 176 des ersten Kupplungselementes 154 gegenüber zumindest einem Kupplungsteil 157 wird ein in zur Längs- und/oder Breitenrichtung der in etwa streifenförmigen Kupplungselemente 154, 155 erhöhter Form- und/oder Kraftschluss bewirkt. Bei unterschiedlichen Teilungsabständen 178, 179 werden in den Aufnahmebereich 176 gleichzeitig mehrere Kupplungsteile 157 gezwängt, indem die Stützflächen 177 während des Ineinandergreifens der Kupplungsteile 157 der miteinander in Eingriff bringbaren Kupplungselemente 154, 155 aneinandergleiten. Dies wird in der Fig. 26 schematisch dargestellt. Um das Vordringen mehrerer Kupplungsteile 157 eines Kupplungselementes 154 in einen Aufnahmebereich 176 des weiteren Kupplungselementes 155 zu begünstigen, können die Flankenwinkel 181 eine unterschiedliche Neigung aufweisen. Durch die Vorgabe eines maximalen Verstellweges der anhebbaren Vorschubvorrichtung 15; 51 stützen sich in der Eingriffsstellung ausschließlich die Flanken der Kupplungsteile 157 aufeinander ab. Wird der Werkstückträger 2 aus einer Transport- oder Knotenstation 7; 8 bewegt, werden die sich in Eingriff befindlichen Kupplungsteile 157 durch die Relativbewegung des Werkstückträgers 2 zu dem Antriebsorgan 47 außer Eingriff verbracht. Während die Überdeckungslänge der sich in Eingriff befindlichen Kupplungsteile 157 beispielsweise im Bereich der Knotenstation 8 abnimmt, nimmt gleichermaßen die Überdeckungslänge der sich in Eingriff befindlichen Kupplungsteile 157 zwischen dem Werkstückträger 2 und dem Antriebsorgan 47 der der Knotenstation 8 nachgeordneten Transportstation 7 zu, so dass der Werkstückträger 2 ständig mit zumindest einer Vorschubvorrichtung 15; 51 in Antriebsverbindung steht. Das Kupplungselement 155 des Werkstückträgers 2 kann natürlich auch eine eigene Baueinheit bilden, die in eine an der Unterseite 148 des Werkstückträgers 2 vorgesehene Ausnehmung angeordnet wird. Dadurch ist das Kupplungselement 155 zumindest geringfügig zu der Transportebene 19 beabstandet.

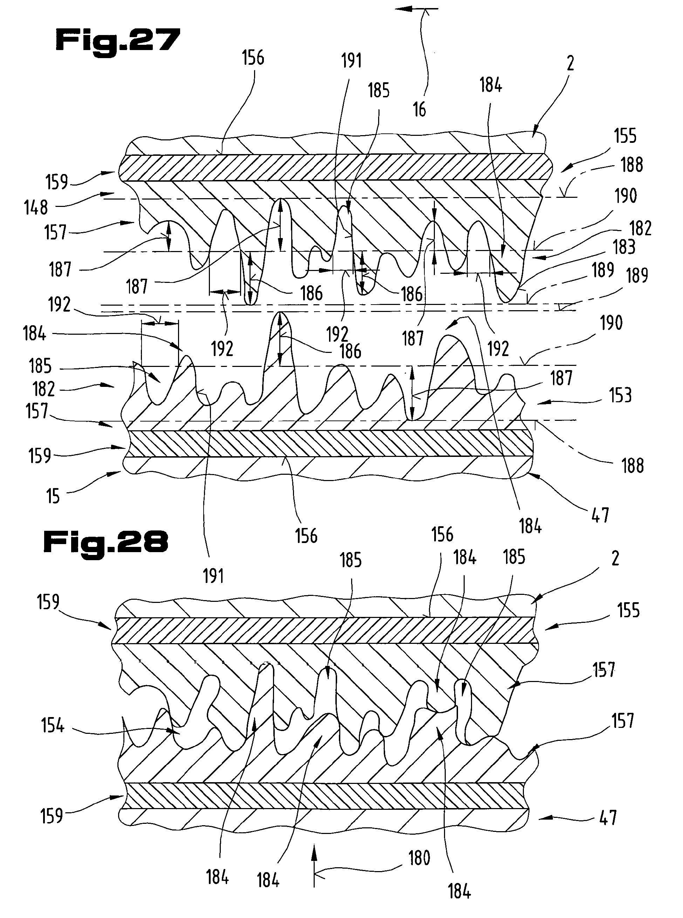

In den Fig. 27 und 28 sind weitere Ausführungsformen der Kupplungselemente 154, 155 dargestellt, wobei die in Fig. 27 dargestellten Kupplungselemente 154, 155 sich außer Eingriff und die in der Fig. 28 dargestellten Kupplungselemente 154, 155 sich in Eingriff befinden. In der vorliegenden Ausführung ist das Kupplungselement 154, 155 durch zumindest einen ein Oberflächenprofil 182 aufweisenden Kupplungsteil 157 gebildet, das eine regelmäßige oder unregelmäßige wiederkehrende Welligkeit 183 aufweist. Das Oberflächenprofil 182 ist durch mehrere nebeneinander angeordnete regelmäßig oder unregelmäßig verteilte Profilspitzen 184 und Profiltäler 185 gebildet, wobei eine maximale Höhe 186 und maximale Tiefe 187 durch ein Grundprofil 188 und ein Bezugsprofil 189 begrenzt ist. Zwischen dem Grund- und Bezugsprofil 188, 189 verlaufen die eine gleiche oder kleinere Höhe 186 oder Tiefe 187 aufweisenden Profilspitzen 184 und Profiltäler 185. Es sei darauf hingewiesen, dass die Höhe 186 und Tiefe 187 jeweils zwischen dem Grund- und Bezugsprofil 188, 189 und einem zwischen dem Grurid- und Bezugsprofil 188, 189 liegenden mittleren Profil 190 bemessen ist. Eine an dem mittleren Profil 190 und zwischen zwei zueinander benachbarten Profiloberflächen 191 bemessene Öffnungsweite 192 des Profiltales 185 kann zu den weiteren Öffnungsweiten 192 der weiteren Profiltäler 185 gleich oder unterschiedlich bemessen werden. Eines der Kupplungselemente 155 ist an der Oberseite 153 des Antriebsorganes 47 und das weitere Kupplungselement 154 an der Unterseite 148 des Werkstückträgers 2 angeordnet, wobei die Höhen 186 und Tiefen 187 der Profilspitzen 184 und Profiltäler 185 unterschiedlich ausgebildet sein können.

Wie aus der Fig. 28 besser zu ersehen ist, sind die Profilspitzen 184 und Profiltäler 185 der miteinander in Eingriff bringbaren Kupplungselemente 154, 155 elastisch nachgiebig reversibel ausgebildet, so dass beim Aufeinandertreffen bzw. Aneinanderstoßen zumindest zweier Profilspitzen 184 der Kupplungselemente 154, 155 diese derart elastisch verformt werden, dass durch das Aufeinandertreffen eine Materialverdrängung in das oder die zu der Profilspitze 184 benachbarte Profiltal 185 oder benachbarten Profiltäler 185 erfolgt und nur bereichsweise Profilspitzen 184 in etwa korrespondierende Profiltäler 185 aufgenommen werden. Durch die elastische Verformung der die Kupplungsteile 157 bildenden Profilspitzen 184 und Profiltäler 185 und unter Einwirkung einer Kraftbeaufschlagung der Vorschubvorrichtung 15; 51 - gemäß Pfeil 180 - wird ein erhöhter Anpreßdruck und somit eine Reibkraft zwischen den Kupplungselementen 154, 155 erreicht, so dass die miteinander einkuppelbaren und einrastbaren Kupplungselemente 154, 155 eine Vorschubbewegung des Werkstückträgers 2 ermöglichen. Wird die Vorschubvorrichtung 15; 51 in ihre Ausgangslage abgesenkt, verformen sich die Kupplungsteile 157 in Ihre ursprüngliche Ausgangslage selbsttätig zurück. Die Profilspitzen 184 und Profiltäler 185 der miteinander in Eingriff bringbaren Kupplungselemente 154, 155 befinden sich nur anteilsweise in einer ineinandergreifenden Eingriffsstellung. Besonders vorteilhaft dabei ist, dass es nunmehr möglich ist, dass bei einem Anteil der miteinander formschlüssig in Eingriff bringbaren Profilspitzen und Profiltäler 184, 185 von etwa 30 bis 100 %, insbesondere zwischen 50 und 90 %, beispielsweise 70 %, es ausreichend ist, die in zur Aufnahmefläche 156 paralleler und/oder schräger Richtung verlaufenden vorbestimmbaren Vorschubkräfte übertragen zu können. Der restliche form- und kraftschlüssig ineinandergreifende Anteil, daher 70 bis 0 %, insbesondere zwischen 50 und 10 %, beispielsweise 30 %, der Profilspitzen 184 und Profiltäler 185 werden bereichsweise elastisch verformt. Es sei darauf hingewiesen, dass der Anteil, bemessen in Prozent, in bezug auf die über die Tragkörperoberfläche verteilten Kupplungsteile 157 bzw. Profilspitzen 184 und Profiltäler 185 ausgelegt ist. Beispielsweise ist es auch möglich, dass eines der Kupplungselemente 154, 155 eine andere Eigenschaft, beispielsweise in bezug auf Festigkeit, Zähigkeit, Elastizitätsmodul etc., aufweist, was eine kraftniedrige Einformung zumindest einer Profilspitze 184 des ersten Kupplungselementes 154 in zumindest eine Profilspitze 184 des weiteren Kupplungselementes 155 ermöglicht. Dadurch kann indirekt die Höhe der zum Transport des Werkstückträgers 2 erforderlichen Vorschubkraft beeinflußt werden.

Es sei noch darauf hingewiesen, dass die Kupplungselemente 154, 155 vereinfacht und in stark vergrößerter Darstellung gezeigt sind.

Abschließend sei noch darauf hingewiesen, dass die Förderabschnitte 6a, 6b, 6c auch als Arbeitsstation 4 für die Bearbeitung der Bauteile 3 eingesetzt werden können. Des weiteren bilden Kanten der voneinander distanzierten und einander zugewandten Führungsbahnen 20 in den Förderabschnitten 6a, 6c ein Quadrat aus. Davon ist wechselweise jeweils ein Paar von Führungsbahnen 20 über die Verstelleinrichtung 31; 134 verstellbar ausgebildet. Außerdem ist ein zwischen den Rotationsachsen der in den Eckbereichen des Werkstückträgers 2 angeordneten Führungsrollen bemessener Längsabstand gleich oder zumindest geringfügig kleiner bemessen als eine Länge der Führungsbahnen 20 in den Knotenstationen 8. Dadurch ist der Werkstückträger 2 im wesentlichen über seine gesamte Länge 146 oder Breite 144 der Höhe und Seite nach geführt.

Der Ordnung halber sei abschließend darauf hingewiesen, dass zum besseren Verständnis der Fertigungsanlage 1 diese bzw. deren Bestandteile teilweise unmaßstäblich und/oder vergrößert und/oder verkleinert dargestellt wurden. Die den eigenständigen erfinderischen Lösungen zugrundeliegende Aufgabe kann der Beschreibung entnommen werden.

Vor allem können die einzelnen in den Fig. 1, 2, 3, 4, 5; 6, 7; 8, 9, 10, 11, 12; 13, 14; 15, 16; 17; 18; 19, 20; 21, 22, 23; 24; 25, 26, 27, 28 gezeigten Ausführungen und Maßnahmen den Gegenstand von eigenständigen erfindungsgemäßen Lösungen bilden. Die diesbezüglichen erfindungsgemäßen Aufgaben und Lösungen sind den Detailbeschreibungen dieser Figuren zu entnehmen.

### Bezugszeichenaufstellung

- 1: Fertigungsanlage
- 2: Werkstückträger
- 3: Bauteil
- 4: Arbeitsstation
- 5: Förderabschnitt

- 6a: Förderabschnitt
- 6b: Förderabschnitt
- 6c: Förderabschnitt
- 7: Transportstation
- 8: Knotenstation
- 9: Maschinengestell
- 10: Aufstellfläche

- 11: Abstützelement
- 12: Grundrahmen
- 13: Hauptförderung
- 14: Querförderung
- 15: Vorschubvorrichtung

- 16: Pfeil
- 17: Antriebsorgan
- 18: Tischplatte
- 19: Transportebene
- 20: Führungsbahn

- 21: Führungsleiste
- 22: Länge
- 23: Breite
- 24: Grundrahmen
- 25: Rahmenteil

- 26: Rahmenteil
- 27: Länge
- 28: Breite
- 29: Drehtisch
- 30: Ausnehmung

- 31: Verstelleinrichtung
- 32: Traggestell
- 33: Trägerplatte
- 34: Führungselement
- 35: Führungsstange

- 36: Baueinheit
- 37: Mittelachse
- 38: Mittelachse
- 39: Seitenbereich
- 40: Seitenzwischenbereich

- 41: Stützelement
- 42: Betätigungs- und/oder Arretiervorrichtung
- 43: Höhenverstellvorrichtung
- 44: Spielausgleichsvorrichtung
- 45: Antriebsanordnung

- 46: Getriebeanordnung
- 47: Antriebsorgan
- 48: Antriebteil
- 49: Abtriebteil
- 50: Abtriebteil

- 51: Vorschubvorrichtung
- 52: Umlenkrolle
- 53: Antriebsrolle
- 54: Ausnehmung
- 55: Getriebegehäuse

- 56: Aussparung
- 57: Mittelachse
- 58: Mittelachse
- 59: Steuermodul
- 60: Verbindungsleitung

- 61: Versorgungseinheit
- 62: Tragkörper
- 63: Höhenbegrenzungvorrichtung
- 64: Anschlagelement
- 65: Anschlagfläche

- 66: Führungsschlitten
- 67: Höhe
- 68: Länge
- 69: Stellhebel
- 70: Aussparung

- 71: Stellantrieb
- 72: Stützplatte
- 73: Kolbenstange
- 74: Führungsteilbereich
- 75: Stützfläche

- 76: Stellantrieb
- 77: Betätigungselement
- 78: Abfrageorgan
- 79: Anschlußelement
- 80: Verbindungsleitung

- 81: Strömungskanal
- 82: Verteilkanal
- 83: Anschlußelement
- 84: Verbindungsleitung
- 85: Fortsatz

- 86: Vorsprung
- 87: Mittensteg
- 88: Stärke
- 89: Schwenkaufnahme
- 90: Schwenkachse

- 91: Längsmittelachse
- 92: Schenkel
- 93: Lagerungselement
- 94: Schenkel
- 95: Mittensteg

- 96: Vertiefung
- 97: Drehachse
- 98: Lagerelement
- 99: Wälzlager
- 100: Rückstellelement

- 101: Pfeil
- 102: Bolzenelement
- 103: Anschlag- bzw. Spielausgleichsvorrichtung
- 104: Weite
- 105: Führungsvorrichtung

- 106: Führungsorgan
- 107: Anschlagfläche
- 108: Vertiefung
- 109: Führungsfläche
- 110: Führungsfläche

- 111: Begrenzungselement
- 112: Schenkel
- 113: Schenkel
- 114: Seitenfläche
- 115: Schräge

- 116: Führungsbuchse
- 117: Bohrung
- 118: Verteilerleiste
- 119: Gewindebohrung
- 120: Grundkörper

- 121: Vorsprung
- 122: Aussparung
- 123: Stellelement
- 124: Keil- und Stellfläche
- 125: Befestigungsflansch

- 126: Gewindestift
- 127: Längsschlitz
- 128: Befestigungs- und/oder Zentrierelement
- 129: Fortsatz
- 130: Grundplatte

- 131: Lagervorrichtung
- 132: Antriebsanordnung
- 133: Antriebsmittel
- 134: Verstelleinrichtung
- 135: Tragkörper

- 136: Stellantrieb
- 137: Befestigungselement
- 138: Achse
- 139: Teil
- 140: Stellhebel

- 141: Schwenkachse
- 142: Kulissenbahn
- 143: Lagerelement
- 144: Breite
- 145: Längsseitenfläche

- 146: Länge
- 147: Querseitenfläche
- 148: Unterseite
- 149: Antriebsmittel
- 150: Seitenfläche

- 151: Abstreif- und/oder Schmierelement
- 152: Abstand
- 153: Oberseite
- 154: Kupplungselement (Antriebsorgan)
- 155: Kupplungselement

- 156: Aufnahmefläche
- 157: Kupplungsteile
- 158: Vorsprung
- 159: Tragkörper
- 160: Übergabebereich

- 161: Rahmenteil
- 162: Mitnahmeorgan (Zahnriemen-Lücke)
- 163: Eingriffsmittel (Zahnriemen-Zahn)
- 164: Mitnahmeorgan (WT-Lücke)
- 165: Eingriffsmittel (WT-Zahn)

- 166: Steuereinheit
- 167: Abstand
- 168: Rückstelleinrichtung
- 169: Rückstellelement
- 170: Gleitfläche

- 171: Gleitplatte
- 172: Sensor
- 173: Eintrittsbereich
- 174: Teilung (WT)
- 175: Teilung (Riemen)

- 176: Aufnahmebereich
- 177: Stirnfläche
- 178: Teilungsabstand
- 179: Teilungsabstand
- 180: Pfeil

- 181: Flankenwinkel
- 182: Oberflächenprofil
- 183: Welligkeit
- 184: Profilspitze
- 185: Profiltal

- 186: Höhe
- 187: Tiefe
- 188: Grundprofil
- 189: Bezugsprofil
- 190: (mittleres) Profil

- 191: Profiloberfläche
- 192: Öffnungsweite

## Patentansprüche

1. Fertigungsanlage für die Montage und/oder Bearbeitung von auf Werkstückträgern transportierten Bauteilen mit mehreren hintereinander angeordneten Förderabschnitten, von welchen jedem zumindest eine eigene, von den benachbarten Förderabschnitten unabhängige Vorschubvorrichtung und eine zumindest zwei einander gegenüberliegend angeordnete Führungsbahnen aufweisende Führungsvorrichtung zugeordnet ist, entlang welcher der zwischen diesen angeordnete, mit Führungsorganen zur Höhen- und Seitenführung versehene Werkstückträger positioniert verfahrbar ausgebildet ist, **dadurch gekennzeichnet, dass** die Führungsorgane (106) der Werkstückträger (2) mit einer nutförmigen Vertiefung (108) zum Eingriff in die quer zur Förderrichtung (16) voneinander distanzierten Führungsbahnen (20) versehen sind und in zumindest einem der Förderabschnitte (6a; 6c) bzw. in einer Knotenstation (8) zumindest eine Führungsbahn (20) aus einer sich außerhalb eines Lichtraumprofiles des Werkstückträgers (2) befindlichen Ruhestellung in eine sich oberhalb einer Transportebene (19) befindliche Position mittels einer Verstelleinrichtung (31) anhebbar und zum Eingriff mit den Vertiefungen (108) der Führungsorgane (106) quer zu einer Längsrichtung der Führungsbahn (20) in eine Eingriffsstellung verstellbar ausgebildet ist.

2. Fertigungsanlage nach Anspruch 1, **dadurch gekennzeichnet, dass** der in dem Förderabschnitt (5; 6a; 6b; 6c) selbstzentrierend verfahrbare Werkstückträger (2) zwischen und entlang den Führungsbahnen (20) zwangsgeführt oder formschlüssig gehalten ist.

3. Fertigungsanlage nach Anspruch 1 oder 2, **dadurch gekennzeichnet, dass** in den Förder abschnitten (6a; 6c) die Führungsbahnen (20) in die zwischen kongruenten Führungsflächen (109) der Führungsorgane (106) gebildete nutförmige Vertiefung (108) zum Eingriff mit dieser verstellbar ausgebildet sind.

4. Fertigungsanlage nach einem oder mehreren der vorhergehenden Ansprüche, **dadurch gekennzeichnet, dass** die sich in der Eingriffsstellung befindlichen Führungsbahnen (20) über eine bedarfsweise lösbare Betätigungs- und/oder Arretiervorrichtung (42) gegen eine Rückstellung in die Ruhestellung gesichert sind.

5. Fertigungsanlage nach einem oder mehreren der vorhergehenden Ansprüche, **dadurch gekennzeichnet, dass** die Führungsorgane (106) des vorzugsweise quadratisch ausgebildeten Werkstückträgers (2) auf einer der Transportebene (19) zugewandten Unterseite (148) angeordnet sind.

6. Fertigungsanlage nach einem oder mehreren der vorhergehenden Ansprüche, **dadurch gekennzeichnet, dass** die Führungsorgane (106) in an der zugewandten Unterseite (148) vorgesehene kreiszylindrische Vertiefungen angeordnet sind.

7. Fertigungsanlage nach einem oder mehreren der vorhergehenden Ansprüche, **dadurch gekennzeichnet, dass** dem Werkstückträger (2) zum unverwechselbaren identifizieren desselben mehrere Datenträger, die einen eigenen und/oder externen, mit diesem bedarfsweise kommunizierenden Speicher zum Lesen und/oder Schreiben von Daten zugeordnet sind.

8. Fertigungsanlage nach einem oder mehreren der vorhergehenden Ansprüche, **dadurch gekennzeichnet, dass** die Führungsorgane (106) des Werkstückträgers (2) an jedem seiner Seitenbereiche und distanziert zueinander angeordnet sind.

9. Fertigungsanlage nach einem oder mehreren der vorhergehenden Ansprüche, **dadurch gekennzeichnet, dass** die Führungsorgane (106) bzw. die diese bildenden Führungsrollen um senkrecht zur Transportebene (19) verlaufende Achsen rotieren.

10. Fertigungsanlage nach einem oder mehreren der vorhergehenden Ansprüche, **dadurch gekennzeichnet, dass** die Führungsorgane (106) das Lichtraumprofil des Werkstückträgers (2) im Bereich von über einen Teil seiner Stärke schräg verlaufende Seitenflächen (150) zumindest geringfügig überragen.

11. Fertigungsanlage nach einem oder mehreren der vorhergehenden Ansprüche, **dadurch gekennzeichnet, dass** das Führungsorgan (106) mit winkelig zueinander ausgebildeten komplementären, sich in Richtung der Achse verjüngenden Führungsflächen (109) versehen ist.

12. Fertigungsanlage nach einem oder mehreren der vorhergehenden Ansprüche, **dadurch gekennzeichnet, dass** die in die nutförmigen Vertiefungen (108) der Führungsorgane (106) in Eingriff bringbaren Führungsbahnen (20) zumindest bereichsweise zu den Vertiefungen (108) gegengleiche Führungsflächen (110) aufweisen.

13. Fertigungsanlage nach einem oder mehreren der vorhergehenden Ansprüche, **dadurch gekennzeichnet, dass** Kanten der voneinander distanzierten Führungsbahnen (20) in den Förderabschnitten (6a, 6c) ein Quadrat bilden.

14. Fertigungsanlage nach einem oder mehreren der vorhergehenden Ansprüche, **dadurch gekennzeichnet, dass** eine Länge der Führungsbahnen (20) in den Förderabschnitten (6a, 6c) gleich oder geringfügig größer bemessen ist als ein Abstand zwischen den Achsen der in Eckbereichen des Werkstückträgers (2) angeordneten Führungsorgane (106).

15. Fertigungsanlage nach einem oder mehreren der vorhergehenden Ansprüche, **dadurch gekennzeichnet, dass** der Werkstückträger (2) mit den Führungsorganen (106) an den Führungsbahnen (20) abgestützt ist und dass in zur Transportebene (19) senkrechter Richtung zumindest ein geringfügiger Abstand (152) zwischen dem Werkstückträger (2) und der Transportebene (19) ausgebildet ist.

16. Fertigungsanlage nach einem oder mehreren der vorhergehenden Ansprüche, **dadurch gekennzeichnet, dass** über eine fembedienbare Höhenbegrenzungvorrichtung (63) der Abstand (152) zwischen dem Werkstückträger (2) und der Transportebene (19) verstellbar ausgebildet ist.

17. Fertigungsanlage nach einem oder mehreren der vorhergehenden Ansprüche, **dadurch gekennzeichnet, dass** die den Führungsbahnen (20) zugeordneten Führungsorgane (106) durch Führungsleisten (21) gebildet sind.

18. Fertigungsanlage nach einem oder mehreren der vorhergehenden Ansprüche, **dadurch gekennzeichnet, dass** die Führungsbahnen (20) durch mit einem Stellhebel (69) einer Höhenverstellvorrichtung (43) der Verstelleinrichtung (31) verbundene und in Längsrichtung voneinander zumindest geringfügig beabstandete Führungsrollen gebildet sind.

19. Fertigungsanlage nach einem oder mehreren der vorhergehenden Ansprüche, **dadurch gekennzeichnet, dass** jedes der Führungsorgane (106) mit gleichen Abmessungen ausgebildet ist.

20. Fertigungsanlage nach einem oder mehreren der vorhergehenden Ansprüche, **dadurch gekennzeichnet, dass** der Werkstückträger (2) an der Unterseite (148) mit einstückig angeformten Antriebsmittel (149) ausgestattet ist und die Antriebsmittel (149) durch Verzahnungselemente gebildet sind.

21. Fertigungsanlage nach einem oder mehreren der vorhergehenden Ansprüche, **dadurch gekennzeichnet, dass** eine der Vorschubvorrichtungen (15; 51) bzw. eines der diese umfassenden Antriebsorgane (17; 47) mit einem der Antriebsmittel (149) antriebsverbunden ist.

22. Fertigungsanlage nach einem oder mehreren der vorhergehenden Ansprüche, **dadurch gekennzeichnet, dass** mehrere höhenverstellbare Vorschubvorrichtungen (15; 51) eines Förderabschnittes (6a; 6c) über eine Antriebsanordnung (45) unter Zwischenschaltung einer Getriebeanordnung (46), insbesondere eines Kegelradgetriebes, mit gleicher Umfangsgeschwindigkeit angetrieben sind und die Werkstückträger (2) wechselweise mit einer der Vorschubvorrichtungen (15; 51) der Förderabschnitte (6a; 6c) antriebsverbunden ist.

23. Fertigungsanlage nach einem oder mehreren der vorhergehenden Ansprüche, **dadurch gekennzeichnet, dass** der Werkstückträger (2) an jedem seiner Eckbereiche Abstreif-und/oder Schmierelemente (151) aufweist.

24. Fertigungsanlage nach einem oder mehreren der vorhergehenden Ansprüche, **dadurch gekennzeichnet, dass** das Abstreif- und/oder Schmierelement (151) durch einen ölgetränkten Kunststoff gebildet ist.

25. Fertigungsanlage nach einem oder mehreren der vorhergehenden Ansprüche, **dadurch gekennzeichnet, dass** der in die Knotenstation (8) einfahrende Werkstückträger (2) über einen Drehtisch (29) und/oder den paarweise verstellbaren Führungsbahnen (20) in eine von mehreren Transportstationen (7) in einer die Förderrichtung querenden oder gleichen Richtung positioniert verfahrbar ist.

26. Fertigungsanlage nach einem oder mehreren der vorhergehenden Ansprüche, **dadurch gekennzeichnet, dass** zumindest eine Verstelleinrichtung (31), insbesondere Höhenverstelleinrichtung (43), wenigstens einer Führungsbahn (20) zugeordnet ist und jeweils zwei in zur Transportrichtung (16) paralleler Richtung angeordnete Führungsbahnen (20) gleichzeitig verstellbar ausgebildet sind.

27. Fertigungsanlage nach einem oder mehreren der vorhergehenden Ansprüche, **dadurch gekennzeichnet, dass** die durch Führungsleisten (21) gebildeten Führungsbahnen (20) über Verbindungselemente, insbesondere eine Schraubenverbindung, und zueinander positionierende Elemente auswechselbar bzw. lösbar mit dem Stellhebel (69; 140) der Verstelleinrichtung (31; 134) verbunden sind.

28. Fertigungsanlage nach einem oder mehreren der vorhergehenden Ansprüche, **dadurch gekennzeichnet, dass** ein mit über einen Stellantrieb (136) betätigbarer Stellhebel (140) einer Verstelleinrichtung (134) mit zumindest einer Kulissenbahn (142) versehen ist und die Kulissenbahn (142) an wenigstens einem Lagerelement (143) abgestützt ist.

29. Fertigungsanlage nach einem oder mehreren der vorhergehenden Ansprüche, **dadurch gekennzeichnet, dass** ein erster Teilbereich der Kulissenbahn (142) geneigt zu der Transportebene (19) und ein weiterer, an diesen anschließender Teilbereich senkrecht zur Transportebene (19) verlaufend ausgebildet ist.

30. Fertigungsanlage nach einem oder mehreren der vorhergehenden Ansprüche, **dadurch gekennzeichnet, dass** der die Führungsbahn (20) aufnehmende Stellhebel (140) zum Eingriff mit den Vertiefungen (108) der Führungsorgane (106) entgegen der Wirkung von elastischen Rückstellelementen, insbesondere Federelementen, aus der Ruhestellung in eine Eingriffsstellung in einer zur Neigung des Teilbereiches der Kulissenbahn (142) paralleler Richtung verstell- bzw. verschiebbar ausgebildet ist.

31. Fertigungsanlage nach einem oder mehreren der vorhergehenden Ansprüche, **dadurch gekennzeichnet, dass** der Stellantrieb (136) um eine quer zur Längsachse desselben verlaufenden Achse (138) verschwenkbar gelagert ist.

32. Fertigungsanlage nach einem oder mehreren der vorhergehenden Ansprüche, **dadurch gekennzeichnet, dass** ein Traggestell (32) mit einem Grundrahmen (24) eines Maschinengestelles (9) lösbar befestigt ist.

33. Fertigungsanlage nach einem oder mehreren der vorhergehenden Ansprüche, **dadurch gekennzeichnet, dass** der Grundrahmen (24) des Förderabschnittes (6a; 6b; 6c) bzw. ein diesen bildender unterer Rahmenteil (25) und oberer Rahmenteil (26) eine gleiche Länge (27) und Breite (28) aufweisen und auf dem oberer Rahmenteil (26) die quadratische Tischplatte (18) aufgesetzt, ist in der eine kreisrunde Ausnehmung (30) für den Drehtisch (29) ausgebildet ist.

34. Fertigungsanlage nach einem oder mehreren der vorhergehenden Ansprüche, **dadurch gekennzeichnet, dass** das Traggestell (32) über eine an einer dem Drehtisch (29) abgewandten Seite angeordnete Lagervorrichtung (131) gegenüber dem Grundrahmen (24) verdrehbeweglich gelagert und ein parallel zur Transportebene (19) angeordnetes Antriebsmittel (133), insbesondere Stirnrad, und mit einer Antriebsanordnung (132) antriebsverbunden ist.

35. Fertigungsanlage nach einem oder mehreren der vorhergehenden Ansprüche, **dadurch gekennzeichnet, dass** die Antriebsanordnungen (45, 132) mit dem feststehenden Grundrahmen (24), insbesondere dem unteren Rahmenteil (25), lösbar verbunden sind.

36. Fertigungsanlage nach einem oder mehreren der vorhergehenden Ansprüche, **dadurch gekennzeichnet, dass** die Trägerplatte (33) eine Aussparung (56) für eine mit dieser lösbar verbundenen Getriebeanordnung (46) aufweist.

37. Fertigungsanlage nach einem oder mehreren der vorhergehenden Ansprüche, **dadurch gekennzeichnet, dass** die Führungsleisten (21) jeweils über eine Verstelleinrichtung (31) in eine über die die Transportebene (19) bildende Tischplatte (18) des Grundrahmens (24) oder den Drehtisch (29) des Traggestelles (32) hinausragende Position höhenverstellbar und in eine Eingriffsstellung verschwenkbar ausgebildet sind.

38. Fertigungsanlage nach einem oder mehreren der vorhergehenden Ansprüche, **dadurch gekennzeichnet, dass** in der Ruhestellung die Führungsleisten (21) in unterhalb der Transportebene (19) liegende Ausnehmungen (54) in der Tischplatte (18) oder in den Drehtisch (29) abgesenkt sind.

39. Fertigungsanlage nach einem oder mehreren der vorhergehenden Ansprüche, **dadurch gekennzeichnet, dass** die Tischplatte (18) oder der Drehtisch (29) mit mehreren von der oder den Vorschubvorrichtungen (15; 51) und Führungsleisten (21) durchsetzten Ausnehmungen (54) versehen ist.

40. Fertigungsanlage nach einem oder mehreren der vorhergehenden Ansprüche, **dadurch gekennzeichnet, dass** die Verstelleinrichtungen (31) des Förderabschnittes (6a; 6c) auf einem Traggestell (32) angeordnet sind und die Verstelleinrichtungen (31) und das Traggestell (32) eine eigene Baueinheit (36) bilden, die über lösbare Befestigungsmittel auswechselbar mit dem Grundrahmen (24) verbunden ist.

41. Fertigungsanlage nach einem oder mehreren der vorhergehenden Ansprüche, **dadurch gekennzeichnet, dass** die Verstelleinrichtung (31) einen über einen ersten Stellantrieb (71) entlang von auf einer Trägerplatte (33) des Traggestelles (32) senkrecht ausgerichteten Führungselementen (34), insbesondere Führungsstangen (35), längsverschiebbar gelagerten prismatischen Führungsschlitten (66) aufweist, mit dem ein etwa kreuzförmiger Tragkörper (62) für die bereichsweise Aufnahme eines weiteren Stellantriebes (76) der Betätigungs- und/ oder Arretiervorrichtung (42) verbunden ist.

42. Fertigungsanlage nach einem oder mehreren der vorhergehenden Ansprüche, **dadurch gekennzeichnet, dass** die Trägerplatte (33) des Traggestelles (32) und der kreisrunde Drehtisch (29) beabstandet zueinander angeordnet sind und die Trägerplatte (33) des Traggestelles (32) und der kreiszylindrische Drehtisch (29) parallel zu der Transportebene (19) und parallel zueinander verlaufen und die Trägerplatte (33) mehreckig, insbesondere achteckig, ausgebildet ist.

43. Fertigungsanlage nach einem oder mehreren der vorhergehenden Ansprüche, **dadurch gekennzeichnet, dass** eine erste Mittelachse (37) der Trägerplatte (33) in zur Transportrichtung (16) paralleler Richtung verläuft und eine weitere Mittelachse (38) senkrecht auf die erste Mittelachse (37) ausgerichtet ist.

44. Fertigungsanlage nach einem oder mehreren der vorhergehenden Ansprüche, **dadurch gekennzeichnet, dass** parallel zu den Mittelachsen (37, 38) und parallel zueinander verlaufende Seitenbereiche (39) größer ausgebildet sind als sich zwischen den Seitenbereichen (39) erstreckende und diagonal versetzte Seitenzwischenbereiche (40).

45. Fertigungsanlage nach einem oder mehreren der vorhergehenden Ansprüche, **dadurch gekennzeichnet, dass** für jede der Verstelleinrichtungen (31) zumindest zwei in zu den Seitenbereichen (39) paralleler Richtung distanziert zueinander und distanziert zu den Seitenbereichen (39) angeordnete Führungselemente (34) vorgesehen sind.

46. Fertigungsanlage nach einem oder mehreren der vorhergehenden Ansprüche, **dadurch gekennzeichnet, dass** die Trägerplatte (33) und der Drehtisch (29) über die auf die Trägerplatte (33) senkrecht ausgerichteten leistenförmigen Stützelemente (41) miteinander verbunden sind.

47. Fertigungsanlage nach einem oder mehreren der vorhergehenden Ansprüche, **dadurch gekennzeichnet, dass** die sich zwischen der Trägerplatte (33) und dem Drehtisch (29) oder Tischplatte (18) erstreckenden Stützelemente (41) über im Randbereich der Seitenzwischenbereiche (40) vorgesehene Befestigungsmittel mit der Trägerplatte (33) lösbar befestigt sind.

48. Fertigungsanlage nach einem oder mehreren der vorhergehenden Ansprüche, **dadurch gekennzeichnet, dass** der Tragkörper (61) quer zu seinem Längsverlauf seitlich vorragende Fortsätze (85) und zwischen einem Mittensteg (87) und den Fortsätzen (85) zumindest über einen Teil seiner Stärke (88) etwa U-förmige Schwenkaufnahmen (89) und zwischen den Schwenkaufnahmen (89) im weiteren Längsverlauf einen Vorsprung (86) aufweist.

49. Fertigungsanlage nach einem oder mehreren der vorhergehenden Ansprüche, **dadurch gekennzeichnet, dass** dem kreuzförmigen Tragkörper (61) zumindest ein gabelförmiger Stellhebel (69) zugeordnet ist.

50. Fertigungsanlage nach einem oder mehreren der vorhergehenden Ansprüche, **dadurch gekennzeichnet, dass** der Stellhebel (69) entgegen der Wirkung von zumindest einem elastischen Rückstellelement (100), insbesondere einer Federanordnung, um eine quer zu diesem verlaufende Achse verschwenkbeweglich gelagert ist.

51. Fertigungsanlage nach einem oder mehreren der vorhergehenden Ansprüche, **dadurch gekennzeichnet, dass** der Stellhebel (69) im Bereich der gegenüberliegenden Schwenkaufnahmen (89) einen etwa L-förmigen Querschnitt aufweist, wovon bevorzugt kleiner bemessene Schenkel (92) von im Bereich der Schwenkaufnahmen (89) quer zum Längsverlauf des Tragkörpers (61) ausgerichteten Lagerungselementen (98) verschwenkbar gelagert aufgenommen sind.

52. Fertigungsanlage nach einem oder mehreren der vorhergehenden Ansprüche, **dadurch gekennzeichnet, dass** zwischen Befestigungsfortsätze bildende Schenkel (94) und einem Mittensteg (95) des Stellhebels (69) etwa U-förmige Vertiefungen (96) für die Aufnahme von um eine Drehachse (97) gelagerten Lagerelementen (98) angeordnet sind.

53. Fertigungsanlage nach einem oder mehreren der vorhergehenden Ansprüche, **dadurch gekennzeichnet, dass** die Lagerelemente (98) durch Wälzlager (99), insbesondere Rillenkugellager, gebildet sind.

54. Fertigungsanlage nach einem oder mehreren der vorhergehenden Ansprüche, **dadurch gekennzeichnet, dass** das oder die Rückstellelemente (100) zwischen dem Vorsprung (86) des Tragkörpers (61) und dem Mittensteg (95) des Stellhebels (69) angeordnet ist bzw. sind.

55. Fertigungsanlage nach einem oder mehreren der vorhergehenden Ansprüche, **dadurch gekennzeichnet, dass** die Verstellbewegung der Verstelleinrichtungen (31) in zur Transportebene (19) senkrechter Richtung durch eine Höhenbegrenzungsvorrichtung (63) begrenzt ist.

56. Fertigungsanlage nach einem oder mehreren der vorhergehenden Ansprüche, **dadurch gekennzeichnet, dass** ein Verstellweg quer zur Transportrichtung (16) des Stellhebels (69) durch eine Anschlag- bzw. Spielausgleichsvorrichtung (103) begrenzt bzw. verstellbar ist.

57. Fertigungsanlage nach einem oder mehreren der vorhergehenden Ansprüche, **dadurch gekennzeichnet, dass** die Anschlag- bzw. Spielausgleichsvorrichtung (103) durch eine Schrauben- und Gewindeanordnung (108) mit an derem freien Ende befestigten Anschlagelement gebildet ist.

58. Fertigungsanlage nach einem oder mehreren der vorhergehenden Ansprüche, **dadurch gekennzeichnet, dass** der erste Stellantrieb (71) durch einen sich zumindest bereichsweise auf der Trägerplatte (33) abstützenden druckmittelbeaufschlagten Zylinder, insbesondere Linearzylinder, gebildet ist und unter Zwischenschaltung einer Stützplatte (72) mit dem Führungsschlitten (66) wirkungsverbunden ist.

59. Fertigungsanlage nach einem oder mehreren der vorhergehenden Ansprüche, **dadurch gekennzeichnet, dass** der weitere Stellantrieb (76) der Betätigungsvorrichtung (42) durch einen druckmittelbeaufschlagten Zylinder, insbesondere Linearzylinder, gebildet ist, der im Bereich einer in dem Mittensteg (87) des Tragkörpers (61) vertieft angeordneten Aussparung bevorzugt lösbar befestigt ist.

60. Fertigungsanlage nach einem oder mehreren der vorhergehenden Ansprüche, **dadurch gekennzeichnet, dass** der Betätigungsvorrichtung (42), insbesondere einem Betätigungselement (77), zumindest eine mit den Stützelementen (41) lösbar befestigte Spielausgleichsvorrichtung (44) zugeordnet ist.

61. Fertigungsanlage nach einem oder mehreren der vorhergehenden Ansprüche, **dadurch gekennzeichnet, dass** die Spielausgleichsvorrichtung (44) einen etwa prismaförmigen Grundkörper (120) und in diesem angeordnete, relativ zueinander verstell- und fixierbare keilförmige Stellelemente (123) aufweist.

62. Fertigungsanlage nach einem oder mehreren der vorhergehenden Ansprüche, **dadurch gekennzeichnet, dass** die Stellantriebe (71) zur Höhenverstellung und die Stellantriebe (76) zum Verschwenken der Führungsleisten (21) aufeinanderfolgend druckbeaufschlagt sind.

63. Fertigungsanlage nach einem oder mehreren der vorhergehenden Ansprüche, **dadurch gekennzeichnet, dass** die Stellantriebe (71, 76) durch elektrische Antriebe, insbesondere Linearantriebe, gebildet sind.

64. Fertigungsanlage nach einem oder mehreren der vorhergehenden Ansprüche, **dadurch gekennzeichnet, dass** das Betätigungselement (77) der Betätigungsvorrichtung (42) etwa U-förmig und im Querschnitt L-förmig ausgebildet ist.

65. Fertigungsanlage nach einem oder mehreren der vorhergehenden Ansprüche, **dadurch gekennzeichnet, dass** das Betätigungselement (77) in zur Längsachse des Stellantriebes (76) senkrechter Richtung zumindest geringfügig verschiebbar ausgebildet ist.

66. Fertigungsanlage nach einem oder mehreren der vorhergehenden Ansprüche, **dadurch gekennzeichnet, dass** ein Schenkel (112) des Betätigungselementes (77) mit dem Stellantrieb (76) verbunden ist und der weitere aufragende Schenkel (113) an seinem freien Ende im Bereich einer dem Schwenkelement (69) zugewandten Seitenfläche (114) eine Schräge (115) aufweist.

67. Fertigungsanlage nach einem oder mehreren der vorhergehenden Ansprüche, **dadurch gekennzeichnet, dass** in der Ruhestellung die Schräge (115) mit dem Lagerelement (98) des Stellhebels (69) angriffsverbunden ist.

68. Fertigungsanlage nach einem oder mehreren der vorhergehenden Ansprüche, **dadurch gekennzeichnet, dass** in der angehobenen Eingriffsstellung das Lagerelement (98) des Stellhebels (69) mit der eine Kulissenbahn bildenden vertikalen Seitenfläche (114) angriffsverbunden ist.

69. Fertigungsanlage nach einem oder mehreren der vorhergehenden Ansprüche, **dadurch gekennzeichnet, dass** der Führungsschlitten (66) eine mit Anschlüssen versehene pneumatische oder hydraulische oder elektrische Verteilerleiste (118) ausbildet.

70. Fertigungsanlage nach einem oder mehreren der vorhergehenden Ansprüche, **dadurch gekennzeichnet, dass** die Verteilerleiste (118) elektrische Steuerleitungen und/oder druckmittelführende Leitungen und/oder Kanäle, insbesondere Strömungs- und/oder Verteilungskanäle (81; 82), aufweist.

71. Fertigungsanlage nach einem oder mehreren der vorhergehenden Ansprüche, **dadurch gekennzeichnet, dass** der Führungsschlitten (66) mit einem Speichermodul und/oder einer Signale und/oder Businformationen verarbeitenden Steuereinrichtung versehen ist.

72. Fertigungsanlage nach einem oder mehreren der vorhergehenden Ansprüche, **dadurch gekennzeichnet, dass** der Förderabschnitt (5) zum kontinuierlichen und getakteten Zu-oder Abführen des Werkstückträgers (2) zu einem der weiteren Förderabschnitte (5) als mehrere Werkstückträger (2) aufnehmende Speicher- oder Pufferstrecke (13) ausgebildet ist.

73. Verfahren zum Überführen eines Werkstückträgers von einem in einem weiteren, unmittelbar nachfolgenden Förderabschnitt, bei dem der Werkstückträger zumindest im Übergabebereich zwischen zwei in den beiden Förderabschnitten unmittelbar aufeinanderfolgenden Vorschubvorrichtungen mit Antriebsorganen der beiden Vorschubvorrichtungen in formschlüssigem Eingriff steht, **dadurch gekennzeichnet, dass** eine Vorschubgeschwindigkeit zumindest eines mit dem Antriebsmittel (149) des Werkstückträgers (2) in Bewegungsverbindung stehenden und mit zum Eingriff in das Antriebsmittel (149) des Werkstückträgers (2) vorgesehenen Antriebsorganes (47) bei einer Veränderung eines einem Mehrfachen einer Teilung (174) der Antriebsmittel (149) am Werkstückträger (2) entsprechenden Abstandes (167) zum selbsttätigen Eingriff verändert wird.

74. Verfahren nach Anspruch 73, **dadurch gekennzeichnet, dass** beim Übergang des Werkstückträgers (2) von der ersten Vorschubvorrichtung (15; 51) des ersten Förderabschnittes (5; 6a; 6b; 6c) zu der in Förderrichtung (16) nachgeordneten Vorschubvorrichtung (15; 51) des weiteren Förderabschnittes (5; 6a; 6b; 6c) Relativlagen, beispielsweise der Eingriffsmittel (163) der Antriebsorgane (47) jeder Vorschubvorrichtung (15; 51) zur Bestimmung des Abstandes (167) festgestellt und miteinander verglichen werden und bei einer Abweichung eine Drehzahl zumindest einer der Vorschubvorrichtungen (15; 51) kurzzeitig verändert wird und nach Einstellung desselben der Werkstückträger (2) in den nachkommenden Förderabschnitt (5; 6a; 6b; 6c) einfährt und die Eingriffsmittel (163) des Antriebsorganes (47) wechselweise mit Mitnahmeorganen (162) des Antriebsmittels (149) schlupffrei in Eingriff verbracht werden.

75. Verfahren nach Anspruch 73 oder 74, **dadurch gekennzeichnet, dass** nach Einstellung des Abstandes (167) die Drehzahlen von Antriebsanordnungen (47) der Vorschubvorrichtungen (15, 51) synchronisiert und die Ist-Werte der verstellten Drehzahlen und des Abstandes (167) als Soll-Werte abgespeichert werden.

76. Verfahren nach Anspruch 73 oder 75, **dadurch gekennzeichnet, dass** das Antriebsorgan (47) beim Aufeinandertreffen zweier Eingriffsmittel (163, 165) bzw. der diese bildenden Zähne des Antriebsorganes (47) und des Antriebsmittels (149) entgegen der Wirkung von einer reversiblen Rückstelleinrichtung (168) verstellt wird und durch die Vorschubbewegung oder Drehzahländerung die Eingriffsmittel (163) des Antriebsorganes (47) selbsttätig in Eingriff mit den Mitnahmeorganen (164) des Antriebsmittels (149) verbracht werden.

77. Verfahren nach einem oder mehreren der Ansprüche 73 bis 76, **dadurch gekennzeichnet, dass** das Antriebsorgan (47) und das Antriebsmittel (149) gleiche Geometrien, wie beispielsweise Teilung, Zahnbreite, Zahnhöhe, Lückenweite etc., aufweisen.

78. Verfahren nach einem oder mehreren der Ansprüche 73 bis 77, **dadurch gekennzeichnet, dass** die Antriebsanordnung (45) für das erste Antriebsorgan (47) drehzahlgeregelt und die Antriebsanordnung (45) für das weitere Antriebsorgan (47) momentengeregelt wird und der Werkstückträger (2) beim Übergang von der ersten Vorschubvorrichtung (15; 51) zur weiteren Vorschubvorrichtung (15; 51) mit der ersten Flanke des Zahnes des Antriebsmittels (149) die Flanke des Zahnes des Antriebsorganes (47) tangiert und die Antriebsanordnung (45) bei einer Abweichung des Abstandes (167) mit einem einen Soll-Wert eines Antriebsmomentes übersteigenden Lastmoment beaufschlagt wird, worauf die Drehzahl verändert und nach Erreichen des Soll-Wertes des Antriebsmomentes die eingestellte Drehzahl und/oder ein sich ergebender Abstand (167) als neuer Sollwert abgespeichert wird.

79. Vorschubvorrichtung für einen entlang von zumindest zwei einander gegenüberliegend angeordneten Führungsbahnen positioniert verfahrbaren und der Höhe und Seite nach geführten Werkstückträger, die zumindest ein endlos umlaufendes Antriebsorgan aufweist und zur bedarfsweisen Fortbewegung des Werkstückträgers das Antriebsorgan mit zumindest einem am Werkstückträger angeordneten Antriebsmittel antriebsverbunden ist, insbesondere für eine Fertigungsanlage nach einem oder mehreren der Ansprüche 1 bis 72, **dadurch gekennzeichnet, dass** das Antriebsmittel (149) und Antriebsorgan (47) ein Kupplungselement (154, 155) mit in Eingriff bringbaren elastisch nachgiebig reversiblen Kupplungsteilen (157) ausbilden und über das verstellbare Antriebsorgan (47) oder Antriebsmittel (149) das Antriebsorgan (47) und Antriebsmittel (149) in jeder ihrer Relativlagen zur positionierten Fortbewegung des Werkstückträgers (2) zumindest bereichsweise miteinander einkuppelbar ausgebildet sind.

80. Vorschubvorrichtung nach Anspruch 79, **dadurch gekennzeichnet, dass** das streifenförmige Antriebsmittel (149) und/oder bandartige Antriebsorgan (47) durch das Kupplungselement (154, 155) gebildet ist bzw. sind.

81. Vorschubvorrichtung nach Anspruch 79 oder 80, **dadurch gekennzeichnet, dass** das Kupplungselement (154, 155) mit dem Werkstückträger (2) form- und/oder kraftschlüssig verbunden ist.

82. Vorschubvorrichtung nach einem oder mehreren der Ansprüche 79 bis 81, **dadurch gekennzeichnet, dass** das Antriebsorgan (47) mehrschichtig aufgebaut ist und eine der miteinander form- und/oder kraftschlüssig verbundenen Schichten durch das Kupplungselement (154) gebildet ist.

83. Vorschubvorrichtung nach einem oder mehreren der Ansprüche 79 bis 82, **dadurch gekennzeichnet, dass** die Kupplungsteile (157) mit über eine Oberfläche derselben oder über einen flächigen Tragkörper (159) verteilt angeordnete und diese überragende, geringfügig elastisch nachgiebige Vorsprünge (158) versehen sind.

84. Vorschubvorrichtung nach einem oder mehreren der Ansprüche 79 bis 83, **dadurch gekennzeichnet, dass** in einer Eingriffsstellung die gegenüberliegenden Kupplungselemente (154,155) des Antriebsorganes (47) und Werkstückträgers (2) zur Vorschubbewegung des Werkstückträgers (2) im wesentlichen form- und/oder kraftschlüssig ineinandergreifen.

85. Vorschubvorrichtung nach einem oder mehreren der Ansprüche 79 bis 84, **dadurch gekennzeichnet, dass** die Vorschubvorrichtung (15; 51), insbesondere das Antriebsorgan (47), zum Einkuppeln oder Auskuppeln der einrastbaren Kupplungselemente (154, 155) zumindest schräg zur Aufnahmefläche (156), insbesondere senkrecht zur Aufnahmefläche (156), relativ verstellbar ausgebildet ist und der Verstellweg durch eine minimale Höhe der Kupplungsteile (157) des Kupplungselementes (155) am Werkstückträger (2) begrenzt ist.

86. Vorschubvorrichtung nach einem oder mehreren der Ansprüche 79 bis 85, **dadurch gekennzeichnet, dass** das Antriebsorgan (47) und/oder der Werkstückträger (2) durch Kunststoff gebildet sind und die Kupplungselemente (154, 155) aufextrudiert sind.

87. Vorschubvorrichtung nach einem oder mehreren der Ansprüche 79 bis 86, **dadurch gekennzeichnet, dass** das Kupplungselement (154, 155) einstückig und materialeinheitlich ausgebildet ist.

88. Vorschubvorrichtung nach einem oder mehreren der Ansprüche 79 bis 87, **dadurch gekennzeichnet, dass** das Kupplungselement (154, 155) durch mehrere unterschiedliche Eigenschaften, insbesondere Festigkeits- und/oder Zähigkeitseigenschaften, Elastizitätsmodul, aufweisende Materialien gebildet ist.

89. Vorschubvorrichtung nach einem oder mehreren der Ansprüche 79 bis 88, dass das Kupplungselement (154, 155) einen Kupplungsteil (157) aufweist, der durch ein Oberflächenprofil (182) mit regelmäßig oder unregelmäßig über eine Aufnahmefläche (156) oder Tragkörperoberfläche verteilt angeordneten Profilspitzen (184) und Profiltälern (185) gebildet ist.

90. Vorschubvorrichtung nach Anspruch 89, **dadurch gekennzeichnet, dass** eine an einem zur Aufnahmefläche (156) parallel verlaufenden, aus den Profilspitzen (184) und Profiltäler (185) gebildeten mittleren Profil (190) bemessene Öffnungsweite (192) der Profiltäler (185) unterschiedlich ausgebildet ist.

91. Vorschubvorrichtung nach Anspruch 89 oder 90, **dadurch gekennzeichnet, dass** die Kupplungsteile (157) bzw. die diese bildenden Profilspitzen (184) und/oder Profiltäler (185) in mehrere, bevorzugt in drei Raumrichtungen elastisch verformbar reversibel ausgebildet sind.

92. Vorschubvorrichtung nach Anspruch 91, **dadurch gekennzeichnet, dass** der Werkstückträger (2) und das Antriebsorgan (47) durch das unmittelbare Aufeinandertreffen bzw. Aneinanderstoßen zumindest zweier Profilspitzen (184) der Kupplungselemente (154, 155) eine Einformung in der Profiloberfläche (191) zumindest eines Kupplungselementes (154; 155) bewirkt und dass die Kupplungselemente (154, 155) form- und kraftschlüssig miteinander antriebsverbunden sind.

93. Vorschubvorrichtung nach einem oder mehreren der Ansprüche 79 bis 92, **dadurch gekennzeichnet, dass** das Kupplungselement (154, 155) ein- oder mehrteilig bzw. ein-oder mehrschichtig ausgebildet ist.

94. Vorschubvorrichtung nach einem oder mehreren der Ansprüche 79 bis 93, **dadurch gekennzeichnet, dass** eines der Kupplungselemente (154, 155) eine zu dem weiteren Kupplungselement (141, 143) unterschiedliche Eigenschaft, beispielsweise in bezug auf Festigkeit, Zähigkeit, Elastizitätsmodul etc., aufweist.

95. Vorschubvorrichtung nach einem oder mehreren der Ansprüche 89 bis 94, **dadurch gekennzeichnet, dass** das Kupplungselement (154; 155) im Bereich der Profiloberfläche (191) eine zu dem restlichen Kupplungsteil (157) unterschiedliche Eigenschaft, beispielsweise in bezug auf Festigkeit, Zähigkeit, Elastizitätsmodul etc., aufweist.

96. Vorschubvorrichtung nach einem oder mehreren der Ansprüche 89 bis 95, **dadurch gekennzeichnet, dass** das Kupplungselement (154; 155) im Bereich der Profiloberfläche (191) mit einer elastisch verformbar reversiblen Schichte und/oder mit zumindest einem diese überragenden Vorsprung (158) versehen ist.

97. Vorschubvorrichtung nach einem oder mehreren der Ansprüche 89 bis 96, **dadurch gekennzeichnet, dass** eine Anzahl der Kupplungsteile (157) und/oder Teilungsabstände (178, 179) zwischen zwei zueinander benachbarten Kupplungsteilen (157) von den miteinander in Eingriff bringbaren Kupplungselementen (154, 155) unterschiedlich ausgebildet ist und/oder sind.

98. Vorschubvorrichtung nach einem oder mehreren der Ansprüche 89 bis 97, **dadurch gekennzeichnet, dass** die miteinander in Eingriff bringbaren Kupplungselemente (154, 155) mit zumindest einem zwischen zwei zueinander benachbarten Kupplungsteilen (157) angeordneten Aufnahmebereich (176) zur Aufnahme mehrerer in diesen vorragender Kupplungsteile (157) ausgebildet ist.

99. Vorschubvorrichtung nach einem oder mehreren der Ansprüche 89 bis 98, **dadurch gekennzeichnet, dass** Teilbereiche bzw. ein Anteil der Kupplungsteile (157) der sich miteinander in Eingriff befindlichen Kupplungselemente (154, 155) formschlüssig und/oder der weitere Anteil der Kupplungsteile (157) kraftschlüssig miteinander eingekuppelt sind.

100. Vorschubvorrichtung nach einem oder mehreren der Ansprüche 89 bis 99, **dadurch gekennzeichnet, dass** der vorschubkraftübertragende Anteil der miteinander formschlüssig in Eingriff bringbaren Kupplungsteile (157) zwischen 30 % und 100 %, insbesondere zwischen 50 % und 90 %, beträgt.

101. Vorschubvorrichtung nach einem oder mehreren der Ansprüche 89 bis 100, **dadurch gekennzeichnet, dass** der vorschubkraftübertragende Anteil der miteinander kraftschlüssig in Eingriff bringbaren Kupplungsteile (157) zwischen 70 % und 0 %, insbesondere zwischen 50 % und 10 %, beträgt.

102. Vorschubvorrichtung nach einem oder mehreren der Ansprüche 89 bis 101, **dadurch gekennzeichnet, dass** ein zwischen zwei zueinander benachbarten Kupplungsteilen (157) bemessener Teilungsabstand (178, 179) der miteinander in Eingriff bringbaren Kupplungselemente (154, 155) ident ausgebildet ist.

103. Vorschubvorrichtung nach einem oder mehreren der Ansprüche 89 bis 102, **dadurch gekennzeichnet, dass** der Kupplungsteil (157) wenigstens einen, insbesondere mehrere über seine Profiloberfläche (191) verteilt angeordnete und diese überragende, geringfügig elastisch nachgiebige Vorsprünge (158) oder dass dieser eine geringfügig elastisch nachgiebige Schichte aufweist.
